# EUROPEAN PATENT APPLICATION

(11) **EP 3 939 434 A1**
(43) Date of publication of application: **19.01.2022**
(21) Application number: 20769667.5
(22) Date of filing: 12.03.2020
(51) Int. Cl.: A23F 5/24, A23L 27/00, A23L 27/20

(54) **MOUTH-COATING FEEL ENHANCER**

(30) Priority: 13.03.2019 JP 2019046558
(71) Applicant: AJINOMOTO CO., INC., Chuo-ku Tokyo 104-8315 (JP)
(72) Inventor: SAKAMOTO, Kazuhiro, Kawasaki-shi, Kanagawa 210-8681 (JP); KURODA, Motonaka, Kawasaki-shi, Kanagawa 210-8681 (JP); SATO, Seiichi, Kawasaki-shi, Kanagawa 210-8681 (JP); SUZUKI, Mami, Tokyo 151-8551 (JP); TOHO, Yuki, Kawasaki-shi, Kanagawa 210-8681 (JP)
(74) Representative: Strehl Schübel-Hopf & Partner
(86) International application number: PCT/JP2020/010941
(87) International publication number: WO 2020/184682

(57) **Abstract**

The present invention aims to provide an effective mouth-coating feel enhancer, a coffee-roasting sensation enhancer and the like.

The present invention relates to a mouth-coating feel enhancer and the like, containing a heated substance of the following (A) and/or a heated substance of the following (B), or at least one compound selected from compound group (C) described in the present specification:
(A) (A1) a compound represented by the formula (I): 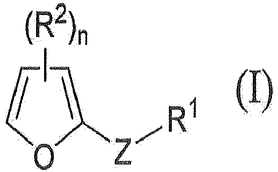 wherein each symbol is as defined in the present specification, and
(A2) at least one selected from the group consisting of an aliphatic aldehyde having 3 - 14 carbon atoms, an aromatic aldehyde having 7 - 12 carbon atoms, an aliphatic alcohol having 3 - 12 carbon atoms, and a substance that produces at least one of these compounds by heating
(B) at least one compound selected from the group consisting of β-caryophyllene and a β-caryophyllene analogous compound.

## Description

### [Technical Field]

The present invention relates to a mouth-coating feel enhancer and a production method thereof. The present invention also relates to a food with an enhanced mouth-coating feel and a production method thereof, and a method for enhancing a mouth-coating feel. Furthermore, the present invention relates to a coffee-roasting sensation enhancer and a production method thereof, and a method for enhancing a coffee-roasting sensation, and the like.

### [Background Art]

The "mouth-coating feel" is the sensation that the oral cavity is covered with a thin film, the sensation that the oral cavity is covered with oil or fat, or an oil or fat-like film, a smooth sensation that is felt in the oral cavity, and an oil or fat-like rich sensation (thickness) that spreads throughout the oral cavity, each of which is noticeably felt when a oil or fat, or a solution or food containing oil or fat is contained in the oral cavity. If there is a method that can easily enhance the mouth-coating feel, for example, even a small amount of oil or fat can sufficiently provide a favorable sensation that is noticeably felt when oil, fat, or the like is contained in the oral cavity. Thus, the method is considered to afford advantages such as suppression of excessive calorie intake, expected effect in preventing metabolic diseases such as obesity, and the like.

Conventionally, as a method for enhancing the mouth-coating feel, methods utilizing hydrocolloids, low-molecular-weight compounds, polyphenols or glycosides (non-patent documents 1 - 5) and the like have been reported. However, there is a problem that the sensation enhanced by any of these methods is different in quality from the mouth-coating feel that is noticeably felt when oil, fat or the like is contained in the oral cavity.

### [Document List]

### [Non-patent documents]

non-patent document 1: Arocas et al., "Sensory properties determined by starch type in white sauces: effects of freeze/thaw and hydrocolloid addition." J Food Sci 2010, 75:S132-S140.
non-patent document 2: Flett et al., "Perceived creaminess and viscosity of aggregated particles of casein micelles and κ-carrageenan." J Food Sci 2010, 75:S255-S261.
non-patent document 3: Dawid et al., "Identification of sensory-active phytochemicals in asparagus (Asparagus officinalisL.)." J Agric Food Chem 2012, 60:11877-11888. non-patent document 4: Schwarz et al., "Identification of novel orosensory active molecules in cured vanilla beans (Vanilla planifolia)." J Agric and Food Chem 2009, 57:3729-3737. non-patent document 5: Scharbert et al., "Identification of the astringent taste compounds in black tea infusions by combining instrumental analysis and human bioresponse." J Agric and Food Chem 2004, 52:3498-3508.

### [Summary of Invention]

### [Technical Problem]

The present invention has been made in view of the aforementioned situation, and the problem to be solved thereby is provision of an effective mouth-coating feel enhancer. Provision of an effective coffee-roasting sensation enhancer is also a problem of the present invention.

### [Solution to Problem]

The present inventors have conducted intensive studies of the above-mentioned problems and found that a heated substance obtained by heating a given compound can enhance the mouth-coating feel. The present inventors have also newly found that the heated substance can enhance a coffee-roasting sensation. Furthermore, the present inventors have also found that a given compound that may be produced in the heated substance can enhance a mouth-coating feel, and a coffee-roasting sensation. The present inventors have conducted further studies based on such findings and completed the present invention.

That is, the present invention provides the following.
[1] A mouth-coating feel enhancer comprising a heated substance of the following (A) and/or a heated substance of the following (B), or at least one compound selected from the following compound group (C):
   (A) (A1) a compound represented by the formula (I): 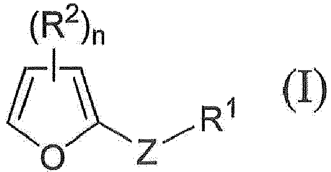 wherein
      R¹ is an acyl group having 1 - 6 carbon atoms, a hydroxy group or a pyrrole group;
      Z is a single bond or an alkylene group having 1 - 6 carbon atoms;
      R² is a substituent; and
      n is an integer of 0 - 3, and
      (A2) at least one selected from the group consisting of an aliphatic aldehyde having 3 - 14 carbon atoms, an aromatic aldehyde having 7 - 12 carbon atoms, an aliphatic alcohol having 3 - 12 carbon atoms, and a substance that produces at least one of these compounds by heating
   (B) at least one compound selected from the group consisting of β-caryophyllene and a β-caryophyllene analogous compound [compound group (C)]
      β-caryophyllene oxide
      α-pinene oxide
      limonene oxide
      α-terpineol
         a compound represented by the formula (II): 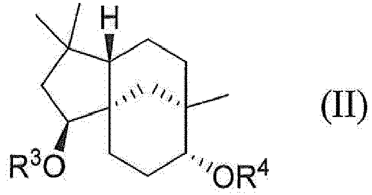 wherein R³ and R⁴ are each independently a hydrogen atom, an acyl group having 1 - 18 carbon atoms or an alkyl group having 1 - 6 carbon atoms
         a compound represented by the formula (III): 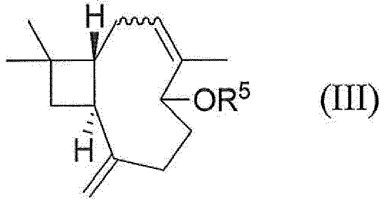 wherein R⁵ is a hydrogen atom, an acyl group having 1 - 6 carbon atoms or an alkyl group having 1 - 6 carbon atoms
         a compound represented by the formula (IV): 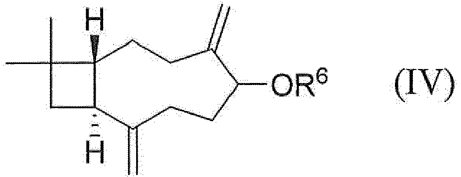 wherein R⁶ is a hydrogen atom, an acyl group having 1 - 6 carbon atoms, or an alkyl group having 1 - 6 carbon atoms
         a compound represented by the formula (V): 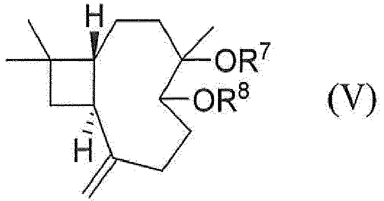
            wherein R⁷ and R⁸ are each independently a hydrogen atom, an acyl group having 1 - 6 carbon atoms, or an alkyl group having 1 - 6 carbon atoms
            (1S,6S,9R)-6,10,10-trimethyl-2-methylenebicyclo[7.2.0]undecan-5-one
            (1S,6R,9R)-6,10,10-trimethyl-2-methylenebicyclo[7.2.0]undecan-5-one
            (1R,4R,8S)-4,10,10-trimethyl-7-methylenebicyclo[6.2.0]decane-4-carboxaldehyde
            (1R,4S,8S)-4,10,10-trimethyl-7-methylenebicyclo[6.2.0]decane-4-carboxaldehyde
            (1S,2S,5R,9S)-1,4,4,8-tetramethyl-12-oxatricyclo[7.2.1.0^{2,5}]dodec-7-ene
            (1R,2S,5R,8R,9R)-1,4,4,8-tetramethyl-12-oxatricyclo[6.3.1.0^{2,5}]dodecan-9-ol
            (1R,2S,5R,8R,9S)-1,4,4,8-tetramethyl-12-oxatricyclo[6.3.1.0^{2,5}]dodecan-9-ol
            [1R-(1α,2α,5β,8β,9α)]-4,4,8-trimethyl-tricyclo[6.3.1.0^{2,5}]dodecane-1,9-diol.
[2] The mouth-coating feel enhancer of [1], wherein, in the aforementioned formula (I), R¹ is a formyl group or an acetyl group, and Z is a single bond, or
   in the aforementioned formula (I), R¹ is a hydroxy group or a pyrrole group, and Z is a methylene group.
[3] The mouth-coating feel enhancer of [1] or [2], wherein R² is an alkyl group having 1 - 6 carbon atoms.
[4] The mouth-coating feel enhancer of any one of [1] to [3], wherein n is 0 or 1.
[5] The mouth-coating feel enhancer of any one of [1] to [4], wherein the aforementioned compound represented by the formula (I) is at least one compound selected from the group consisting of furfural, 5-methylfurfural, 2-furylmethylketone, furfuryl alcohol, and 1-furfurylpyrrole.
[6] The mouth-coating feel enhancer of any one of [1] to [5], wherein the aforementioned (A2) is oil or fat.
[7] The mouth-coating feel enhancer of any one of [1] to [6], wherein the β-caryophyllene analogous compound is at least one compound selected from the group consisting of isocaryophyllene, β-pinene, sabinene, 4-allyl-2,6-dimethoxyphenol, eugenol, limonene, 4-vinylphenol, linalool, linalool oxide, p-cymene, farnesene, myrcene, ocimene, α-phellandrene, α-terpinene, γ-terpinene and terpinolene (preferably, at least one compound selected from the group consisting of β-pinene, sabinene, 4-allyl-2,6-dimethoxyphenol, eugenol, limonene, 4-vinylphenol, linalool, linalool oxide, p-cymene, farnesene, myrcene, ocimene, α-phellandrene, α-terpinene, γ-terpinene and terpinolene).
[8] The mouth-coating feel enhancer of [1], wherein the at least one compound selected from compound group (C) is at least one compound selected from the group consisting of β-caryophyllene oxide, (1R,3Z,5R,9S)-4,11,11-trimethyl-8-methylenebicyclo[7.2.0]undec-3-en-5-ol, (1R,4R,5R,9S)-4,11,11-trimethyl-8-methylenebicyclo[7.2.0]undecane-4,5-diol, α-pinene oxide, limonene oxide, α-terpineol, clovanediol, clovanediol-3-monoacetate, clovanediol diacetate and clovanediol-3-monoisovalerate.
[9] The mouth-coating feel enhancer of any one of [1] to [8], wherein the enhancer is for a food containing oil or fat.
[10] A method for enhancing a mouth-coating feel, comprising adding a heated substance of the following (A) and/or a heated substance of the following (B), or at least one compound selected from the following compound group (C):
   (A) (A1) a compound represented by the formula (I): 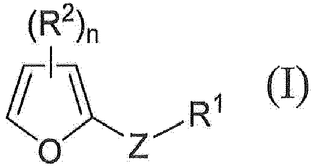 wherein
      R¹ is an acyl group having 1 - 6 carbon atoms, a hydroxy group or a pyrrole group;
      Z is a single bond or an alkylene group having 1 - 6 carbon atoms;
      R² is a substituent; and
      n is an integer of 0 - 3, and
      (A2) at least one selected from the group consisting of an aliphatic aldehyde having 3 - 14 carbon atoms, an aromatic aldehyde having 7 - 12 carbon atoms, an aliphatic alcohol having 3 - 12 carbon atoms, and a substance that produces at least one of these compounds by heating
   (B) at least one compound selected from the group consisting of β-caryophyllene and a β-caryophyllene analogous compound [compound group (C)]
      β-caryophyllene oxide
      α-pinene oxide
      limonene oxide
      α-terpineol
         a compound represented by the formula (II): 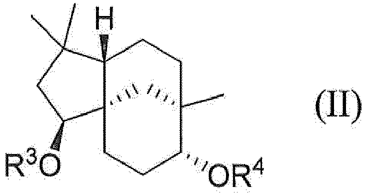 wherein R³ and R⁴ are each independently a hydrogen atom, an acyl group having 1 - 18 carbon atoms or an alkyl group having 1 - 6 carbon atoms
         a compound represented by the formula (III): 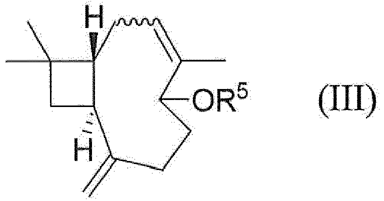 wherein R⁵ is a hydrogen atom, an acyl group having 1 - 6 carbon atoms or an alkyl group having 1 - 6 carbon atoms
         a compound represented by the formula (IV): 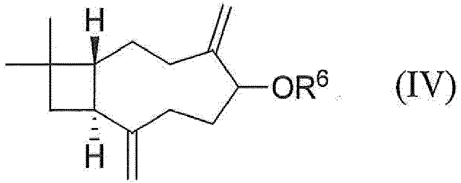 wherein R⁶ is a hydrogen atom, an acyl group having 1 - 6 carbon atoms, or an alkyl group having 1 - 6 carbon atoms
         a compound represented by the formula (V): 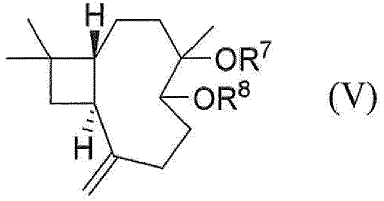
            wherein R⁷ and R⁸ are each independently a hydrogen atom, an acyl group having 1 - 6 carbon atoms, or an alkyl group having 1 - 6 carbon atoms
            (1S,6S,9R)-6,10,10-trimethyl-2-methylenebicyclo[7.2.0]undecan-5-one
            (1S,6R,9R)-6,10,10-trimethyl-2-methylenebicyclo[7.2.0]undecan-5-one
            (1R,4R,8S)-4,10,10-trimethyl-7-methylenebicyclo[6.2.0]decane-4-carboxaldehyde
            (1R,4S,8S)-4,10,10-trimethyl-7-methylenebicyclo[6.2.0]decane-4-carboxaldehyde
            (1S,2S,5R,9S)-1,4,4,8-tetramethyl-12-oxatricyclo[7.2.1.0^{2,5}]dodec-7-ene
            (1R,2S,5R,8R,9R)-1,4,4,8-tetramethyl-12-oxatricyclo[6.3.1.0^{2,5}]dodecan-9-ol
            (1R,2S,5R,8R,9S)-1,4,4,8-tetramethyl-12-oxatricyclo[6.3.1.0^{2,5}]dodecan-9-ol
            [1R-(1α,2α,5β,8β,9α)]-4,4,8-trimethyl-tricyclo[6.3.1.0^{2,5}]dodecane-1,9-diol.
[11] The method of [10], wherein, in the aforementioned formula (I), R¹ is a formyl group or an acetyl group, and Z is a single bond, or
   in the aforementioned formula (I), R¹ is a hydroxy group or a pyrrole group, and Z is a methylene group.
[12] The method of [10] or [11], wherein R² is an alkyl group having 1 - 6 carbon atoms.
[13] The method of any one of [10] to [12], wherein n is 0 or 1.
[14] The method of any one of [10] to [13], wherein the aforementioned compound represented by the formula (I) is at least one compound selected from the group consisting of furfural, 5-methylfurfural, 2-furylmethylketone, furfuryl alcohol, and 1-furfurylpyrrole.
[15] The method of any one of [10] to [14], wherein the aforementioned (A2) is oil or fat.
[16] The method of any one of [10] to [15], wherein the β-caryophyllene analogous compound is at least one compound selected from the group consisting of isocaryophyllene, β-pinene, sabinene, 4-allyl-2,6-dimethoxyphenol, eugenol, limonene, 4-vinylphenol, linalool, linalool oxide, p-cymene, farnesene, myrcene, ocimene, α-phellandrene, α-terpinene, γ-terpinene and terpinolene (preferably, at least one compound selected from the group consisting of β-pinene, sabinene, 4-allyl-2,6-dimethoxyphenol, eugenol, limonene, 4-vinylphenol, linalool, linalool oxide, p-cymene, farnesene, myrcene, ocimene, α-phellandrene, α-terpinene, γ-terpinene and terpinolene).
[17] The method of [10], wherein the at least one compound selected from compound group (C) is at least one compound selected from the group consisting of β-caryophyllene oxide, (1R,3Z,5R,9S)-4,11,11-trimethyl-8-methylenebicyclo[7.2.0]undec-3-en-5-ol, (1R,4R,5R,9S)-4,11,11-trimethyl-8-methylenebicyclo[7.2.0]undecane-4,5-diol, α-pinene oxide, limonene oxide, α-terpineol, clovanediol, clovanediol-3-monoacetate, clovanediol diacetate and clovanediol-3-monoisovalerate.
[18] The method of any one of [10] to [17], wherein the method is a method for enhancing a mouth-coating feel of a food containing oil or fat.
[19] A method for producing a food, comprising heating the following (A) and/or (B), or adding at least one compound selected from the following compound group (C) :
   (A) (A1) a compound represented by the formula (I): 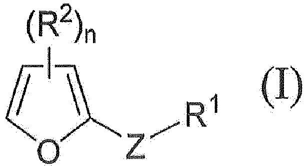 wherein
      R¹ is an acyl group having 1 - 6 carbon atoms, a hydroxy group or a pyrrole group;
      Z is a single bond or an alkylene group having 1 - 6 carbon atoms;
      R² is a substituent; and
      n is an integer of 0 - 3, and
      (A2) at least one selected from the group consisting of an aliphatic aldehyde having 3 - 14 carbon atoms, an aromatic aldehyde having 7 - 12 carbon atoms, an aliphatic alcohol having 3 - 12 carbon atoms and a substance that produces at least one of these compounds by heating
   (B) at least one compound selected from the group consisting of β-caryophyllene and a β-caryophyllene analogous compound [compound group (C)]
      β-caryophyllene oxide
      α-pinene oxide
      limonene oxide
      α-terpineol
         a compound represented by the formula (II):wherein R³ and R⁴ are each independently a hydrogen atom, an acyl group having 1 - 18 carbon atoms or an alkyl group having 1 - 6 carbon atoms
         a compound represented by the formula (III): 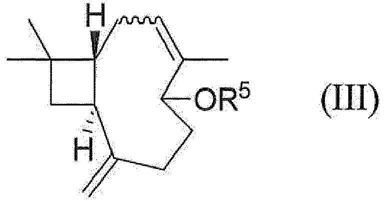 wherein R⁵ is a hydrogen atom, an acyl group having 1 - 6 carbon atoms or an alkyl group having 1 - 6 carbon atoms
         a compound represented by the formula (IV): 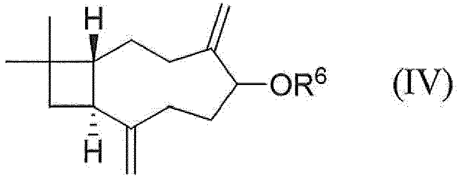 wherein R⁶ is a hydrogen atom, an acyl group having 1 - 6 carbon atoms, or an alkyl group having 1 - 6 carbon atoms
         a compound represented by the formula (V): 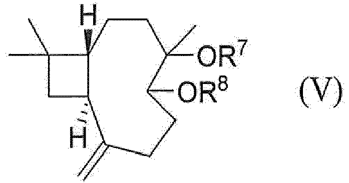
            wherein R⁷ and R⁸ are each independently a hydrogen atom, an acyl group having 1 - 6 carbon atoms, or an alkyl group having 1 - 6 carbon atoms
            (1S,6S,9R)-6,10,10-trimethyl-2-methylenebicyclo[7.2.0]undecan-5-one
            (1S,6R,9R)-6,10,10-trimethyl-2-methylenebicyclo[7.2.0]undecan-5-one
            (1R,4R,8S)-4,10,10-trimethyl-7-methylenebicyclo[6.2.0]decane-4-carboxaldehyde
            (1R,4S,8S)-4,10,10-trimethyl-7-methylenebicyclo[6.2.0]decane-4-carboxaldehyde
            (1S,2S,5R,9S)-1,4,4,8-tetramethyl-12-oxatricyclo[7.2.1.0^{2,5}]dodec-7-ene
            (1R,2S,5R,8R,9R)-1,4,4,8-tetramethyl-12-oxatricyclo[6.3.1.0^{2,5}]dodecan-9-ol
            (1R,2S,5R,8R,9S)-1,4,4,8-tetramethyl-12-oxatricyclo[6.3.1.0^{2,5}]dodecan-9-ol
            [1R-(1α,2α,5β,8β,9α)]-4,4,8-trimethyl-tricyclo[6.3.1.0^{2,5}]dodecane-1,9-diol.
[20] The method of [19], wherein, in the aforementioned formula (I), R¹ is a formyl group or an acetyl group, and Z is a single bond, or
   in the aforementioned formula (I), R¹ is a hydroxy group or a pyrrole group, and Z is a methylene group.
[21] The method of [19] or [20], wherein R² is an alkyl group having 1 - 6 carbon atoms.
[22] The method of any one of [19] to [21], wherein n is 0 or 1.
[23] The method of any one of [19] to [22], wherein the aforementioned compound represented by the formula (I) is at least one compound selected from the group consisting of furfural, 5-methylfurfural, 2-furylmethylketone, furfuryl alcohol, and 1-furfurylpyrrole.
[24] The method of any one of [19] to [23], wherein the aforementioned (A2) is oil or fat.
[25] The method of any one of [19] to [24], wherein the β-caryophyllene analogous compound is at least one compound selected from the group consisting of isocaryophyllene, β-pinene, sabinene, 4-allyl-2,6-dimethoxyphenol, eugenol, limonene, 4-vinylphenol, linalool, linalool oxide, p-cymene, farnesene, myrcene, ocimene, α-phellandrene, α-terpinene, γ-terpinene and terpinolene (preferably, at least one compound selected from the group consisting of β-pinene, sabinene, 4-allyl-2,6-dimethoxyphenol, eugenol, limonene, 4-vinylphenol, linalool, linalool oxide, p-cymene, farnesene, myrcene, ocimene, α-phellandrene, α-terpinene, γ-terpinene and terpinolene).
[26] The method of any one of [19] to [25], wherein a heating temperature of the aforementioned component (A) is 40 - 200°C, and a heating time thereof is 0.1 - 500 min, and
   a heating temperature of the aforementioned component (B) is 40 - 200°C, and a heating time thereof is 0.1 - 500 min.
[27] The method of [19], wherein the at least one compound selected from compound group (C) is at least one compound selected from the group consisting of β-caryophyllene oxide, (1R,3Z,5R,9S)-4,11,11-trimethyl-8-methylenebicyclo[7.2.0]undec-3-en-5-ol, (1R,4R,5R,9S)-4,11,11-trimethyl-8-methylenebicyclo[7.2.0]undecane-4,5-diol, α-pinene oxide, limonene oxide, α-terpineol, clovanediol, clovanediol-3-monoacetate, clovanediol diacetate and clovanediol-3-monoisovalerate.
[28] The method of any one of [19] to [27], wherein the food is a food with an enhanced mouth-coating feel.
[29] The method of any one of [19] to [28], wherein the food is a food containing oil or fat.
[30] A food comprising a heated substance of the following (A) and/or a heated substance of the following (B), or at least one compound selected from the following compound group (C):
   (A) (A1) a compound represented by the formula (I): 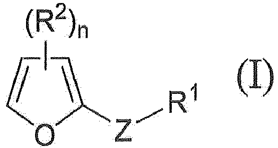 wherein
      R¹ is an acyl group having 1 - 6 carbon atoms, a hydroxy group or a pyrrole group;
      Z is a single bond or an alkylene group having 1 - 6 carbon atoms;
      R² is a substituent; and
      n is an integer of 0 - 3, and
      (A2) at least one selected from the group consisting of an aliphatic aldehyde having 3 - 14 carbon atoms, an aromatic aldehyde having 7 - 12 carbon atoms, an aliphatic alcohol having 3 - 12 carbon atoms, and a substance that produces at least one of these compounds by heating
   (B) at least one compound selected from the group consisting of β-caryophyllene and a β-caryophyllene analogous compound [compound group (C)]
      β-caryophyllene oxide
      α-pinene oxide
      limonene oxide
      α-terpineol
         a compound represented by the formula (II): 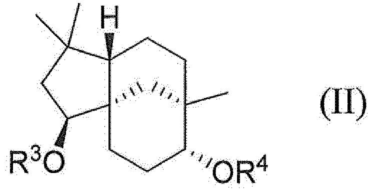 wherein R³ and R⁴ are each independently a hydrogen atom, an acyl group having 1 - 18 carbon atoms or an alkyl group having 1 - 6 carbon atoms
         a compound represented by the formula (III): 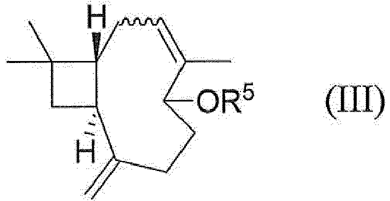 wherein R⁵ is a hydrogen atom, an acyl group having 1 - 6 carbon atoms or an alkyl group having 1 - 6 carbon atoms
         a compound represented by the formula (IV): 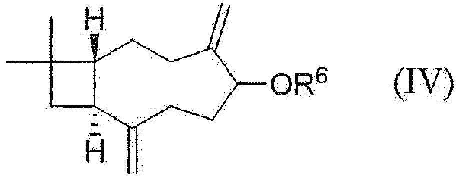 wherein R⁶ is a hydrogen atom, an acyl group having 1 - 6 carbon atoms, or an alkyl group having 1 - 6 carbon atoms
         a compound represented by the formula (V): 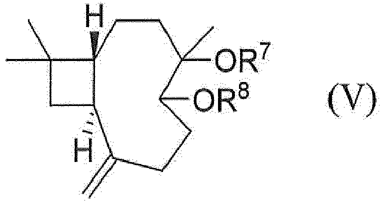
            wherein R⁷ and R⁸ are each independently a hydrogen atom, an acyl group having 1 - 6 carbon atoms, or an alkyl group having 1 - 6 carbon atoms
            (1S,6S,9R)-6,10,10-trimethyl-2-methylenebicyclo[7.2.0]undecan-5-one
            (1S,6R,9R)-6,10,10-trimethyl-2-methylenebicyclo[7.2.0]undecan-5-one
            (1R,4R,8S)-4,10,10-trimethyl-7-methylenebicyclo[6.2.0]decane-4-carboxaldehyde
            (1R,4S,8S)-4,10,10-trimethyl-7-methylenebicyclo[6.2.0]decane-4-carboxaldehyde
            (1S,2S,5R,9S)-1,4,4,8-tetramethyl-12-oxatricyclo[7.2.1.0^{2,5}]dodec-7-ene
            (1R,2S,5R,8R,9R)-1,4,4,8-tetramethyl-12-oxatricyclo[6.3.1.0^{2,5}]dodecan-9-ol
            (1R,2S,5R,8R,9S)-1,4,4,8-tetramethyl-12-oxatricyclo[6.3.1.0^{2,5}]dodecan-9-ol
            [1R-(1α,2α,5β,8β,9α)]-4,4,8-trimethyl-tricyclo[6.3.1.0^{2,5}]dodecane-1,9-diol.
[31] A method for producing a mouth-coating feel enhancer, comprising heating the following (A) and/or (B):
   (A) (A1) a compound represented by the formula (I): 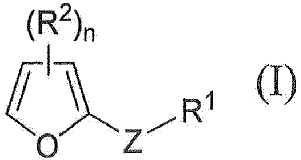 wherein
      R¹ is an acyl group having 1 - 6 carbon atoms, a hydroxy group or a pyrrole group;
      Z is a single bond or an alkylene group having 1 - 6 carbon atoms;
      R² is a substituent; and
      n is an integer of 0 - 3, and
      (A2) at least one selected from the group consisting of an aliphatic aldehyde having 3 - 14 carbon atoms, an aromatic aldehyde having 7 - 12 carbon atoms, an aliphatic alcohol having 3 - 12 carbon atoms and a substance that produces at least one of these compounds by heating
   (B) at least one compound selected from the group consisting of β-caryophyllene and a β-caryophyllene analogous compound.
[32] The method of [31], wherein, in the aforementioned formula (I), R¹ is a formyl group or an acetyl group, and Z is a single bond, or
   in the aforementioned formula (I), R¹ is a hydroxy group or a pyrrole group, and Z is a methylene group.
[33] The method of [31] or [32], wherein R² is an alkyl group having 1 - 6 carbon atoms.
[34] The method of any one of [31] to [33], wherein n is 0 or 1.
[35] The method of any one of [31] to [34], wherein the aforementioned compound represented by the formula (I) is at least one compound selected from the group consisting of furfural, 5-methylfurfural, 2-furylmethylketone, furfuryl alcohol, and 1-furfurylpyrrole.
[36] The method of any one of [31] to [35], wherein the aforementioned (A2) is oil or fat.
[37] The method of any one of [31] to [36], wherein the β-caryophyllene analogous compound is at least one compound selected from the group consisting of isocaryophyllene, β-pinene, sabinene, 4-allyl-2,6-dimethoxyphenol, eugenol, limonene, 4-vinylphenol, linalool, linalool oxide, p-cymene, farnesene, myrcene, ocimene, α-phellandrene, α-terpinene, γ-terpinene and terpinolene (preferably at least one compound selected from the group consisting of β-pinene, sabinene, 4-allyl-2,6-dimethoxyphenol, eugenol, limonene, 4-vinylphenol, linalool, linalool oxide, p-cymene, farnesene, myrcene, ocimene, α-phellandrene, α-terpinene, γ-terpinene and terpinolene).
[38] The method of any one of [31] to [37], wherein a heating temperature of the aforementioned component (A) is 40 - 200°C, and a heating time thereof is 0.1 - 500 min, and
   a heating temperature of the aforementioned component (B) is 40 - 200°C, and a heating time thereof is 0.1 - 500 min.
[39] The method of [31], wherein the at least one compound selected from compound group (C) is at least one compound selected from the group consisting of β-caryophyllene oxide, (1R,3Z,5R,9S)-4,11,11-trimethyl-8-methylenebicyclo[7.2.0]undec-3-en-5-ol, (1R,4R,5R,9S)-4,11,11-trimethyl-8-methylenebicyclo[7.2.0]undecane-4,5-diol, α-pinene oxide, limonene oxide, α-terpineol, clovanediol, clovanediol-3-monoacetate, clovanediol diacetate and clovanediol-3-monoisovalerate.
[40] The method of any one of [31] to [39], wherein the mouth-coating feel enhancer is for a food containing oil or fat.
[41] A coffee-roasting sensation enhancer comprising a heated substance of the following (A) and/or a heated substance of the following (B), or at least one compound selected from the following compound group (C):
   (A) (A1) a compound represented by the formula (I): 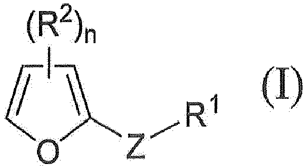 wherein
      R¹ is an acyl group having 1 - 6 carbon atoms, a hydroxy group or a pyrrole group;
      Z is a single bond or an alkylene group having 1 - 6 carbon atoms;
      R² is a substituent; and
      n is an integer of 0 - 3, and
      (A2) at least one selected from the group consisting of an aliphatic aldehyde having 3 - 14 carbon atoms, an aromatic aldehyde having 7 - 12 carbon atoms, an aliphatic alcohol having 3 - 12 carbon atoms, and a substance that produces at least one of these compounds by heating
   (B) at least one compound selected from the group consisting of β-caryophyllene and a β-caryophyllene analogous compound [compound group (C)]
      β-caryophyllene oxide
      α-pinene oxide
      limonene oxide
      α-terpineol
         a compound represented by the formula (II): 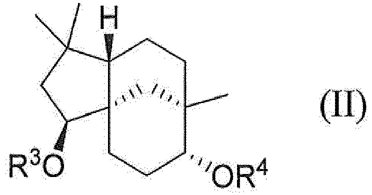 wherein R³ and R⁴ are each independently a hydrogen atom, an acyl group having 1 - 18 carbon atoms or an alkyl group having 1 - 6 carbon atoms
         a compound represented by the formula (III): 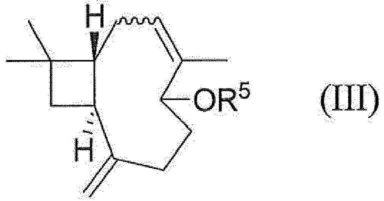 wherein R⁵ is a hydrogen atom, an acyl group having 1 - 6 carbon atoms or an alkyl group having 1 - 6 carbon atoms
         a compound represented by the formula (IV): 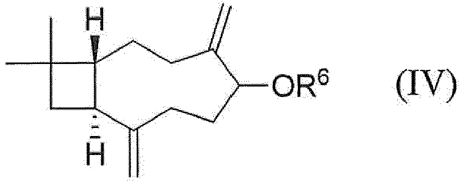 wherein R⁶ is a hydrogen atom, an acyl group having 1 - 6 carbon atoms, or an alkyl group having 1 - 6 carbon atoms
         a compound represented by the formula (V): 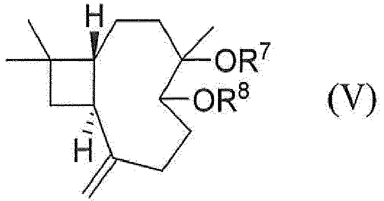
            wherein R⁷ and R⁸ are each independently a hydrogen atom, an acyl group having 1 - 6 carbon atoms, or an alkyl group having 1 - 6 carbon atoms
            (1S,6S,9R)-6,10,10-trimethyl-2-methylenebicyclo[7.2.0]undecan-5-one
            (1S,6R,9R)-6,10,10-trimethyl-2-methylenebicyclo[7.2.0]undecan-5-one
            (1R,4R,8S)-4,10,10-trimethyl-7-methylenebicyclo[6.2.0]decane-4-carboxaldehyde
            (1R,4S,8S)-4,10,10-trimethyl-7-methylenebicyclo[6.2.0]decane-4-carboxaldehyde
            (1S,2S,5R,9S)-1,4,4,8-tetramethyl-12-oxatricyclo[7.2.1.0^{2,5}]dodec-7-ene
            (1R,2S,5R,8R,9R)-1,4,4,8-tetramethyl-12-oxatricyclo[6.3.1.0^{2,5}]dodecan-9-ol
            (1R,2S,5R,8R,9S)-1,4,4,8-tetramethyl-12-oxatricyclo[6.3.1.0^{2,5}]dodecan-9-ol
            [1R-(1α,2α,5β,8β,9α)]-4,4,8-trimethyl-tricyclo[6.3.1.0^{2,5}]dodecane-1,9-diol.
[42] The coffee-roasting sensation enhancer of [41], wherein, in the aforementioned formula (I), R¹ is a formyl group or an acetyl group, and Z is a single bond, or
   in the aforementioned formula (I), R¹ is a hydroxy group or a pyrrole group, and Z is a methylene group.
[43] The coffee-roasting sensation enhancer of [41] or [42], wherein R² is an alkyl group having 1 - 6 carbon atoms.
[44] The coffee-roasting sensation enhancer of any one of [41] to [43], wherein n is 0 or 1.
[45] The coffee-roasting sensation enhancer of any one of [41] to [44], wherein the aforementioned compound represented by the formula (I) is at least one compound selected from the group consisting of furfural, 5-methylfurfural, 2-furylmethylketone, furfuryl alcohol, and 1-furfurylpyrrole.
[46] The coffee-roasting sensation enhancer of any one of [41] to [45], wherein the aforementioned (A2) is oil or fat.
[47] The coffee-roasting sensation enhancer of any one of [41] to [46], wherein the β-caryophyllene analogous compound is at least one compound selected from the group consisting of isocaryophyllene, β-pinene, sabinene, 4-allyl-2,6-dimethoxyphenol, eugenol, limonene, 4-vinylphenol, linalool, linalool oxide, p-cymene, farnesene, myrcene, ocimene, α-phellandrene, α-terpinene, γ-terpinene and terpinolene (preferably at least one compound selected from the group consisting of β-pinene, sabinene, 4-allyl-2,6-dimethoxyphenol, eugenol, limonene, 4-vinylphenol, linalool, linalool oxide, p-cymene, farnesene, myrcene, ocimene, α-phellandrene, α-terpinene, γ-terpinene and terpinolene).
[48] The coffee-roasting sensation enhancer of [41], wherein the at least one compound selected from compound group (C) is at least one compound selected from the group consisting of β-caryophyllene oxide, (1R,3Z,5R,9S)-4,11,11-trimethyl-8-methylenebicyclo[7.2.0]undec-3-en-5-ol, (1R,4R,5R,9S)-4,11,11-trimethyl-8-methylenebicyclo[7.2.0]undecane-4,5-diol, α-pinene oxide, limonene oxide, α-terpineol, clovanediol, clovanediol-3-monoacetate, clovanediol diacetate and clovanediol-3-monoisovalerate.
[49] A method for enhancing a coffee-roasting sensation, comprising adding a heated substance of the following (A) and/or a heated substance of the following (B), or at least one compound selected from the following compound group (C):
   (A) (A1) a compound represented by the formula (I): 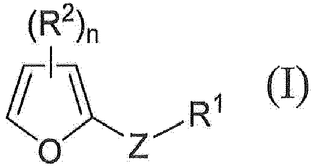 wherein
      R¹ is an acyl group having 1 - 6 carbon atoms, a hydroxy group or a pyrrole group;
      Z is a single bond or an alkylene group having 1 - 6 carbon atoms;
      R² is a substituent; and
      n is an integer of 0 - 3, and
      (A2) at least one selected from the group consisting of an aliphatic aldehyde having 3 - 14 carbon atoms, an aromatic aldehyde having 7 - 12 carbon atoms, an aliphatic alcohol having 3 - 12 carbon atoms, and a substance that produces at least one of these compounds by heating
   (B) at least one compound selected from the group consisting of β-caryophyllene and a β-caryophyllene analogous compound [compound group (C)]
      β-caryophyllene oxide
      α-pinene oxide
      limonene oxide
      α-terpineol
         a compound represented by the formula (II): 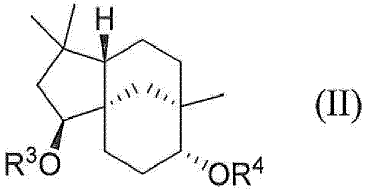 wherein R³ and R⁴ are each independently a hydrogen atom, an acyl group having 1 - 18 carbon atoms or an alkyl group having 1 - 6 carbon atoms
         a compound represented by the formula (III): 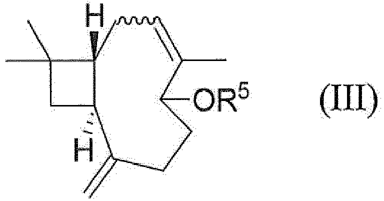 wherein R⁵ is a hydrogen atom, an acyl group having 1 - 6 carbon atoms or an alkyl group having 1 - 6 carbon atoms
         a compound represented by the formula (IV): 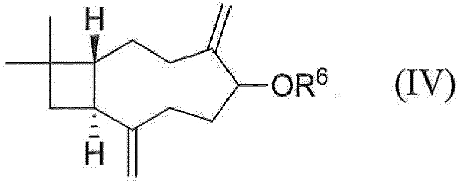 wherein R⁶ is a hydrogen atom, an acyl group having 1 - 6 carbon atoms, or an alkyl group having 1 - 6 carbon atoms
         a compound represented by the formula (V): 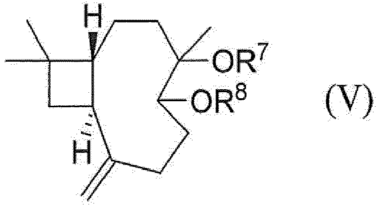
            wherein R⁷ and R⁸ are each independently a hydrogen atom, an acyl group having 1 - 6 carbon atoms, or an alkyl group having 1 - 6 carbon atoms
            (1S,6S,9R)-6,10,10-trimethyl-2-methylenebicyclo[7.2.0]undecan-5-one
            (1S,6R,9R)-6,10,10-trimethyl-2-methylenebicyclo[7.2.0]undecan-5-one
            (1R,4R,8S)-4,10,10-trimethyl-7-methylenebicyclo[6.2.0]decane-4-carboxaldehyde
            (1R,4S,8S)-4,10,10-trimethyl-7-methylenebicyclo[6.2.0]decane-4-carboxaldehyde
            (1S,2S,5R,9S)-1,4,4,8-tetramethyl-12-oxatricyclo[7.2.1.0^{2,5}]dodec-7-ene
            (1R,2S,5R,8R,9R)-1,4,4,8-tetramethyl-12-oxatricyclo[6.3.1.0^{2,5}]dodecan-9-ol
            (1R,2S,5R,8R,9S)-1,4,4,8-tetramethyl-12-oxatricyclo[6.3.1.0^{2,5}]dodecan-9-ol
            [1R-(1α,2α,5β,8β,9α)]-4,4,8-trimethyl-tricyclo[6.3.1.0^{2,5}]dodecane-1,9-diol.
[50] The method of [49], wherein, in the aforementioned formula (I), R¹ is a formyl group or an acetyl group, and Z is a single bond, or
   in the aforementioned formula (I), R¹ is a hydroxy group or a pyrrole group, and Z is a methylene group.
[51] The method of [49] or [50], wherein R² is an alkyl group having 1 - 6 carbon atoms.
[52] The method of any one of [49] to [51], wherein n is 0 or 1.
[53] The method of any one of [49] to [52], wherein the aforementioned compound represented by the formula (I) is at least one compound selected from the group consisting of furfural, 5-methylfurfural, 2-furylmethylketone, furfuryl alcohol, and 1-furfurylpyrrole.
[54] The method of any one of [49] to [53], wherein the aforementioned (A2) is oil or fat.
[55] The method of any one of [49] to [54], wherein the β-caryophyllene analogous compound is at least one compound selected from the group consisting of isocaryophyllene, β-pinene, sabinene, 4-allyl-2,6-dimethoxyphenol, eugenol, limonene, 4-vinylphenol, linalool, linalool oxide, p-cymene, farnesene, myrcene, ocimene, α-phellandrene, α-terpinene, γ-terpinene and terpinolene (preferably, at least one compound selected from the group consisting of β-pinene, sabinene, 4-allyl-2,6-dimethoxyphenol, eugenol, limonene, 4-vinylphenol, linalool, linalool oxide, p-cymene, farnesene, myrcene, ocimene, α-phellandrene, α-terpinene, γ-terpinene and terpinolene).
[56] The method of [49], wherein the at least one compound selected from compound group (C) is at least one compound selected from the group consisting of β-caryophyllene oxide, (1R,3Z,5R,9S)-4,11,11-trimethyl-8-methylenebicyclo[7.2.0]undec-3-en-5-ol, (1R,4R,5R,9S)-4,11,11-trimethyl-8-methylenebicyclo[7.2.0]undecane-4,5-diol, α-pinene oxide, limonene oxide, α-terpineol, clovanediol, clovanediol-3-monoacetate, clovanediol diacetate and clovanediol-3-monoisovalerate.

### [Advantageous Effects of Invention]

According to the present invention, a mouth-coating feel enhancer capable of enhancing a mouth-coating feel, and a production method thereof can be provided.

According to the present invention, moreover, a food with an enhanced mouth-coating feel, and a production method thereof can be provided.

According to the present invention, moreover, a method for enhancing a mouth-coating feel can be provided.

According to the present invention, moreover, a coffee-roasting sensation enhancer capable of enhancing a coffee-roasting sensation, and a production method thereof can be provided.

According to the present invention, moreover, a coffee drink with an enhanced coffee-roasting sensation, and a production method thereof can be provided.

According to the present invention, moreover, a method for enhancing a coffee-roasting sensation can be provided.

### [Brief Description of Drawings]

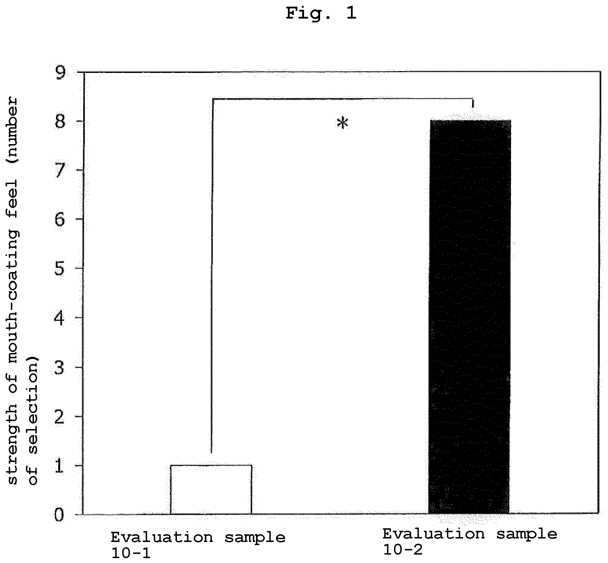

Fig. 1 is a graph showing the results of the two-point discrimination evaluation in Experimental Example 10. The numerical values in the Figure (vertical axis of the graph) indicate the number of times when the mouth-coating feel of the evaluation samples 10-1 or 10-2 was determined to be strong based on comparison under blinded conditions (n=9). In addition, * in the Figure shows p<0.05.

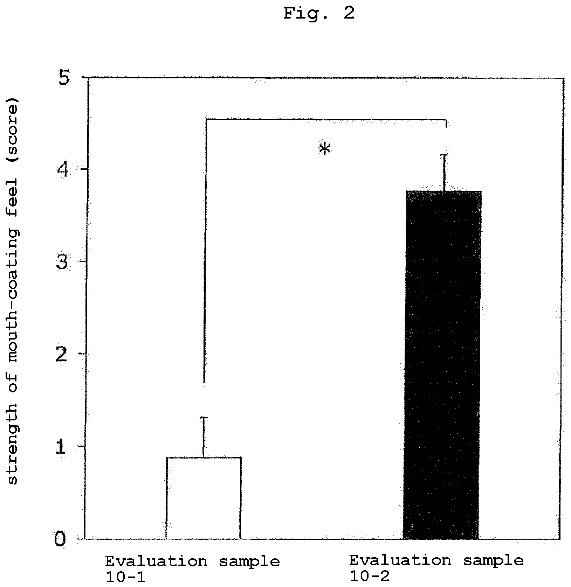

Fig. 2 is a graph showing the results of the score evaluation in Experimental Example 10. The numerical values in the Figure (vertical axis of the graph) indicate the scores of sensory evaluation of the strength of the mouth-coating feel of the evaluation samples 10-1 and 10-2 under blinded conditions (average score±standard error of three expert panels) (n=9). In addition, * in the Figure shows p<0.05.

### [Description of Embodiments]

### <mouth-coating feel enhancer>

In one embodiment, one of the characteristics of the mouth-coating feel enhancer of the present invention is that it contains a heated substance of the following (A) and/or a heated substance of the following (B) as the active ingredient.

In the present specification, the following (A), (A1), (A2) and (B) used in the present invention are sometimes to be referred to as "component (A)", "component (A1)", "component (A2)" and "component (B)", respectively. In the present specification, moreover, a heated substance of component (A) and a heated substance of component (B) are sometimes to be referred to as "component (A) heated substance" and "component (B) heated substance", respectively.

(A) (A1) a compound represented by the formula (I):

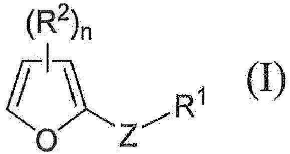

wherein
R¹ is an acyl group having 1 - 6 carbon atoms, a hydroxy group or a pyrrole group;
Z is a single bond or an alkylene group having 1 - 6 carbon atoms;
R² is a substituent; and
n is an integer of 0 - 3, and

(A2) at least one selected from the group consisting of an aliphatic aldehyde having 3 - 14 carbon atoms, an aromatic aldehyde having 7 - 12 carbon atoms, an aliphatic alcohol having 3 - 12 carbon atoms and a substance that produces at least one of these compounds by heating (B) at least one compound selected from the group consisting of β-caryophyllene and a β-caryophyllene analogous compound.

In another embodiment, one of the characteristics of the mouth-coating feel enhancer of the present invention is that it contains at least one compound selected from the below-mentioned compound group (C) as the active ingredient.

In the present specification, at least one compound selected from compound group (C) used in the present invention is sometimes to be referred to as "component (C)".

### [component (A)]

Component (A) of the present invention consists of component (A1) and component (A2).

### [component (A1)]

The compound represented by the formula (I) which is used as component (A1) in the present invention is sometimes to be referred to as "compound (I)" in the present specification.

Each group of the formula (I) is explained below.

In the formula (I), R¹ is an acyl group having 1 - 6 carbon atoms, a hydroxy group or a pyrrole group.

The "acyl group having 1 - 6 carbon atoms" for R¹ may be linear or optionally has a branch, and is preferably linear. The acyl group may be saturated or may contain an unsaturated bond. The number of carbon atoms contained in the acyl group is preferably 1 - 4. Specific examples of the acyl group having 1 - 6 carbon atoms include formyl group, acetyl group, propionyl group, butyryl group, isobutyryl group, valeryl group, isovaleryl group, pivaloyl group, hexanoyl group and the like. Preferred is formyl group, acetyl group, propionyl group, butyryl group, or isobutyryl group, more preferred is formyl group, acetyl group, or propionyl group, and particularly preferred is formyl group or acetyl group.

In the formula (I), R¹ is preferably an acyl group having 1 - 4 carbon atoms, hydroxy group or pyrrole group, more preferably formyl group, acetyl group, hydroxy group or pyrrole group, particularly preferably formyl group or acetyl group.

Z in the formula (I) is a single bond or an alkylene group having 1 - 6 carbon atoms.

The "alkylene group having 1 - 6 carbon atoms" for Z may be linear or optionally has a branch, and is preferably linear. The number of carbon atoms contained in the alkylene group is preferably 1 - 4. Specific examples of the alkylene group having 1 - 6 carbon atoms include methylene group, ethylene group, trimethylene group, tetramethylene group, pentamethylene group, hexamethylene group and the like, preferably methylene group, ethylene group, trimethylene group, tetramethylene group, more preferably methylene group, ethylene group, particularly preferably methylene group.

Z in the formula (I) is preferably a single bond or an alkylene group having 1 - 4 carbon atoms, more preferably a single bond or a methylene group.

In one embodiment of compound (I), preferably, R¹ is an acyl group having 1 - 6 carbon atoms, and Z is a single bond; more preferably, R¹ is an acyl group having 1 - 4 carbon atoms, and Z is a single bond; particularly preferably, R¹ is a formyl group or an acetyl group, and Z is a single bond.

In another embodiment of compound (I), preferably, R¹ is a hydroxy group or a pyrrole group, and Z is an alkylene group having 1 - 6 carbon atoms; more preferably, R¹ is a hydroxy group or a pyrrole group, and Z is an alkylene group having 1 - 4 carbon atoms; particularly preferably, R¹ is a hydroxy group or a pyrrole group, and Z is a methylene group.

R² in the formula (I) shows a substituent. The substituent for R² is not particularly limited. Examples thereof include alkyl group having 1 - 6 carbon atoms (e.g., methyl group, ethyl group, propyl group, isopropyl group, butyl group, isobutyl group, etc.), cycloalkyl group having 3 - 8 carbon atoms (e.g., cyclopropyl group, cyclobutyl group, cyclopentyl group, cyclohexyl group, cycloheptyl group etc.), alkenyl group having 2 - 6 carbon atoms (e.g., ethenyl group, 1-propenyl group, 2-propenyl group, 1-butenyl group, 2-butenyl group, 3-butenyl group etc.), alkynyl group having 2 - 6 carbon atoms (e.g., ethynyl group, 1-propynyl group, 2-propynyl group, 1-butynyl group, 2-butynyl group, 3-butynyl group etc.), acyl group having 1 - 6 carbon atoms (e.g., formyl group, acetyl group, propionyl group, butyryl group, isobutyryl group etc.), alkoxy group having 1 - 6 carbon atoms (e.g., methoxy group, ethoxy group, propoxy group, isopropoxy group, butoxy group, isobutoxy group etc.), hydroxyalkyl group having 1 - 6 carbon atoms (e.g., hydroxymethyl group, 1-hydroxyethyl group, 2-hydroxyethyl group, 1-hydroxypropyl group, 2-hydroxypropyl group, 3-hydroxypropyl group etc.) and the like. It is preferably an alkyl group having 1 - 6 carbon atoms, more preferably an alkyl group having 1 - 4 carbon atoms, particularly preferably a methyl group.

In the formula (I), n is an integer of 0 - 3. n is preferably an integer of 0 - 2, more preferably 0 or 1.

In one embodiment, n in the formula (I) is 2 or 3, R² in plurality may be the same or different.

Preferred compound (I) is shown below.

### [Compound (IA)]

Compound (I), wherein
R¹ is a formyl group, an acetyl group, a hydroxy group or a pyrrole group;
Z is a single bond or a methylene group;
R² is a substituent (preferably, an alkyl group having 1 - 6 carbon atoms); and
n is an integer of 0 - 3

### [Compound (IB)]

Compound (I), wherein
R¹ is a formyl group, an acetyl group, a hydroxy group or a pyrrole group;
Z is a single bond or a methylene group;
R² is a substituent (preferably, an alkyl group having 1 - 6 carbon atoms); and
n is 0 or 1.

### [Compound (IC)]

Compound (I), wherein
R¹ is an acyl group having 1 - 6 carbon atoms or a hydroxy group;
Z is a single bond or an alkylene group having 1 - 6 carbon atoms;
R² is a substituent (preferably, an alkyl group having 1 - 6 carbon atoms); and
n is an integer of 0 - 3.

### [Compound (ID)]

Compound (I), wherein
R¹ is a formyl group, an acetyl group or a hydroxy group;
Z is a single bond or a methylene group;
R² is a substituent (preferably, an alkyl group having 1 - 6 carbon atoms); and
n is an integer of 0 - 3.

### [Compound (IE)]

Compound (I), wherein
R¹ is a formyl group, an acetyl group or a hydroxy group;
Z is a single bond or a methylene group;
R² is a substituent (preferably, an alkyl group having 1 - 6 carbon atoms); and
n is 0 or 1.

### [Compound (IF)]

Compound (I), wherein
R¹ is an acyl group having 1 - 6 carbon atoms or a pyrrole group;
Z is a single bond or an alkylene group having 1 - 6 carbon atoms;
R² is a substituent (preferably, an alkyl group having 1 - 6 carbon atoms); and
n is an integer of 0 - 3.

### [Compound (IG)]

Compound (I), wherein
R¹ is a formyl group, an acetyl group or a pyrrole group;
Z is a single bond or a methylene group;
R² is a substituent (preferably, an alkyl group having 1 - 6 carbon atoms); and
n is an integer of 0 - 3 (preferably, 0 or 1).

### [Compound (IH)]

Compound (I), wherein
R¹ is a formyl group, an acetyl group or a pyrrole group;
Z is a single bond or a methylene group;
R² is a substituent (preferably, an alkyl group having 1 - 6 carbon atoms); and
n is 0 or 1.

Specific examples of preferred compound (I) include furfural (CAS registry number: 98-01-1 etc.):

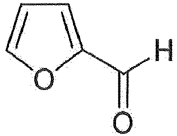

5-methylfurfural (CAS registry number: 620-02-0):

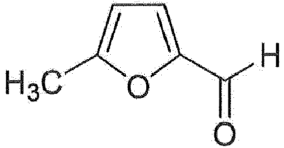

2-furylmethylketone(CAS registry number:1192-62-7 etc.):

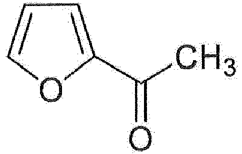

furfuryl alcohol (CAS registry number: 98-00-0 etc.):

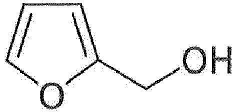

1-furfurylpyrrole (CAS registry number: 1438-94-4 etc.):

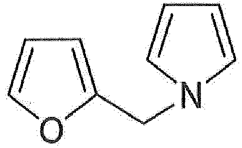

and the like. Among these, furfural is preferred since it affords a clear effect and has good flavor quality.

The production method of component (A1) is not particularly limited, and the component can be produced by a method known per se or a method analogous thereto, and may be a synthetic product or an extracted product. Commercially available products can also be used and are preferable because they are convenient.

### [Component (A2)]

In the present invention, an aliphatic aldehyde having 3 - 14 carbon atoms, an aromatic aldehyde having 7 - 12 carbon atoms, and an aliphatic alcohol having 3 - 12 carbon atoms may be used as component (A2).

In the present invention, the "aliphatic aldehyde" that may be used as component (A2) may be linear or optionally has a branch, and preferably linear. The aliphatic aldehyde may be a saturated aliphatic aldehyde (aliphatic aldehyde that does not have a carbon-carbon double bond or a triple bond in a molecule), or an unsaturated aliphatic aldehyde (aliphatic aldehyde having a carbon-carbon double bond or a triple bond in a molecule), and is preferably an unsaturated aliphatic aldehyde. The number of carbon atoms contained in the aliphatic aldehyde is preferably 3 - 14, more preferably 3 - 12, further preferably 4 - 10, particularly preferably 6 - 10. Examples of the aliphatic aldehyde that may be used as component (A2) include propanal, butanal, pentanal, 2-pentenal, hexanal, 2-hexenal, 2,4-hexadienal, heptanal, 2,4-heptadienal, octanal, 2-octenal, 2,4-octadienal, nonanal, 2,6-nonadienal, decanal, 2-decenal, 2,4-decadienal, undecanal, 2,4-undecadienal, dodecanal, 2-dodecenal, 2,4-dodecadienal, tridecanal, 2-tridecenal, tetradecanal, 3-(methylthio)propanal (methional) and the like. It is preferably hexanal, 2-hexenal, 2,4-hexadienal, heptanal, 2,4-heptadienal, octanal, 2-octenal, 2,4-octadienal, nonanal, 2,6-nonadienal, decanal, 2-decenal, 2,4-decadienal, undecanal, 2,4-undecadienal, dodecanal, 2-dodecenal, 2,4-dodecadienal, 3-(methylthio)propanal, more preferably hexanal, 2-hexenal, octanal, 2-octenal, decanal, 2-decenal, 2,4-decadienal, 3-(methylthio)propanal.

The number of carbon atoms contained in the "aromatic aldehyde" that may be used as component (A2) in the present invention is preferably 7 - 12, more preferably 7 - 10, particularly preferably 7 - 9. Examples of the aromatic aldehyde that may be used as component (A2) include benzaldehyde, o-tolualdehyde (2-methylbenzaldehyde), m-tolualdehyde (3-methylbenzaldehyde), p-tolualdehyde (4-methylbenzaldehyde), 4-ethylbenzaldehyde, 2,6-dimethylbenzaldehyde and the like. It is preferably benzaldehyde, o-tolualdehyde, m-tolualdehyde or p-tolualdehyde, more preferably benzaldehyde or p-tolualdehyde.

In the present invention, "aliphatic alcohol" that may be used as component (A2) " may be linear or optionally has a branch, and preferably linear. The aliphatic alcohol may be a saturated aliphatic alcohol (aliphatic alcohol that does not have a carbon-carbon double bond or a triple bond in a molecule), or an unsaturated aliphatic alcohol (aliphatic alcohol having a carbon-carbon double bond or a triple bond in a molecule), and is preferably a saturated aliphatic alcohol. The number of carbon atoms contained in the aliphatic alcohol is preferably 3 - 12, more preferably 3 - 10, particularly preferably 6 - 10. The valence of the aliphatic alcohol is not particularly limited, and is preferably monovalent to trivalent, more preferably monovalent or trivalent. Examples of the aliphatic alcohol that may be used as component (A2) include propanol, butanol, pentanol, hexanol, 2-hexenol, heptanol, 2-heptenol, 2,4-dimethyl-3-pentanol, octanol, 2-octenol, 2,6-dimethyl-2-heptanol, nonanol, 3-nonenol, decanol, 2-decenol, undecanol, 2-undecenol, dodecanol, 2-dodecenol, glycerol, trimethylolpropane and the like. It is preferably hexanol, heptanol, octanol or glycerol, more preferably hexanol, octanol or glycerol.

In the present invention, in addition to the aforementioned aliphatic aldehyde having 3 - 14 carbon atoms, aromatic aldehyde having 7 - 12 carbon atoms and aliphatic alcohol having 3 - 12 carbon atoms, a substance that produces at least one of these compounds by heating can also be used as component (A2).

In the present invention, a substance that produces at least one of an aliphatic aldehyde having 3 - 14 carbon atoms, an aromatic aldehyde having 7 - 12 carbon atoms and an aliphatic alcohol having 3 - 12 carbon atoms by heating, and that may be used as component (A2), is not particularly limited as long as it is edible. Examples of the substance that produces an aliphatic aldehyde having 3 - 14 carbon atoms by heating include oil and fat, fatty acid (including saturated fatty acid and unsaturated fatty acid), ketone, lactone and the like. Oil or fat is preferred since it affords a clear effect and has good flavor quality.

In the present invention, the "oil and fat" refers to a substance containing acylglycerol (triglyceride, diglyceride, monoglyceride, etc.) as a main component. Generally, a substance having fluidity at ordinary temperature is sometimes referred to as "oil" and a substance having no fluidity is sometimes referred to as "fat". The "oil and fat" is a concept including the both.

Examples of the oil and fat that may be used as component (A2) in the present invention include vegetable oils and fats such as rape seed oil, corn oil, soybean oil, sesame oil, rice oil, bran oil, safflower oil, coconut oil, palm oil, palm kernel oil, sunflower oil, perilla oil, perilla oil, flaxseed oil, olive oil, grapeseed oil, medium chain fatty acid oil and the like; animal oils and fats such as lard, beef tallow, chicken oil, mutton tallow, horse fat, fish oil, whale oil and the like, and the like. In addition, transesterified oil obtained by transesterifying the aforementioned fats and oils, hydrogenated oil obtained by hydrogenating the aforementioned fats and oils, and the like can also be used. The aforementioned oils and fats may be refined (e.g., salad oil, etc.). These oils and fats may be used alone, or two or more kinds thereof may be used in combination.

The fatty acid that may be used as component (A2) in the present invention may be saturated or unsaturated. The number of carbon atoms contained in the fatty acid is preferably 12 - 24, more preferably 14 - 22, particularly preferably 16 - 20. Examples of the fatty acid that may be used as component (A2) include lauric acid, myristic acid, palmitic acid, pulmitoleic acid, stearic acid, oleic acid, linoleic acid, linolenic acid, arachidic acid, behenic acid and the like. It is preferably stearic acid, oleic acid or linoleic acid.

The ketone that may be used as component (A2) in the present invention may be saturated or unsaturated. The number of carbon atoms contained in the ketone is preferably 4 - 14, more preferably 6 - 12, particularly preferably 6 - 10. Examples of the ketone that may be used as component (A2) include 2-pentanone, 3-pentanone, 2-hexanone, 3-hexanone, 2-heptanone, 3-heptanone, 2-octanone, 3-octanone, 3-methyl-2-heptanone, 5-methyl-3-heptanone, 1-octen-3-one, 2-nonanone, 5-nonanone, 2-undecanone, 6-undecanone, 7-tridecanone and the like. It is preferably 3-octanone.

The heating conditions for a substance that produces an aliphatic aldehyde having 3 - 14 carbon atoms, an aromatic aldehyde having 7 - 12 carbon atoms, or an aliphatic alcohol having 3 - 12 carbon atoms by heating to produce the aliphatic aldehyde or the like are not particularly limited as long as the aliphatic aldehyde or the like are produced, and can be appropriately set according to the kind and the like of the substance. The heating temperature is generally 40 - 200°C, preferably 60 - 180°C, and the heating time is generally 0.5 - 480 min, preferably 1 - 360 min.

The component (A2) that may be used in the present invention is preferably aliphatic aldehyde having 3 - 14 carbon atoms (e.g., aliphatic aldehyde having 4 - 10 carbon atoms, etc.), aromatic aldehyde having 7 - 12 carbon atoms (e.g., aromatic aldehyde having 7 - 10 carbon atoms, etc.), aliphatic alcohol having 3 - 12 carbon atoms (e.g., aliphatic alcohol having 3 - 10 carbon atoms, etc.), oil and fat, fatty acid (e.g., fatty acid having 3 - 14 carbon atoms, etc.), ketone (e.g., ketone having 3 - 14 carbon atoms, etc.), more preferably, hexanal, 2-hexenal, octanal, 2-octenal, decanal, 2-decenal, 2,4-decadienal, 3-(methylthio)propanal, benzaldehyde, p-tolualdehyde, hexanol, octanol, glycerol, oil and fat (e.g., vegetable oil and fat such as rape seed oil, soybean oil, corn oil, olive oil, safflower oil, flaxseed oil, perilla oil, hydrogenated palm kernel oil, medium chain fatty acid oil or the like, etc.), stearic acid, oleic acid, linoleic acid, 3-octanone.

When aliphatic aldehyde having 3 - 14 carbon atoms (e.g., aliphatic aldehyde having 4 - 10 carbon atoms, etc.), aromatic aldehyde having 7 - 12 carbon atoms (e.g., aromatic aldehyde having 7 - 10 carbon atoms, etc.), aliphatic alcohol having 3 - 12 carbon atoms (e.g., aliphatic alcohol having 3 - 10 carbon atoms, etc.), fatty acid (e.g., fatty acid having 3 - 14 carbon atoms, etc.), and ketone (e.g., ketone having 3 - 14 carbon atoms, etc.) are used as component (A2), the weight ratio of component (A1) and component (A2) to be heated is not particularly limited. It is preferably A1:A2=1:0.001 - 1000, more preferably A1:A2=1:0.01 - 100, particularly preferably A1:A2=1:0.08 - 15.

When oil or fat (e.g., vegetable oil and fat such as rape seed oil, soybean oil, corn oil, olive oil, safflower oil, flaxseed oil, perilla oil, hydrogenated palm kernel oil, medium chain fatty acid oil or the like, etc.) is used as component (A2), the concentration of the component (A1) to be heated in oil or fat during heating is preferably 0.0008 - 12000 weight ppm, more preferably 0.0008 - 1200 weight ppm, further preferably 0.08 - 120 weight ppm, particularly preferably 0.8 - 120 weight ppm. In one embodiment, the concentration is preferably 0.0008 - 100000 weight ppm, more preferably 0.0008 - 50000 weight ppm, further preferably 0.08 - 10000 weight ppm, particularly preferably 0.8 - 5000 weight ppm.

The production method of component (A2) is not particularly limited, and the component can be produced by a method known per se or a method analogous thereto, and may be a synthetic product or an extracted product. Commercially available products can also be used and are preferable because they are convenient.

The method for heating component (A) is not particularly limited and, for example, component (A) may be directly heated, or component (A) may be dissolved or dispersed in a medium such as a solvent, a dispersion medium, or the like, and then heated, that is, component (A) may be heated in a medium. When component (A) is heated in a medium, it may be heated under static conditions, or may be appropriately heated with stirring. Component (A) may also be heated in the coexistence of a component other than the medium (e.g., component (B) etc.) as long as the purpose of the present invention is not impaired.

The heating temperature of component (A) may be appropriately adjusted according to heating time and the like. It is preferably 40 - 200°C, more preferably 50 - 150°C, further preferably 50 - 120°C, particularly preferably 80 - 120°C, because component (A) heated substance which is more superior in the mouth-coating feel enhancing effect can be obtained.

The heating time of component (A) may be appropriately adjusted according to heating temperature and the like. It is preferably 0.1 - 500 min, more preferably 2.5 - 400 min, more preferably 3.5 - 150 min, particularly preferably 8 - 100 min, because component (A) heated substance which is more superior in the mouth-coating feel enhancing effect can be obtained.

The heating of component (A) may be performed under normal pressure or under pressurization.

The component (A) heated substance used in the present invention may be a product obtained by heating component (A) by any method. For example, it may be a product obtained by heating component (A) in a medium, or the like. In one embodiment, when component (A) is heated in a medium, the medium used is not particularly limited and, for example, lipids such as sterol, carotenoid, phospholipid, glycolipid, wax and the like; hydrocarbon oil (e.g., mineral oil etc.), ethanol, polyethylene glycol, water and the like can be mentioned.

When the component (A) heated substance used in the present invention is obtained by heating component (A) in a medium, the concentration of component (A1) in the component (A) which is heated to obtain the component (A) heated substance in the medium during heating is preferably 0.0008 - 12000 weight ppm, more preferably 0.0008 - 1200 weight ppm, further preferably 0.08 - 120 weight ppm, particularly preferably 0.8 - 120 weight ppm, because the mouth-coating feel can be more effectively enhanced. In one embodiment, the concentration is preferably 0.0008 - 100000 weight ppm, more preferably 0.0008 - 50000 weight ppm, further preferably 0.08 - 10000 weight ppm, particularly preferably 0.8 - 5000 weight ppm.

After heating component (A) in a medium, the obtained component (A) heated substance may be used after separation from the medium. Alternatively, when, for example, the medium used for heating can be used as a food material, or the like, the obtained component (A) heated substance may be used together with the medium without separation from the medium.

### [Component (B)]

The component (B) of the present invention is at least one compound selected from the group consisting of β-caryophyllene (CAS registry number: 87-44-5) and a β-caryophyllene analogous compound.

Examples of the β-caryophyllene analogous compound that can be used as component (B) in the present invention include terpene hydrocarbons such as isocaryophyllene (CAS registry number: 118-65-0), β-pinene (CAS registry number: 127-91-3, 18172-67-3 etc.), sabinene (CAS registry number: 3387-41-5), eugenol (CAS registry number: 97-53-0), limonene (CAS registry number: 5989-27-5 etc.), linalool (CAS registry number: 78-70-6 etc.), linalool oxide (CAS registry number: 60047-17-8 etc.), p-cymene (CAS registry number: 99-87-6 etc.), farnesene (CAS registry number: 502-61-4, 26560-14-5 etc.), myrcene (CAS registry number: 123-35-3 etc.), ocimene (CAS registry number: 13877-91-3 etc.), α-phellandrene (CAS registry number: 99-83-2 etc.), α-terpinene (CAS registry number: 99-86-5), γ-terpinene (CAS registry number: 99-85-4), terpinolene (CAS registry number: 586-62-9 etc.) and the like; phenols such as 4-allyl-2,6-dimethoxyphenol (CAS registry number: 6627-88-9), 4-vinylphenol (CAS registry number: 2628-17-3 etc.) and the like, and the like. These compounds may be used alone, or two or more kinds thereof may be used in combination. The β-caryophyllene analogous compound is preferably at least one compound selected from the group consisting of isocaryophyllene, β -pinene, sabinene, 4-allyl-2,6-dimethoxyphenol, eugenol, limonene, 4-vinylphenol, linalool, linalool oxide, p-cymene, farnesene, myrcene, ocimene, α-phellandrene, α-terpinene, γ-terpinene and terpinolene. It is more preferably at least one compound selected from the group consisting of β-pinene, sabinene, 4-allyl-2,6-dimethoxyphenol, 4-vinylphenol, linalool oxide, p-cymene, farnesene, myrcene, α-phellandrene, α-terpinene, γ-terpinene and terpinolene, particularly preferably at least one compound selected from the group consisting of β-pinene, sabinene, 4-allyl-2,6-dimethoxyphenol, myrcene, α-phellandrene and terpinolene, because the mouth-coating feel can be effectively improved.

The production method of component (B) is not particularly limited, and the component can be produced by a method known per se or a method analogous thereto, and may be a synthetic product or an extracted product. Commercially available products can also be used and are preferable because they are convenient.

The method for heating component (B) is not particularly limited and may be the same as, for example, the aforementioned heating method of component (A), and preferred embodiments thereof are also the same.

The heating temperature of component (B) may be appropriately adjusted according to heating time and the like. It is preferably 40 - 200°C, more preferably 50 - 150°C, further preferably 50 - 120°C, particularly preferably 80 - 120°C, because component (B) heated substance which is more superior in the mouth-coating feel enhancing effect can be obtained.

The heating time of component (B) may be appropriately adjusted according to heating temperature and the like. It is preferably 0.1 - 500 min, more preferably 2.5 - 400 min, more preferably 3.5 - 150 min, particularly preferably 8 - 100 min, because component (B) heated substance which is more superior in the mouth-coating feel enhancing effect can be obtained.

The component (B) heated substance used in the present invention may be a product obtained by heating component (B) by any method. For example, it may be a product obtained by heating component (B) in a medium, or the like. In one embodiment, when component (B) is heated in a medium, the medium used is not particularly limited and, for example, lipids such as oil and fat, fatty acid (e.g., acetic acid, isovaleric acid, etc.), sterol, carotenoid, phospholipid, glycolipid, wax and the like; glycerol, aliphatic alcohol, hydrocarbon oil (e.g., mineral oil etc.), ethanol, polyethylene glycol, water, inorganic acid (e.g., hydrochloric acid, sulfuric acid etc.) can be mentioned. As a medium used for heating component (B), component (A2) can also be used. Component (B) may also be heated in the coexistence of a component other than the medium (e.g., component (A), etc.) as long as the purpose of the present invention is not impaired.

Examples of the oil and fat that may be used for heating component (B) include vegetable oils and fats such as rape seed oil, corn oil, soybean oil, sesame oil, rice oil, bran oil, safflower oil, coconut oil, palm oil, palm kernel oil, sunflower oil, perilla oil, perilla oil, flaxseed oil, olive oil, grapeseed oil, neutral fatty acid oil and the like; animal oils and fats such as lard, beef tallow, chicken oil, mutton tallow, horse fat, fish oil, whale oil and the like, and the like. In addition, transesterified oil obtained by transesterifying the aforementioned fats and oils, hydrogenated oil obtained by hydrogenating the aforementioned fats and oils, and the like can also be used. The aforementioned oils and fats may be refined (e.g., salad oil, etc.). These oils and fats may be used alone, or two or more kinds thereof may be used in combination.

When the component (B) heated substance used in the present invention is obtained by heating component (B) in a medium, the concentration of component (B) in the medium during heating is preferably 0.0008 - 12000 weight ppm, more preferably 0.0008 - 1200 weight ppm, further preferably 0.08 - 120 weight ppm, particularly preferably 0.8 - 120 weight ppm, because the mouth-coating feel can be more effectively enhanced. In one embodiment, the concentration is preferably 0.0008 - 100000 weight ppm, more preferably 0.0008 - 50000 weight ppm, further preferably 0.08 - 10000 weight ppm, particularly preferably 0.8 - 5000 weight ppm.

After heating component (B) in a medium, the obtained component (B) heated substance may be separated from the medium and used for the mouth-coating feel enhancer of the present invention. Alternatively, when, for example, the medium used for heating can be used as a food material, or the like, the obtained component (B) heated substance may be used together with the medium for the mouth-coating feel enhancer of the present invention without separation from the medium.

In one embodiment, when the mouth-coating feel enhancer of the present invention contains the component (A) heated substance and the component (B) heated substance as active ingredients, and when the amount of component (A1) in component (A) which is heated to obtain the component (A) heated substance is A1¹ (weight) and the amount of component (B) which is heated to obtain the component (B) heated substance is B¹ (weight), the ratio of B¹ and A1¹ (B¹:A1¹) is preferably within the range of 1:0.00000008 - 12000000, more preferably 1:0.000008 - 1200000, further preferably 1:0.008 - 12000, particularly preferably 1:0.08 - 1200. As used herein, the weight unit of A1¹ and B¹ is the same.

In one embodiment, when the mouth-coating feel enhancer of the present invention contains the component (A) heated substance and the component (B) heated substance as active ingredients, the component (A) heated substance and the component (B) heated substance may be obtained by separately heating component (A) and component (B) or may be obtained by heating these together. That is, In the present specification, the "component (A) heated substance and component (B) heated substance" includes a mixture of separately obtained component (A) heated substance and component (B) heated substance, and a heated substance obtained by concurrently heating component (A) and component (B). Examples of the "component (A) heated substance and component (B) heated substance" obtained by concurrently heating component (A) and component (B) include a heated substance obtained by heating component (A) and component (B) in one medium, and the like.

### [Component (C)]

The component (C) of the present invention is at least one selected from the following compound group (C).

### [Compound group (C)]

- β-caryophyllene oxide (CAS registry number: 1139-30-6)
- α-pinene oxide (CAS registry number: 72936-74-4, 19894-99-6)
- limonene oxide (CAS registry number: 1195-92-2 etc.)
- α-terpineol (CAS registry number: 98-55-5)
- a compound represented by the formula (II):

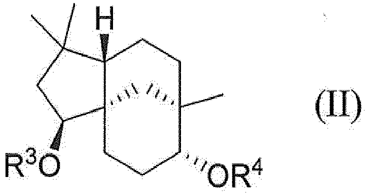

wherein R³ and R⁴ are each independently a hydrogen atom, an acyl group having 1 - 18 carbon atoms or an alkyl group having 1 - 6 carbon atoms
- a compound represented by the formula (III):

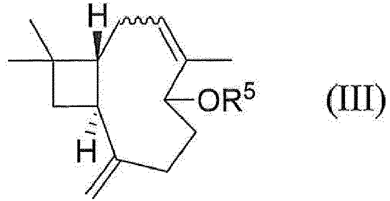

wherein R⁵ is a hydrogen atom, an acyl group having 1 - 6 carbon atoms or an alkyl group having 1 - 6 carbon atoms
- a compound represented by the formula (IV):

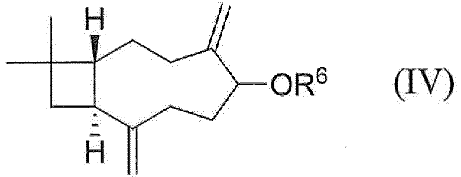

wherein R⁶ is a hydrogen atom, an acyl group having 1 - 6 carbon atoms, or an alkyl group having 1 - 6 carbon atoms
- a compound represented by the formula (V):

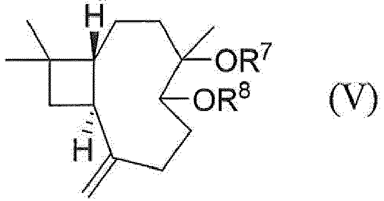

wherein R⁷ and R⁸ are each independently a hydrogen atom, an acyl group having 1 - 6 carbon atoms, or an alkyl group having 1 - 6 carbon atoms
- (1S,6S,9R)-6,10,10-trimethyl-2-methylenebicyclo[7.2.0]undecan-5-one (CAS registry number: 68263-68-3):

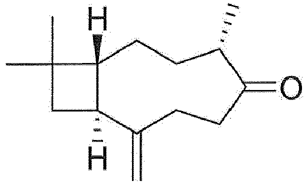

- (1S,6R,9R)-6,10,10-trimethyl-2-methylenebicyclo[7.2.0]undecan-5-one (CAS registry number: 68330-80-3):

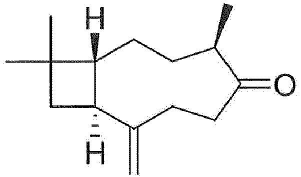

- (1R,4R,8S)-4,10,10-trimethyl-7-methylenebicyclo[6.2.0]decane-4-carboxaldehyde (CAS registry number: 151121-36-7):

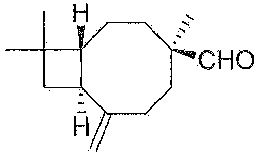

- (1R,4S,8S)-4,10,10-trimethyl-7-methylenebicyclo[6.2.0]decane-4-carboxaldehyde (CAS registry number: 2073828-10-9):

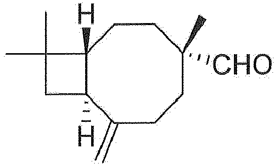

- (1S,2S,5R,9S)-1,4,4,8-tetramethyl-12-oxatricyclo[7.2.1.0^{2,5}]dodec-7-ene (CAS registry number: 1039439-81-0):

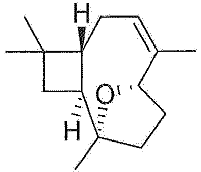

- (1R,2S,5R,8R,9R)-1,4,4,8-tetramethyl-12-oxatricyclo[6.3.1.0^{2,5}]dodecan-9-ol (CAS registry number: 1040220-66-3):

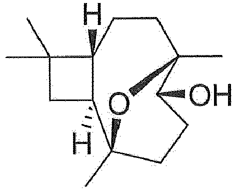

- (1R,2S,5R,8R,9S)-1,4,4,8-tetramethyl-12-oxatricyclo[6.3.1.0^{2,5}]dodecan-9-ol (CAS registry number: 103189-32-8):

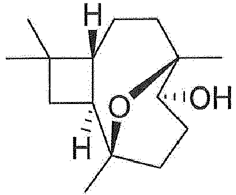

- [1R-(1α,2α,5β,8β,9α)]-4,4,8-trimethyl-tricyclo[6.3.1.0^{2,5}]dodecane-1,9-diol (CAS registry number: 155485-75-9):

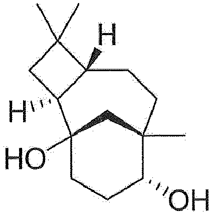

(a compound represented by the formula (II))

Each group of the formula (II) is explained below.

R³ and R⁴ in the formula (II) are each independently a hydrogen atom, an acyl group having 1 - 18 carbon atoms or an alkyl group having 1 - 6 carbon atoms.

The "acyl group having 1 - 18 carbon atoms" for R³ or R⁴ may be linear or optionally has a branch. The acyl group may be saturated or may contain an unsaturated bond. The number of carbon atoms contained in the acyl group is preferably 1 - 5. Specific examples of the acyl group having 1 - 18 carbon atoms include formyl group, acetyl group, propionyl group, butyryl group, isobutyryl group, valeryl group, isovaleryl group, pivaloyl group, hexanoyl group, caproyl group, lauroyl group, myristoyl group, palmitoyl group, stearoyl group and the like. Preferred is formyl group, acetyl group, propionyl group, butyryl group, isobutyryl group, or isovaleryl group, more preferred is formyl group, acetyl group, or isovaleryl group, and particularly preferred is acetyl group or isovaleryl group.

The "alkyl group having 1 - 6 carbon atoms" for R³ or R⁴ may be linear or optionally has a branch, and is preferably linear. The number of carbon atoms contained in the alkyl group is preferably 1 - 4. Specific examples of the alkyl group having 1 - 6 carbon atoms include methyl group, ethyl group, propyl group, butyl group, pentyl group, hexyl group and the like, preferably methyl group, ethyl group, propyl group, butyl group, more preferably methyl group, ethyl group, particularly preferably methyl group.

R³ in the formula (II) is preferably a hydrogen atom, an acyl group having 1 - 18 carbon atoms or an alkyl group having 1 - 6 carbon atoms, more preferably, a hydrogen atom, an acyl group having 1 - 5 carbon atoms, or an alkyl group having 1 - 4 carbon atoms, particularly preferably a hydrogen atom, an acetyl group, an isovaleryl group or a methyl group.

R⁴ in the formula (II) is preferably a hydrogen atom or an acyl group having 1 - 18 carbon atoms, more preferably a hydrogen atom or an acyl group having 1 - 5 carbon atoms, particularly preferably a hydrogen atom or an acetyl group.

Preferred compound (II) is shown below.

### [Compound (IIA)]

Compound (II) wherein
R³ is a hydrogen atom, an acyl group having 1 - 18 carbon atoms or an alkyl group having 1 - 6 carbon atoms; and
R⁴ is a hydrogen atom or an acyl group having 1 - 18 carbon atoms.

### [Compound (IIB)]

Compound (II) wherein
R³ is a hydrogen atom, an acyl group having 1 - 5 carbon atoms or an alkyl group having 1 - 4 carbon atoms; and
R⁴ is a hydrogen atom or an acyl group having 1 - 5 carbon atoms.

### [Compound (IIC)]

Compound (II) wherein
R³ is a hydrogen atom, an acetyl group, an isovaleryl group or a methyl group; and
R⁴ is a hydrogen atom or an acetyl group.

Specific examples of preferred compound (II) include clovanediol (CAS registry number: 2649-64-1):

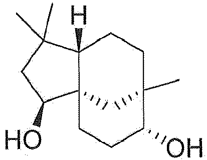

clovanediol-3-monoacetate (CAS registry number: 127156-28-9):

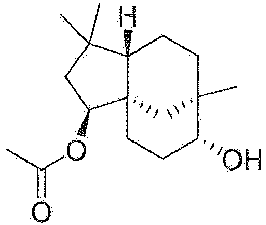

clovanediol diacetate (CAS registry number: 2649-68-5):

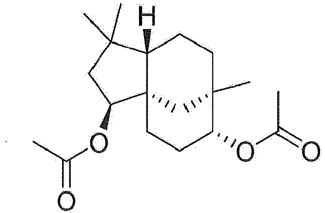

clovanediol-3-monoisovalerate (CAS registry number: 1891070-50-0):

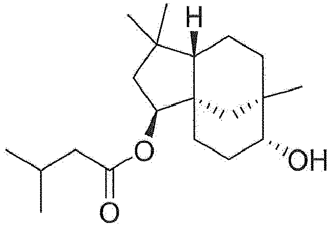

2-methoxyclovanol (CAS registry number: 127156-29-0):

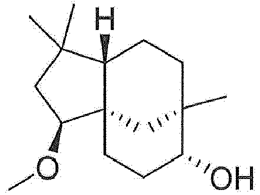

and the like.

(a compound represented by the formula (III))

Each group of the formula (III) is explained below.

R⁵ in the formula (III) is a hydrogen atom, an acyl group having 1 - 6 carbon atoms or an alkyl group having 1 - 6 carbon atoms.

The "acyl group having 1 - 6 carbon atoms" for R⁵ may be linear or optionally has a branch, and is preferably linear. The acyl group may be saturated or may contain an unsaturated bond. The number of carbon atoms contained in the acyl group is preferably 1 - 4. Specific examples of the acyl group having 1 - 6 carbon atoms include formyl group, acetyl group, propionyl group, butyryl group, isobutyryl group, valeryl group, isovaleryl group, pivaloyl group, hexanoyl group and the like. Preferred is formyl group, acetyl group, propionyl group, butyryl group, or isobutyryl group, more preferred is formyl group, acetyl group, or propionyl group, and particularly preferred is acetyl group.

The "alkyl group having 1 - 6 carbon atoms" for R⁵ may be linear or optionally has a branch, and is preferably linear. The number of carbon atoms contained in the alkyl group is preferably 1 - 4. Specific examples of the alkyl group having 1 - 6 carbon atoms include methyl group, ethyl group, propyl group, butyl group, pentyl group, hexyl group and the like. Preferred is methyl group, ethyl group, propyl group, or butyl group, more preferred is methyl group or ethyl group, particularly preferred is methyl group.

R⁵ in the formula (III) is preferably a hydrogen atom or an acyl group having 1 - 6 carbon atoms, more preferably, a hydrogen atom or an acyl group having 1 - 4 carbon atoms, particularly preferably a hydrogen atom or an acetyl group.

The wavy line in the formula (III) means any one or a mixture of both of the cis-trans isomers.

Specific examples of preferred compound (III) include caryophyllenol II (CAS registry number: 32214-89-4):

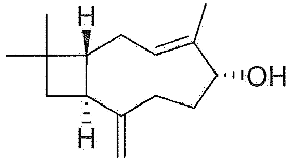

caryophyllenol I (CAS registry number: 32214-88-3):

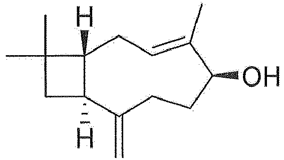

(1R,3Z,5R,9S)-4,11,11-trimethyl-8-methylenebicyclo[7.2.0]undec-3-en-5-ol (CAS registry number: 19431-76-6) :

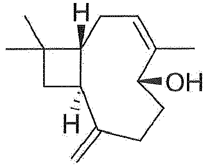

(1R,3Z,5S,9S)-4,11,11-trimethyl-8-methylenebicyclo[7.2.0]undec-3-en-5-ol (CAS registry number: 19431-77-7) :

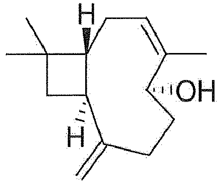

(1R,3EZ,5R,9S)-4,11,11-trimethyl-8-methylenebicyclo[7.2.0]undec-3-en-5-ol-5-acetate

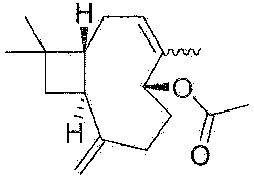

and the like.

(a compound represented by the formula (IV))

Each group of the formula (IV) is explained below.

R⁶ in the formula (IV) is a hydrogen atom, an acyl group having 1 - 6 carbon atoms or an alkyl group having 1 - 6 carbon atoms.

The "acyl group having 1 - 6 carbon atoms" for R⁶ may be linear or optionally has a branch, and is preferably linear. The acyl group may be saturated or may contain an unsaturated bond. The number of carbon atoms contained in the acyl group is preferably 1 - 4. Specific examples of the acyl group having 1 - 6 carbon atoms include formyl group, acetyl group, propionyl group, butyryl group, isobutyryl group, valeryl group, isovaleryl group, pivaloyl group, hexanoyl group and the like. Preferred is formyl group, acetyl group, propionyl group, butyryl group, or isobutyryl group, more preferred is formyl group, acetyl group, or propionyl group, and particularly preferred is acetyl group.

The "alkyl group having 1 - 6 carbon atoms" for R⁶ may be linear or optionally has a branch, and is preferably linear. The number of carbon atoms contained in the alkyl group is preferably 1 - 4. Specific examples of the alkyl group having 1 - 6 carbon atoms include methyl group, ethyl group, propyl group, butyl group, pentyl group, hexyl group and the like. Preferred is methyl group, ethyl group, propyl group, or butyl group, more preferred is methyl group or ethyl group, particularly preferred is methyl group.

R⁶ in the formula (IV) is preferably a hydrogen atom or an acyl group having 1 - 6 carbon atoms, more preferably, a hydrogen atom or an acyl group having 1 - 4 carbon atoms, particularly preferably a hydrogen atom or an acetyl group.

Specific examples of preferred compound (IV) include caryophylladienol II (CAS registry number: 19431-79-9):

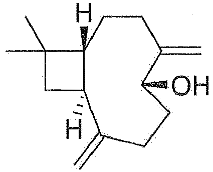

caryophylladienol I (CAS registry number: 19431-80-2):

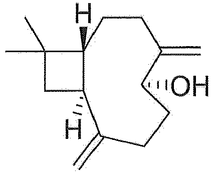

(1S,5R,9R)-10,10-dimethyl-2,6-bis methylene-bicyclo[7.2.0]undecan-5-ol acetate (CAS registry number: 99805-59-1) :

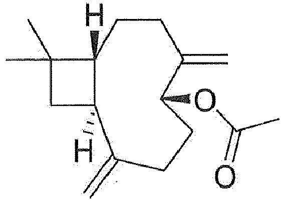

(1S,5S,9R)-10,10-dimethyl-2,6-bis methylene-bicyclo[7.2.0]undecan-5-ol acetate (CAS registry number: 99881-55-7) :

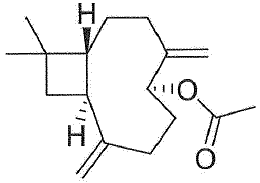

and the like.

(a compound represented by the formula (V))

Each group of the formula (V) is explained below.

R⁷ and R⁸ in the formula (V) are each independently a hydrogen atom, an acyl group having 1 - 6 carbon atoms or an alkyl group having 1 - 6 carbon atoms.

The "acyl group having 1 - 6 carbon atoms" for R⁷ or R⁸ may be linear or optionally has a branch, and is preferably linear. The acyl group may be saturated or may contain an unsaturated bond. The number of carbon atoms contained in the acyl group is preferably 1 - 4. Specific examples of the acyl group having 1 - 6 carbon atoms include formyl group, acetyl group, propionyl group, butyryl group, isobutyryl group, valeryl group, isovaleryl group, pivaloyl group, hexanoyl group and the like. Preferred is formyl group, acetyl group, propionyl group, butyryl group, or isobutyryl group, more preferred is formyl group, acetyl group, or propionyl group, and particularly preferred is acetyl group.

The "alkyl group having 1 - 6 carbon atoms" for R⁷ or R⁸ may be linear or optionally has a branch, and is preferably linear. The number of carbon atoms contained in the alkyl group is preferably 1 - 4. Specific examples of the alkyl group having 1 - 6 carbon atoms include methyl group, ethyl group, propyl group, butyl group, pentyl group, hexyl group and the like. Preferred is methyl group, ethyl group, propyl group, or butyl group, more preferred is methyl group or ethyl group, particularly preferred is methyl group.

R⁷ in the formula (V) is preferably a hydrogen atom or an alkyl group having 1 - 6 carbon atoms, more preferably, a hydrogen atom or an alkyl group having 1 - 4 carbon atoms, particularly preferably a hydrogen atom or a methyl group.

R⁸ in the formula (V) is preferably a hydrogen atom.

Preferred compound (V) is shown below.

### [Compound (VA)]

Compound (V) wherein
R⁷ is a hydrogen atom or an alkyl group having 1 - 6 carbon atoms; and
R⁸ is a hydrogen atom.

### [Compound (VB)]

Compound (V) wherein
R⁷ is a hydrogen atom or an alkyl group having 1 - 4 carbon atoms; and
R⁸ is a hydrogen atom.

### [Compound (VC)]

Compound (V) wherein
R⁷ is a hydrogen atom or a methyl group; and
R⁸ is a hydrogen atom.

Specific examples of preferred compound (V) include (1R,4R,5R,9S)-4,11,11-trimethyl-8-methylenebicyclo[7.2.0]undecane-4,5-diol (CAS registry number: 187935-72-4) :

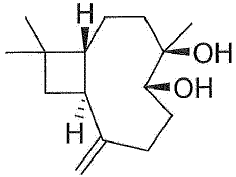

(1R,4S,5R,9S)-4,11,11-trimethyl-8-methylenebicyclo[7.2.0]undecane-4,5-diol (CAS registry number: 151029-00-4) :

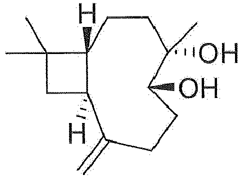

(1S,5R,6R,9R)-6-methoxy-6,10,10-trimethyl-2-methylene-bicyclo[7.2.0]undecan-5-ol (CAS registry number: 178939-28-1):

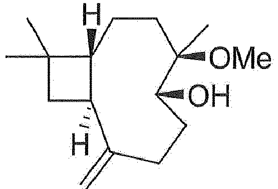

(1S,5R,6S,9R)-6-methoxy-6,10,10-trimethyl-2-methylene-bicyclo[7.2.0]undecan-5-ol (CAS registry number: 187935-73-5):

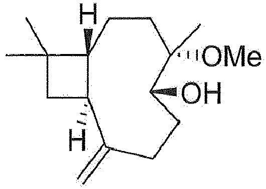

and the like.

Component (C) is preferably an oxygen-containing terpene derivative such as β-caryophyllene oxide, (1R,3Z,5R,9S)-4,11,11-trimethyl-8-methylenebicyclo[7.2.0]undec-3-en-5-ol, (1R,4R,5R,9S)-4,11,11-trimethyl-8-methylenebicyclo[7.2.0]undecane-4,5-diol, α-pinene oxide, limonene oxide, α-terpineolclovanediol, clovanediol-3-monoacetate, clovanediol diacetate, clovanediol-3-monoisovalerate or the like.

The production method of component (C) is not particularly limited, and the component can be produced by a method known per se or a method analogous thereto, and may be a synthetic product or an extracted product. Specifically, component (C) can be produced by the method described in the below-mentioned Example. Commercially available products can also be used as component (C) and are preferable because they are convenient.

In one embodiment, when the mouth-coating feel enhancer of the present invention contains component (C), the content of component (C) in the mouth-coating feel enhancer of the present invention is preferably not less than 0.00001 wt%, more preferably not less than 0.0001 wt%, particularly preferably not less than 0.001 wt%, with respect to the mouth-coating feel enhancer of the present invention. The content is preferably not more than 100 wt%, more preferably not more than 99 wt%, particularly preferably not more than 90 wt%, with respect to the mouth-coating feel enhancer of the present invention.

The form of the mouth-coating feel enhancer of the present invention is not particularly limited, and examples thereof include solid (including powder, granule, etc.), liquid (including slurry, etc.), gel, paste, and the like.

In one embodiment, the mouth-coating feel enhancer of the present invention may be composed only of the component (A) heated substance (and the medium used for heating (A) component, etc.) or only of the component (B) heated substance (and the medium used for heating (B) component, etc.), or only of the component (A) heated substance (and the medium used for heating (A) component, etc.) and the component (B) heated substance (and the medium used for heating (B) component, etc.). In addition to these heated substances, a conventional base according to the form and the like of the mouth-coating feel enhancer of the present invention may be further contained.

In another embodiment, the mouth-coating feel enhancer of the present invention may be composed only of component (C). In addition thereto, a conventional base according to the form and the like of the mouth-coating feel enhancer of the present invention may be further contained.

When the mouth-coating feel enhancer of the present invention is in the form of liquid, examples of the base include water, ethanol, glycerin, propylene glycol and the like.

When the mouth-coating feel enhancer of the present invention is in the form of a solid, examples of the base include various saccharides such as starch, dextrin, cyclodextrin, sucrose, glucose and the like, protein, peptide, salt, solid fat, silicon dioxide, mixtures thereof, yeast fungus and various powder extracts and the like.

The mouth-coating feel enhancer of the present invention may further contain, for example, excipient, pH adjuster, antioxidant, thickening stabilizer, sweetener (e.g., sugars, etc.), acidulant, spices, colorant and the like, in addition to the component (A) heated substance and/or the component (B) heated substance, or component (C), as long as the purpose of the present invention is not impaired.

The mouth-coating feel enhancer of the present invention may be produced by a method known per se. The mouth-coating feel enhancer of the present invention may undergo, for example, a concentration treatment, a dry treatment, a decolorization treatment and the like, each alone or in combination.

The component (A) heated substance and/or the component (B) heated substance that may be contained in the mouth-coating feel enhancer of the present invention are substances obtained by heating component (A) and/or component (B) as mentioned above. Thus, the production method of the mouth-coating feel enhancer of the present invention may contain heating component (A) and/or component (B). In the production method of the mouth-coating feel enhancer of the present invention, the heating method of component (A) and component (B) is the same as the heating method of the aforementioned component (A) and component (B), and preferred embodiments thereof are also the same. In addition, each heating temperature and heating time may also be set in the same manner as described above.

In one embodiment, when the production method of the mouth-coating feel enhancer of the present invention includes heating component (A) and component (B), and when the amount of component (A1) in component (A) to be heated is A1⁴ (weight) and the amount of component (B) to be heated is B⁴ (weight), the ratio of B⁴ and A1⁴ (B⁴:A1⁴) may be set to fall within the same range as the ratio of the aforementioned B¹ and A1¹ (B¹:A1¹), and preferable ranges are also the same.

When the production method of the mouth-coating feel enhancer of the present invention includes heating component (A) and component (B), the component (A) and component (B) may be separately heated, or may be heated together. As a method of heating component (A) and component (B) together, a method including dissolving or dispersing both component (A) and component (B) in one medium, and then heating same, and the like can be mentioned.

The mouth-coating feel enhancer of the present invention can be used by adding to foods. By adding the mouth-coating feel enhancer of the present invention to a food, the mouth-coating feel of the food can be enhanced.

In the present invention, the "mouth-coating feel" is the sensation that the oral cavity is covered with a thin film, the sensation that the oral cavity is covered with oil or fat, or an oil or fat-like film, a smooth sensation that is felt in the oral cavity, and an oil or fat-like rich sensation (thickness) that spreads throughout the oral cavity, each of which is noticeably felt when a oil or fat, or a solution or food containing oil or fat is contained in the oral cavity. The "enhancement" of the mouth-coating feel means that at least one of the above-mentioned sensations is enhanced. The presence or absence and the degree of the mouth-coating feel can be evaluated by sensory evaluation by an expert panel.

In the present invention, the "food" is a concept that broadly includes those that can be ingested orally, and also includes, for example, beverages, seasonings, food additives, and the like.

The food to which the mouth-coating feel enhancer of the present invention is added may be originally provided (sold, distributed) in a state suitable for eating, or may be provided in a state requiring predetermined processing or cooking to reach a state suitable for eating. For example, the food to which the mouth-coating feel enhancer of the present invention may be added may be provided as a concentrate or the like that needs to be diluted with water or the like to reach a state suitable for eating.

The food to which the mouth-coating feel enhancer of the present invention is added is not particularly limited as long as it may be expected to show a mouth-coating feel. For example, foods containing oil or fat such as oil and fat (e.g., vegetable oil and fat, animal oil and fat, etc.), mayonnaise, soup, dressing, curry fried food, snacks, chocolate, cookie, bread, milk and dairy products containing oil or fat (e.g., raw milk, cow's milk, low-fat milk, cream, butter, margarine, fat spread, cheese, yogurt, etc.), beverages containing oil or fat, noodles containing oil or fat (e.g., fried noodles etc.) and the like; and foods not containing oil or fat such as oil-free dressing, milk and dairy products not containing oil or fat (fat-free milk, skim milk powder, fat-free yogurt), beverages not containing oil or fat (e.g., coffee drinks, etc.), noodles not containing oil or fat (e.g., non-fried noodles, raw noodles, pasta, dough sheet) and the like can be mentioned. As used herein, the food containing oil or fat may contain only oil or fat, that is, the food containing oil or fat may be the oil or fat itself.

Since the mouth-coating feel enhancer of the present invention can remarkably enhance the mouth-coating feel felt when oil or fat is contained in the oral cavity, it is preferably used by adding to a food containing oil or fat. That is, the mouth-coating feel enhancer of the present invention is preferably for a food containing oil or fat.

The oil or fat contained in a food containing oil or fat to which the mouth-coating feel enhancer of the present invention can be applied is not particularly limited as long as it is edible. Examples include vegetable oils and fats such as rape seed oil, corn oil, soybean oil, sesame oil, rice oil, bran oil, safflower oil, coconut oil, palm oil, palm kernel oil, sunflower oil, perilla oil, perilla oil, flaxseed oil, olive oil, grapeseed oil, neutral fatty acid oil and the like; animal oils and fats such as lard, beef tallow, chicken oil, mutton tallow, horse fat, fish oil, whale oil, butterfat and the like, and the like. In addition, transesterified oil obtained by transesterifying the aforementioned fats and oils, hydrogenated oil obtained by hydrogenating the aforementioned fats and oils, and the like can also be used. The aforementioned oils and fats may be refined (e.g., salad oil, etc.). These oils and fats may be used alone, or two or more kinds thereof may be used in combination.

The content of the oil or fat in a food containing oil or fat for which the mouth-coating feel enhancer of the present invention can be used is not particularly limited. It is preferably 0.1 - 100 wt%, more preferably 0.5 - 100 wt%, because the effect can be more clearly exhibited.

The method and the conditions for adding the mouth-coating feel enhancer of the present invention to a food are not particularly limited and can be appropriately determined according to the form of the mouth-coating feel enhancer of the present invention, the kind of the food, and the like. The timing of addition of the mouth-coating feel enhancer of the present invention to a food is not particularly limited and it may be added at any time point. For example, during the production of food, after the completion of food (immediately before eating food, during eating food, etc.) and the like can be mentioned. The mouth-coating feel enhancer of the present invention may be added to a raw material before production of a food.

In one embodiment, when the mouth-coating feel enhancer of the present invention contains component (C), the mouth-coating feel enhancer of the present invention is added to a food such that the amount of component (C) to be added to the food is preferably not less than 0.0001 weight ppm, more preferably not less than 0.0005 weight ppm, particularly preferably not less than 0.001 weight ppm, with respect to the food. In this case, the mouth-coating feel enhancer of the present invention is added to a food such that the amount of component (C) to be added to the food is preferably not more than 100 weight ppm, more preferably not more than 50 weight ppm, particularly preferably not more than 10 weight ppm, with respect to the food.

### <mouth-coating feel enhancing method>

The present invention also provides a method for enhancing a mouth-coating feel, including adding a component (A) heated substance and/or a component (B) heated substance.

In addition, the present invention also provides a method for enhancing a mouth-coating feel, including adding component (C) .

In the present specification, these methods are sometimes collectively referred to as "the mouth-coating feel enhancing method of the present invention".

The component (A) heated substance and/or the component (B) heated substance that may be used in the mouth-coating feel enhancing method of the present invention are similar to the aforementioned component (A) heated substance and/or the component (B) heated substance that may be contained in the mouth-coating feel enhancer of the present invention, and preferred embodiments thereof are also the same. In addition, they may be produced in the same manner as in the aforementioned method.

The component (C) that may be used in the mouth-coating feel enhancing method of the present invention is similar to the aforementioned component (C) that may be contained in the mouth-coating feel enhancer of the present invention, and preferred embodiments thereof are also the same. In addition, it may be produced in the same manner as in the aforementioned method.

In one embodiment, when the mouth-coating feel enhancing method of the present invention includes adding the component (A) heated substance and the component (B) heated substance, and when the amount of component (A1) in component (A) which is heated to obtain the heated substance is A1² (weight) and the amount of component (B) which is heated to obtain the heated substance is B² (weight), the ratio of B² and A1² (B²:A1²) is set to fall within the same range as the aforementioned ratio of B¹ and A1¹ (B¹:A1¹), and the preferable range is also the same.

The component (A) heated substance and/or the component (B) heated substance that can be used in the mouth-coating feel enhancing method of the present invention are respectively obtained by heating component (A) and/or component (B), as described above. Therefore, the mouth-coating feel enhancing method of the present invention may include heating component (A) and/or component (B), and adding the obtained component (A) heated substance and/or component (B) heated substance.

The mouth-coating feel enhancing method of the present invention can enhance the mouth-coating feel of a food. As the food whose mouth-coating feel can be enhanced by the mouth-coating feel enhancing method of the present invention, those similar to the examples of the foods to which the mouth-coating feel enhancer of the present invention can be added can be mentioned, and the preferred ones are also the same.

The mouth-coating feel enhancing method of the present invention can remarkably enhance the mouth-coating feel felt when oil or fat is contained in the oral cavity. Thus, it is preferably a method for enhancing the mouth-coating feel of a food containing oil or fat.

In the mouth-coating feel enhancing method of the present invention, the method and the conditions for adding the component (A) heated substance and/or component (B) heated substance are not particularly limited and can be appropriately determined according to the kind of the food, and the like. The timing of addition of the component (A) heated substance and/or component (B) heated substance is not particularly limited and they may be added at any time point. For example, during the production of a food, after the completion of a food (immediately before eating a food, during eating a food, etc.) and the like can be mentioned. The component (A) heated substance and/or component (B) heated substance may be added to a raw material before production of a food.

In the mouth-coating feel enhancing method of the present invention, the method and the conditions for adding component (C) are not particularly limited and can be appropriately determined according to the kind of the food, and the like. The timing of addition of component (C) is not particularly limited and it may be added at any time point. For example, during the production of a food, after the completion of a food (immediately before eating a food, during eating a food, etc.) and the like can be mentioned. The component (C) may be added to a raw material before production of a food.

In the mouth-coating feel enhancing method of the present invention, component (C) is added such that the amount of component (C) to be added to a food is the same as the amount of component (C) (mentioned above) to be added to a food when the mouth-coating feel enhancer of the present invention is added to the food.

### <production method of food>

The present invention also provides a method for producing a food, including adding a component (A) heated substance and/or a component (B) heated substance.

In addition, the present invention also provides a method for producing a food, including adding component (C).

In the present specification, these methods are sometimes collectively referred to as "the production method of the present invention".

The component (A) heated substance and/or the component (B) heated substance that may be used in the production method of the present invention are similar to the aforementioned component (A) heated substance and/or the component (B) heated substance that may be contained in the mouth-coating feel enhancer of the present invention, and preferred embodiments thereof are also the same. In addition, they may be produced in the same manner as in the aforementioned method.

The component (C) that may be used in the production method of the present invention is similar to the aforementioned component (C) that may be contained in the mouth-coating feel enhancer of the present invention, and preferred embodiments thereof are also the same. In addition, it may be produced in the same manner as in the aforementioned method.

when the production method of the present invention includes adding a component (A) heated substance and a component (B) heated substance, and when the amount of component (A1) in component (A) which is heated to obtain the heated substance is A1³ (weight) and the amount of component (B) which is heated to obtain the heated substance is B³ (weight), the ratio of B³ and A1³ (B³:A1³) may be set to fall within the same range as the ratio of the aforementioned B¹ and A1¹ (B¹:A1¹), and preferable ranges are also the same.

The component (A) heated substance and/or the component (B) heated substance that may be used in the production method of the present invention are substances obtained by respectively heating the component (A) and/or component (B) as mentioned above. Therefore, the production method of the present invention may include heating the component (A) and/or component (B). In addition, the production method of the present invention may include adding the obtained component (A) heated substance and/or component (B) heated substance.

In the production method of the present invention, the method and the conditions for adding the component (A) heated substance and/or component (B) heated substance are not particularly limited and can be appropriately determined according to the kind of the food to be produced, and the like. The timing of addition of the component (A) heated substance and/or component (B) heated substance is not particularly limited and they may be added at any time point from the start to the completion of the production of food. The component (A) heated substance and/or component (B) heated substance may be added to a raw material before production of a food.

In the production method of the present invention, the method and the conditions for adding component (C) are not particularly limited and can be appropriately determined according to the kind of the food to be produced, and the like. The timing of addition of component (C) is not particularly limited and it may be added at any time point from the start to the completion of the production of food. The component (C) may be added to a raw material before production of a food.

In the production method of the present invention, component (C) is added such that the amount of component (C) to be added to a food is the same as the amount of component (C) (mentioned above) to be added to a food when the mouth-coating feel enhancer of the present invention is added to the food.

The production method of the present invention may include as appropriate a processing step and a cooking step conventionally used in food production, according to the kind and the like of the food to be produced, as well as addition of the component (A) heated substance and/or component (B) heated substance, or component (C).

According to the production method of the present invention, a food containing a component (A) heated substance and/or a component (B) heated substance, or component (C) can be produced and, preferably, a food containing a component (A) heated substance and/or a component (B) heated substance, or component (C) and having an enhanced mouth-coating feel can be produced. As the food that can be produced by the production method of the present invention, those similar to the examples of the foods to which the mouth-coating feel enhancer of the present invention can be added can be mentioned, and the preferred ones are also the same.

The production method of the present invention is preferably a method for producing a food containing oil or fat, more preferably, a method for producing a food containing oil or fat and having an enhanced mouth-coating feel.

### <coffee-roasting sensation enhancer>

In one embodiment, one of the characteristics of the coffee-roasting sensation enhancer of the present invention is that it contains a heated substance of component (A) and/or a heated substance of component (B) as the active ingredient.

The component (A) heated substance and/or component (B) heated substance that may be contained in the coffee-roasting sensation enhancer of the present invention are similar to the aforementioned component (A) heated substance and/or component (B) heated substance that may be contained in the mouth-coating feel enhancer of the present invention, and preferred embodiments are also the same. The production thereof can also be performed in the same manner as the aforementioned method.

In another embodiment, one of the characteristics of the coffee-roasting sensation enhancer of the present invention is that it contains component (C) as the active ingredient.

The component (C) that may be contained in the coffee-roasting sensation enhancer of the present invention is similar to the aforementioned component (C) that may be contained in the mouth-coating feel enhancer of the present invention, and preferred embodiments are also the same. The production thereof can also be performed in the same manner as the aforementioned method.

When the coffee-roasting sensation enhancer of the present invention contains a component (A) heated substance, the heating temperature of component (A) is preferably 80 - 150°C, more preferably 80 - 130°C, particularly preferably 85 - 120°C, because the coffee-roasting sensation can be effectively enhanced. In this case, the heating time of component (A) is preferably 5 - 150 min, more preferably 10 - 120 min, particularly preferably 20 - 100 min, because the coffee-roasting sensation can be effectively enhanced.

When the coffee-roasting sensation enhancer of the present invention contains a component (B) heated substance, the heating temperature of component (B) is preferably 70 - 150°C, more preferably 80 - 130°C, particularly preferably 85 - 120°C, because the coffee-roasting sensation can be effectively enhanced. In this case, the heating time of component (B) is preferably 5 - 150 min, more preferably 10 - 120 min, particularly preferably 20 - 100 min, because the coffee-roasting sensation can be effectively enhanced.

The form of the coffee-roasting sensation enhancer of the present invention, the amount of the component (A) heated substance and/or component (B) heated substance that may be contained in the coffee-roasting sensation enhancer of the present invention, and the base that may be contained in the coffee-roasting sensation enhancer of the present invention are the same as those in the mouth-coating feel enhancer of the present invention.

When the coffee-roasting sensation enhancer of the present invention contains component (C), the content of component (C) and the amount of component (C) to be added to a food are both the same as those in the mouth-coating feel enhancer of the present invention.

In one embodiment, when the coffee-roasting sensation enhancer of the present invention contains the component (A) heated substance and the component (B) heated substance, and when the amount of component (A1) in component (A) which is heated to obtain the component (A) heated substance is A1¹ (weight) and the amount of component (B) which is heated to obtain the component (B) heated substance is B¹ (weight), the ratio of B¹ and A1¹ (B¹:A1¹) is preferably within the range of 1:1 - 10, more preferably 1:1 - 8, particularly preferably 1:1 - 6, because the coffee-roasting sensation can be effectively enhanced. As used herein, the weight unit of A1¹ and B¹ is the same.

The production of the coffee-roasting sensation enhancer of the present invention can be performed in the same manner as in the production of the mouth-coating feel enhancer of the present invention, and preferred embodiments are also the same.

In one embodiment, when the production method of the mouth-coating feel enhancing method of the present invention includes heating component (A) and component (B), and when the amount of component (A1) in component (A) to be heated is A1⁴ (weight) and the amount of component (B) to be heated is B⁴ (weight), the ratio of B⁴ and A1⁴ (B⁴:A1⁴) is preferably within the range of 1:1 - 10, more preferably 1:1 - 8, particularly preferably 1:1 - 6, because the coffee-roasting sensation can be effectively enhanced. As used herein, the weight units of A1⁴ and B⁴ are the same.

The coffee-roasting sensation enhancer of the present invention can be used by adding to coffee drinks. By adding the coffee-roasting sensation enhancer of the present invention to coffee drinks, the roasting sensation of the coffee drinks can be enhanced.

In the present invention, the "coffee-roasting sensation" refers to a coffee-like fragrant aroma and a bitter taste. The "enhancement" of the coffee-roasting sensation means that at least one of the coffee-like fragrant aroma and the bitter taste is enhanced. The presence or absence and the degree of the coffee-roasting sensation can be evaluated by sensory evaluation by an expert panel.

In the present invention, the "coffee drink" means a beverage that uses a component derived from coffee beans as one of the raw materials. Examples of the component derived from coffee beans include a liquid extracted with water or hot water from ground roasted coffee beans (coffee extract), an instant coffee powder obtained by a dry treatment and the like of a coffee extract, a commercially available instant coffee powder, a commercially available coffee potion (liquid coffee concentrate) and the like. The coffee drink may contain a component other than the component derived from coffee beans (e.g., milk, dairy product, sweetener etc.).

The coffee-roasting sensation enhancer of the present invention can also enhance a milk sensation. In the present invention, the "milk sensation" refers to a milk-like aroma and sweetness. The "enhancement" of the milk sensation means that at least one of the milk-like aroma and sweetness is enhanced. The presence or absence and the degree of the milk sensation can be evaluated by sensory evaluation by an expert panel.

The method and the conditions for adding the coffee-roasting sensation enhancer of the present invention to a coffee drink are not particularly limited and can be appropriately determined according to the form of the coffee-roasting sensation of the present invention, and the like. The timing of addition of the coffee-roasting sensation enhancer of the present invention to a coffee drink is not particularly limited and it may be added at any time point. For example, during the production of a coffee drink, after the completion of a coffee drink (immediately before drinking a coffee drink, during drinking a coffee drink, etc.) and the like can be mentioned.

### <coffee-roasting sensation enhancing method>

The present invention also provides a method for enhancing a coffee-roasting sensation, including adding a component (A) heated substance and/or a component (B) heated substance.

In addition, the present invention also provides a method for enhancing a coffee-roasting sensation, including adding component (C) .

In the present specification, these methods are sometimes collectively referred to as "the coffee-roasting sensation enhancing method of the present invention".

The component (A) heated substance and/or the component (B) heated substance that may be used in the coffee-roasting sensation enhancing method of the present invention are similar to the aforementioned component (A) heated substance and/or the component (B) heated substance that may be contained in the mouth-coating feel enhancer or coffee-roasting sensation enhancer of the present invention, and preferred embodiments thereof are also the same. In addition, they may be produced in the same manner as in the aforementioned method.

The component (C) that may be used in the coffee-roasting sensation enhancing method of the present invention is similar to the aforementioned component (C) that may be contained in the mouth-coating feel enhancer or coffee-roasting sensation enhancer of the present invention, and preferred embodiments thereof are also the same. In addition, it may be produced in the same manner as in the aforementioned method.

Unless otherwise specified, the coffee-roasting sensation enhancing method of the present invention can be performed in the same manner as the mouth-coating feel enhancing method of the present invention. The coffee-roasting sensation enhancing method of the present invention may include heating component (A) and/or component (B), and adding the obtained component (A) heated substance and/or component (B) heated substance, as in the mouth-coating feel enhancing method of the present invention.

In one embodiment, when the coffee-roasting sensation enhancing method of the present invention includes addition of the component (A) heated substance and the component (B) heated substance, and when the amount of component (A1) in component (A) which is heated to obtain the heated substance is A1² (weight) and the amount of component (B) which is heated to obtain the heated substance is B² (weight), the ratio of B² and A1² (B²:A1²) is preferably within the range of 1:1 - 10, more preferably 1:1 - 8, particularly preferably 1:1 - 6, because the coffee-roasting sensation can be effectively enhanced. As used herein, the weight unit of A1² and B² is the same.

According to the coffee-roasting sensation enhancing method of the present invention, the coffee-roasting sensation of coffee drinks can be enhanced. In addition, a milk sensation of coffee drinks can be enhanced.

In the coffee-roasting sensation enhancing method of the present invention, the timing of addition of the component (A) heated substance and/or component (B) heated substance to a coffee drink is not particularly limited and they may be added at any time point. For example, during the production of a coffee drink, after the completion of a coffee drink (immediately before drinking a coffee drink, during drinking a coffee drink, etc.) and the like can be mentioned. The component (A) heated substance and/or component (B) heated substance may be added to a raw material before production of a coffee drink.

### <production method of coffee drink>

The present invention also provides a method for producing a coffee drink, including adding a component (A) heated substance and/or a component (B) heated substance.

In addition, the present invention also provides a method for producing a coffee drink, including adding component (C).

In the present specification, these methods are sometimes collectively referred to as "the production method of coffee drink of the present invention".

The component (A) heated substance and/or the component (B) heated substance that may be used in the production method of coffee drink of the present invention are similar to the aforementioned component (A) heated substance and/or the component (B) heated substance that may be contained in the mouth-coating feel enhancer or coffee-roasting sensation enhancer of the present invention, and preferred embodiments thereof are also the same. In addition, they may be produced in the same manner as in the aforementioned method.

The component (C) that may be used in the production method of coffee drink of the present invention is similar to the aforementioned component (C) that may be contained in the mouth-coating feel enhancer or coffee-roasting sensation enhancer of the present invention, and preferred embodiments thereof are also the same. In addition, the production thereof can also be performed in the same manner as the aforementioned method.

Unless otherwise specified, the production method of coffee drink of the present invention can be performed in the same manner as the production method of the present invention. The production method of coffee drink of the present invention may include heating component (A) and/or component (B) and adding the obtained component (A) heated substance and/or component (B) heated substance, like the production method of the present invention.

In one embodiment, when the production method of coffee drink of the present invention includes adding a component (A) heated substance and a component (B) heated substance, and when the amount of component (A1) in component (A) which is heated to obtain the heated substance is A1³ (weight) and the amount of component (B) which is heated to obtain the heated substance is B³ (weight), the ratio of B³ and A1³ (B³:A1³) is preferably within the range of 1:1 - 10, more preferably 1:1 - 8, particularly preferably 1:1 - 6, because the coffee-roasting sensation can be effectively enhanced. As used herein, the weight unit of A1³ and B³ is the same.

According to the production method of coffee drink of the present invention, a coffee drink containing a component (A) heated substance and/or a component (B) heated substance, or component (C) can be produced and, preferably, a coffee drink containing a component (A) heated substance and/or a component (B) heated substance, or component (C) and having an enhanced coffee-roasting sensation can be produced. More preferably, a coffee drink containing a component (A) heated substance and/or a component (B) heated substance, or component (C) and having an enhanced coffee-roasting sensation and milk sensation can be produced.

The present invention is explained in more detail in the following by referring to Examples, but the present invention is not limited at all by these examples. In the present specification, "%" and "ppm" mean "wt%" and "weight ppm" unless otherwise specified.

### [Example]

### (Experimental Example 1)

### <positive control and negative control>

As a positive control, general commercially available mayonnaise (manufactured by Ajinomoto Co., Inc., trade name "Pure Select (registered trade mark) mayonnaise", oil and fat content: 73%) added with non-heated safflower oil (manufactured by Ajinomoto Co., Inc.) (1 wt%) was used.

As a negative control, commercially available mayonnaise (manufactured by Ajinomoto Co., Inc., trade name "Pure Select (registered trade mark) KOKUUMA (registered trade mark) 65% Calorie Cut", oil and fat content: 23%) with a smaller oil and fat content as compared with positive control mayonnaise and added with non-heated safflower oil (manufactured by Ajinomoto Co., Inc.) (1 wt%) was used.

### <evaluation samples 1-1 - 1-4>

β-Caryophyllene, and furfuryl alcohol or furfural (both manufactured by Sigma-Aldrich) were added to and dissolved in safflower oil (manufactured by Ajinomoto Co., Inc.) at each concentration shown in the following Table 1 (β-caryophyllene: 10 ppm with respect to safflower oil, furfuryl alcohol: 100 ppm with respect to safflower oil, furfural: 1 - 100 ppm with respect to safflower oil), and the safflower oil was heated in a water bath (manufactured by TOKYO RIKAKIKAI CO, LTD) at 100°C for 30 min. Each safflower oil after heating (1 wt%) was added to the commercially available mayonnaise used for preparation of the above-mentioned negative control instead of non-heated safflower oil, and the obtained mayonnaise was used as evaluation samples 1-1 - 1-4.

### <sensory evaluation>

For the evaluation of a mouth-coating feel, a panel of 3 experts ate each mayonnaise of positive control, negative control and evaluation sample, and graded the evaluation samples in 0.1 point increments in the range of 0.0 - 5.0 points, with the positive control being 5.0 points and the negative control being 0.0 point.

The results are shown in the following Table 1.

**[Table 1]**

| sample No. | β-caryophyllene (ppm) | furfuryl alcohol (ppm) | furfural (ppm) | evaluation of mouth-coating feel |
|---|---|---|---|---|
| 1-1 | 10 | 100 | | 4.2 |
| 1-2 | 10 | | 1 | 2.8 |
| 1-3 | 10 | | 10 | 4.2 |
| 1-4 | 10 | | 100 | 4.5 |

As is clear from the results of Table 1, the mouth-coating feel of each evaluation sample was effectively enhanced by the component (A) heated substance and/or the component (B) heated substance (specifically, heated substance of β-caryophyllene, furfuryl alcohol and safflower oil, heated substance of β-caryophyllene, furfural and safflower oil).

### (Experimental Example 2)

### <positive control and negative control>

As a positive control, general commercially available mayonnaise (manufactured by Ajinomoto Co., Inc., trade name "Pure Select (registered trade mark) mayonnaise", oil and fat content: 73%) added with non-heated mineral oil (manufactured by KANEDA Co., Ltd.) (1 wt%) was used.

As a negative control, commercially available mayonnaise (manufactured by Ajinomoto Co., Inc., trade name "Pure Select (registered trade mark) KOKUUMA (registered trade mark) 65% Calorie Cut", oil and fat content: 23%) with a smaller oil and fat content as compared with positive control mayonnaise and added with non-heated mineral oil (manufactured by KANEDA Co., Ltd.) (1 wt%) was used.

### <evaluation samples 2-1 - 2-4>

β-caryophyllene, 2-hexenal, and furfuryl alcohol or furfural(both manufactured by Sigma-Aldrich) were added to and dissolved in mineral oil (manufactured by KANEDA Co., Ltd.) at each concentration shown in the following Table 2 (β-caryophyllene: 10 ppm with respect to mineral oil, furfuryl alcohol: 100 ppm with respect to mineral oil, furfural: 1 - 100 ppm with respect to mineral oil, 2-hexenal: 10 ppm with respect to mineral oil), and the mineral oil was heated in a water bath (manufactured by TOKYO RIKAKIKAI CO, LTD) at 100°C for 30 min.

Each mineral oil after heating (1 wt%) was added to the commercially available mayonnaise used for preparation of the above-mentioned negative control instead of non-heated mineral oil, and the obtained mayonnaise was used as evaluation samples 2-1 - 2-4.

### <sensory evaluation>

The evaluation of a mouth-coating feel was performed in the same manner as in Experimental Example 1.

The results are shown in the following Table 2.

**[Table 2]**

| sample No. | β-caryophyllene (ppm) | furfuryl alcohol (ppm) | furfural (ppm) | 2-hexenal | evaluation of mouth-coating feel |
|---|---|---|---|---|---|
| 2-1 | 10 | 100 | | 10 | 4.1 |
| 2-2 | 10 | | 1 | 10 | 3.0 |
| 2-3 | 10 | | 10 | 10 | 4.3 |
| 2-4 | 10 | | 100 | 10 | 4.5 |

As is clear from the results of Table 2, the mouth-coating feel of each evaluation sample was effectively enhanced by the component (A) heated substance and/or the component (B) heated substance (specifically, heated substance of β-caryophyllene, furfuryl alcohol and 2-hexenal, heated substance of β-caryophyllene, furfural and 2-hexenal).

### (Experimental Example 3)

### <positive control and negative control>

As a positive control, general commercially available mayonnaise (manufactured by Ajinomoto Co., Inc., trade name "Pure Select (registered trade mark) mayonnaise", oil and fat content: 73%) added with non-heated safflower oil (manufactured by Ajinomoto Co., Inc.) (0.001 - 1 wt%) was used.

As a negative control, commercially available mayonnaise (manufactured by Ajinomoto Co., Inc., trade name "Pure Select (registered trade mark) KOKUUMA (registered trade mark) 65% Calorie Cut", oil and fat content: 23%) with a smaller oil and fat content as compared with positive control mayonnaise and added with non-heated safflower oil (manufactured by Ajinomoto Co., Inc.) (0.001 - 1 wt%) was used.

### <evaluation samples 3-1 - 3-11>

β-caryophyllene and furfural (both manufactured by Sigma-Aldrich) were added to and dissolved in safflower oil (manufactured by Ajinomoto Co., Inc.) at each concentration shown in the following Table 3 (β-caryophyllene: 10 - 10000 ppm with respect to safflower oil, furfural: 10 - 10000 ppm with respect to safflower oil), and the safflower oil was heated in a water bath (manufactured by TOKYO RIKAKIKAI CO, LTD) at 100°C for 30 min. Each safflower oil after heating (0.001 - 1 wt%) was added to the commercially available mayonnaise used for preparation of the above-mentioned negative control instead of non-heated safflower oil, and the obtained mayonnaise was used as evaluation samples 3-1 - 3-11.

### <sensory evaluation>

The evaluation of a mouth-coating feel was performed in the same manner as in Experimental Example 1.

The results are shown in the following Table 3.

**[Table 3]**

| sample No. | β-caryophyllene (ppm) | furfural (ppm) | amount of safflower oil added (wt%) | evaluation of mouth-coating feel |
|---|---|---|---|---|
| 3-1 | 10 | 10 | 0.01 | 2.9 |
| 3-2 | 10 | 10 | 0.1 | 3.6 |
| 3-3 | 10 | 10 | 1 | 4.2 |
| 3-4 | 100 | 100 | 0.01 | 3.5 |
| 3-5 | 100 | 100 | 0.1 | 4.3 |
| 3-6 | 100 | 100 | 1 | 4.3 |
| 3-7 | 1000 | 1000 | 0.01 | 4.0 |
| 3-8 | 1000 | 1000 | 0.1 | 4.0 |
| 3-9 | 1000 | 1000 | 1 | 3.9 |
| 3-10 | 2000 | 2000 | 0.005 | 4.0 |
| 3-11 | 10000 | 10000 | 0.001 | 4.0 |

As is clear from the results of Table 3, the mouth-coating feel of each evaluation sample was effectively enhanced by the component (A) heated substance and/or the component (B) heated substance (specifically, heated substance of β-caryophyllene, furfural and safflower oil).

### (Experimental Example 4)

### <positive control and negative control>

As a positive control, general commercially available mayonnaise (manufactured by Ajinomoto Co., Inc., trade name "Pure Select (registered trade mark) mayonnaise", oil and fat content: 73%) added with non-heated mineral oil (manufactured by KANEDA Co., Ltd.) (0.001 - 1 wt%) was used.

As a negative control, commercially available mayonnaise (manufactured by Ajinomoto Co., Inc., trade name "Pure Select (registered trade mark) KOKUUMA (registered trade mark) 65% Calorie Cut", oil and fat content: 23%) with a smaller oil and fat content as compared with positive control mayonnaise and added with non-heated mineral oil (manufactured by KANEDA Co., Ltd.) (0.001 - 1 wt%) was used.

### <evaluation samples 4-1 - 4-11>

β-caryophyllene, furfural and 2-hexenal (both manufactured by Sigma-Aldrich) were added to and dissolved in mineral oil (manufactured by KANEDA Co., Ltd.) at each concentration shown in the following Table 4 (β-caryophyllene: 10 - 10000 ppm with respect to mineral oil, furfural: 10 - 10000 pm with respect to mineral oil, 2-hexenal: 10 - 10000 ppm with respect to mineral oil), and the mineral oil was heated in a water bath (manufactured by TOKYO RIKAKIKAI CO, LTD) at 100°C for 30 min. Each mineral oil after heating (0.001 - 1 wt%) was added to the commercially available mayonnaise used for preparation of the above-mentioned negative control instead of non-heated mineral oil, and the obtained mayonnaise was used as evaluation samples 4-1 - 4-11.

### <sensory evaluation>

The evaluation of a mouth-coating feel was performed in the same manner as in Experimental Example 1.

The results are shown in the following Table 4.

**[Table 4]**

| sample No. | β-caryophyllene (ppm) | furfural (ppm) | 2-hexenal (ppm) | amount of mineral oil added (wt%) | evaluation of mouth-coating feel |
|---|---|---|---|---|---|
| 4-1 | 10 | 10 | 10 | 0.01 | 2.5 |
| 4-2 | 10 | 10 | 10 | 0.1 | 3.4 |
| 4-3 | 10 | 10 | 10 | 1 | 4.3 |
| 4-4 | 100 | 100 | 100 | 0.01 | 3.2 |
| 4-5 | 100 | 100 | 100 | 0.1 | 4.2 |
| 4-6 | 100 | 100 | 100 | 1 | 4.2 |
| 4-7 | 1000 | 1000 | 1000 | 0.01 | 3.7 |
| 4-8 | 1000 | 1000 | 1000 | 0.1 | 3.7 |
| 4-9 | 1000 | 1000 | 1000 | 1 | 3.6 |
| 4-10 | 2000 | 2000 | 2000 | 0.005 | 3.7 |
| 4-11 | 10000 | 10000 | 10000 | 0.001 | 3.7 |

As is clear from the results of Table 4, the mouth-coating feel of each evaluation sample was effectively enhanced by the component (A) heated substance and/or the component (B) heated substance (specifically, heated substance of β-caryophyllene, furfural and 2-hexenal).

### (Experimental Example 5-1)

### <positive control and negative control>

As a positive control, general commercially available mayonnaise (manufactured by Ajinomoto Co., Inc., trade name "Pure Select (registered trade mark) mayonnaise", oil and fat content: 73%) added with non-heated safflower oil (manufactured by Ajinomoto Co., Inc.) (0.2 wt%) was used.

As a negative control, commercially available mayonnaise (manufactured by Ajinomoto Co., Inc., trade name "Pure Select (registered trade mark) KOKUUMA (registered trade mark) 65% Calorie Cut", oil and fat content: 23%) with a smaller oil and fat content as compared with positive control mayonnaise and added with non-heated safflower oil (manufactured by Ajinomoto Co., Inc.) (0.2 wt%) was used.

### <evaluation samples 5-1 - 5-8>

β-caryophyllene and furfural (both manufactured by Sigma-Aldrich) were added to and dissolved in safflower oil (manufactured by Ajinomoto Co., Inc.) at each concentration shown in the following Table 5 (β-caryophyllene: 100 ppm with respect to safflower oil, furfural: 100 ppm with respect to safflower oil), and the safflower oil was heated in a water bath (manufactured by TOKYO RIKAKIKAI CO, LTD) at 100°C for 30 min. Safflower oil after heating (0.1 wt%) was added to the commercially available mayonnaise used for preparation of the above-mentioned negative control, non-heated safflower oil (manufactured by Ajinomoto Co., Inc.) (0.1 wt%) was further added, and the obtained mayonnaise was used as evaluation sample 5-1.

Furfural (manufactured by Sigma-Aldrich) was added to and dissolved in safflower oil (manufactured by Ajinomoto Co., Inc.) at the concentration shown in the following Table 5 (100 ppm with respect to safflower oil), and the safflower oil was heated in a water bath (manufactured by TOKYO RIKAKIKAI CO, LTD) at 100°C for 30 min. The safflower oil after heating (0.1 wt%) was added to the commercially available mayonnaise used for preparation of the above-mentioned negative control, non-heated safflower oil (manufactured by Ajinomoto Co., Inc.) (0.1 wt%) was further added, and the obtained mayonnaise was used as evaluation sample 5-2.

β-caryophyllene (manufactured by Sigma-Aldrich) was added to and dissolved in safflower oil (manufactured by Ajinomoto Co., Inc.) at the concentration shown in the following Table 5 (100 ppm with respect to safflower oil), and the safflower oil was heated in a water bath (manufactured by TOKYO RIKAKIKAI CO, LTD) at 100°C for 30 min. Safflower oil after heating (0.1 wt%) was added to the commercially available mayonnaise used for preparation of the above-mentioned negative control, non-heated safflower oil (manufactured by Ajinomoto Co., Inc.) (0.1 wt%) was further added, and the obtained mayonnaise was used as evaluation sample 5-3.

Safflower oil (manufactured by Ajinomoto Co., Inc.) was heated in a water bath (manufactured by TOKYO RIKAKIKAI CO, LTD) at 100°C for 30 min. Safflower oil after heating (0.2 wt%) was added to the commercially available mayonnaise used for preparation of the above-mentioned negative control, and the obtained mayonnaise was used as evaluation sample 5-4.

Safflower oil (manufactured by Ajinomoto Co., Inc.) and furfural (manufactured by Sigma-Aldrich) were each heated in a water bath (manufactured by TOKYO RIKAKIKAI CO, LTD) at 100°C for 30 min and mixed. The amount of furfural before heating was 100 ppm with respect to safflower oil before heating. The obtained mixture (0.1 wt%) was added to the commercially available mayonnaise used for preparation of the above-mentioned negative control, non-heated safflower oil (manufactured by Ajinomoto Co., Inc.) (0.1 wt%) was further added, and the obtained mayonnaise was used as evaluation sample 5-5.

Safflower oil (manufactured by Ajinomoto Co., Inc.) and β-caryophyllene (manufactured by Sigma-Aldrich) were each heated in a water bath (manufactured by TOKYO RIKAKIKAI CO, LTD) at 100°C for 30 min and mixed. The amount of β-caryophyllene before heating was 100 ppm with respect to safflower oil before heating. The obtained mixture (0.1 wt%) was added to the commercially available mayonnaise used for preparation of the above-mentioned negative control, non-heated safflower oil (manufactured by Ajinomoto Co., Inc.) (0.1 wt%) was further added, and the obtained mayonnaise was used as evaluation sample 5-6.

Safflower oil (manufactured by Ajinomoto Co., Inc.), furfural and β-caryophyllene (both manufactured by Sigma-Aldrich) were each heated in a water bath (manufactured by TOKYO RIKAKIKAI CO, LTD) at 100°C for 30 min and mixed. The amount of furfural and β-caryophyllene before heating was each 100 ppm with respect to safflower oil before heating. The obtained mixture (0.1 wt%) was added to the commercially available mayonnaise used for preparation of the above-mentioned negative control, non-heated safflower oil (manufactured by Ajinomoto Co., Inc.) (0.1 wt%) was further added, and the obtained mayonnaise was used as evaluation sample 5-7.

Furfural (manufactured by Sigma-Aldrich) was added to and dissolved in safflower oil (manufactured by Ajinomoto Co., Inc.) at the concentration shown in the following Table 5 (100 ppm with respect to safflower oil), and the safflower oil was heated in a water bath (manufactured by TOKYO RIKAKIKAI CO, LTD) at 100°C for 30 min.

In addition, β-caryophyllene (manufactured by Sigma-Aldrich) was added to and dissolved in safflower oil (manufactured by Ajinomoto Co., Inc.) at the concentration shown in the following Table 5 (100 ppm with respect to safflower oil), and the safflower oil was heated in a water bath (manufactured by TOKYO RIKAKIKAI CO, LTD) at 100°C for 30 min.

Each safflower oil after heating (0.1 wt%) was added to the commercially available mayonnaise used for preparation of the above-mentioned negative control (total 0.2 wt%), and the obtained mayonnaise was used as evaluation sample 5-8.

The evaluation of a mouth-coating feel was performed in the same manner as in Experimental Example 1.

The results are shown in the following Table 5. In the table, the substances in parentheses in the sample content mean that they were mixed before heating. For example, "(safflower oil+furfural+β-caryophyllene) heated substance" of evaluation sample 5-1 means that safflower oil, furfural and β-caryophyllene were mixed before heating, and the "safflower oil heated substance+furfural heated substance÷β-caryophyllene heated substance" of evaluation sample 5-7 means that safflower oil, furfural and β-caryophyllene were not mixed before heating but were mixed after individual heating.

**[Table 5]**

| sample No. | sample content | β-caryophyllene (ppm) | furfural (ppm) | evaluation of mouth-coating feel |
|---|---|---|---|---|
| 5-1 | (safflower oil+furfural+β-caryophyllene) heated substance | 100 | 100 | 4.3 |
| 5-2 | (safflower oil+furfural) heated substance | | 100 | 2.9 |
| 5-3 | (safflower oil+β-caryophyllene) heated substance | 100 | | 1.0 |
| 5-4 | safflower oil heated substance | | | 0.6 |
| 5-5 | safflower oil heated substance+furfural heated substance | | 100 | 0.8 |
| 5-6 | safflower oil heated substance+β-caryophyllene heated substance | 100 | | 1.0 |
| 5-7 | safflower oil heated substance+furfural heated substance+β-caryophyllene heated substance | 100 | 100 | 2.3 |
| 5-8 | (safflower oil+furfural) heated substance + (safflower oil+β-caryophyllene) heated substance | 100 | 100 | 4.2 |

As is clear from the results of Table 5, the mouth-coating feel of evaluation samples 5-1 to 5-3 and 5-6 to 5-8 was effectively enhanced by the component (A) heated substance and/or the component (B) heated substance (specifically, heated substance of β-caryophyllene, furfural and safflower oil, heated substance of furfural and safflower oil, heated substance of β-caryophyllene, etc.).

On the other hand, a mouth-coating feel was hardly enhanced in evaluation sample 5-4 in which only the component (A2) heated substance was added, and evaluation sample in which 5-5 component (A1) and component (A2) were added after separate heating.

### (Experimental Example 5-2)

As a positive control, general commercially available mayonnaise (manufactured by Ajinomoto Co., Inc., trade name "Pure Select (registered trade mark) mayonnaise", oil and fat content: 73%) added with non-heated mineral oil (manufactured by Ajinomoto Co., Inc.) (0.2 wt%) was used.

As a negative control, commercially available mayonnaise (manufactured by Ajinomoto Co., Inc., trade name "Pure Select (registered trade mark) KOKUUMA (registered trade mark) 65% Calorie Cut", oil and fat content: 23%) with a smaller oil and fat content as compared with positive control mayonnaise and added with non-heated mineral oil (manufactured by Ajinomoto Co., Inc.) (0.2 wt%) was used.

### <evaluation samples 5-9 - 5-20>

2-Hexenal, β-caryophyllene and furfural (each manufactured by Sigma-Aldrich) were added to and dissolved in mineral oil (manufactured by KANEDA Co., Ltd.) at each concentration shown in the following Table 6 (2-hexenal: 100 ppm with respect to mineral oil, β-caryophyllene: 100 ppm with respect to mineral oil, furfural: 100 ppm with respect to mineral oil), and the mineral oil was heated in a water bath (manufactured by TOKYO RIKAKIKAI CO, LTD) at 100°C for 30 min. The mineral oil after heating (0.1 wt%) was added to the commercially available mayonnaise used for preparation of the above-mentioned negative control, non-heated mineral oil (0.1 wt%) was further added, and the obtained mayonnaise was used as evaluation sample 5-9.

2-Hexenal and furfural (both manufactured by Sigma-Aldrich) were added to and dissolved in mineral oil (manufactured by KANEDA Co., Ltd.) at each concentration shown in the following Table 6 (2-hexenal: 100 ppm with respect to mineral oil, furfural: 100 ppm with respect to mineral oil), and the mineral oil was heated in a water bath (manufactured by TOKYO RIKAKIKAI CO, LTD) at 100°C for 30 min. The mineral oil after heating (0.1 wt%) was added to the commercially available mayonnaise used for preparation of the above-mentioned negative control, non-heated mineral oil (0.1 wt%) was further added, and the obtained mayonnaise was used as evaluation sample 5-10.

2-Hexenal and β-caryophyllene (both manufactured by Sigma-Aldrich) were added to and dissolved in mineral oil (manufactured by KANEDA Co., Ltd.) at each concentration shown in the following Table 6 (2-hexenal: 100 ppm with respect to mineral oil, β-caryophyllene: 100 ppm with respect to mineral oil), and the mineral oil was heated in a water bath (manufactured by TOKYO RIKAKIKAI CO, LTD) at 100°C for 30 min. The mineral oil after heating (0.1 wt%) was added to the commercially available mayonnaise used for preparation of the above-mentioned negative control, non-heated mineral oil (0.1 wt%) was further added, and the obtained mayonnaise was used as evaluation sample 5-11.

β-Caryophyllene and furfural (both manufactured by Sigma-Aldrich) were added to and dissolved in mineral oil (manufactured by KANEDA Co., Ltd.) at each concentration shown in the following Table 6 (β-caryophyllene: 100 ppm with respect to mineral oil, furfural: 100 ppm with respect to mineral oil), and the mineral oil was heated in a water bath (manufactured by TOKYO RIKAKIKAI CO, LTD) at 100°C for 30 min. The mineral oil after heating (0.1 wt%) was added to the commercially available mayonnaise used for preparation of the above-mentioned negative control, non-heated mineral oil (0.1 wt%) was further added, and the obtained mayonnaise was used as evaluation sample 5-12.

2-Hexenal (manufactured by Sigma-Aldrich) was added to and dissolved in mineral oil (manufactured by KANEDA Co., Ltd.) at the concentration shown in the following Table 6 (100 ppm with respect to mineral oil), and the mineral oil was heated in a water bath (manufactured by TOKYO RIKAKIKAI CO, LTD) at 100°C for 30 min. The mineral oil after heating (0.1 wt%) was added to the commercially available mayonnaise used for preparation of the above-mentioned negative control, non-heated mineral oil (0.1 wt%) was further added, and the obtained mayonnaise was used as evaluation sample 5-13.

Furfural (manufactured by Sigma-Aldrich) was added to and dissolved in mineral oil (manufactured by KANEDA Co., Ltd.) at the concentration shown in the following Table 6 (100 ppm with respect to mineral oil), and the mineral oil was heated in a water bath (manufactured by TOKYO RIKAKIKAI CO, LTD) at 100°C for 30 min. The mineral oil after heating (0.1 wt%) was added to the commercially available mayonnaise used for preparation of the above-mentioned negative control, non-heated mineral oil (0.1 wt%) was further added, and the obtained mayonnaise was used as evaluation sample 5-14.

β-Caryophyllene (manufactured by Sigma-Aldrich) was added to and dissolved in mineral oil (manufactured by KANEDA Co., Ltd.) at the concentration shown in the following Table 6 (100 ppm with respect to mineral oil), and the mineral oil was heated in a water bath (manufactured by TOKYO RIKAKIKAI CO, LTD) at 100°C for 30 min. The mineral oil after heating (0.1 wt%) was added to the commercially available mayonnaise used for preparation of the above-mentioned negative control, non-heated mineral oil (0.1 wt%) was further added, and the obtained mayonnaise was used as evaluation sample 5-15.

2-Hexenal, furfural and β-caryophyllene (each manufactured by Sigma-Aldrich) were each heated in a water bath (manufactured by TOKYO RIKAKIKAI CO, LTD) at 100°C for 30 min, added to mineral oil and mixed. The amount of 2-hexenal, furfural and β-caryophyllene before heating was each 100 ppm with respect to the mineral oil. The obtained mixture (0.1 wt%) was added to the commercially available mayonnaise used for preparation of the above-mentioned negative control, non-heated mineral oil (0.1 wt%) was further added, and the obtained mayonnaise was used as evaluation sample 5-16.

2-Hexenal and furfural (both manufactured by Sigma-Aldrich) were added to and dissolved in mineral oil (manufactured by KANEDA Co., Ltd.) at each concentration shown in the following Table 7 (2-hexenal: 100 ppm with respect to mineral oil, furfural: 100 ppm with respect to mineral oil), the mineral oil was heated in a water bath (manufactured by TOKYO RIKAKIKAI CO, LTD) at 100°C for 30 min, and β-caryophyllene (manufactured by Sigma-Aldrich) heated in a water bath (manufactured by TOKYO RIKAKIKAI CO, LTD) at 100°C for 30 min was added thereto and mixed. The amount of β-caryophyllene before heating was 100 ppm with respect to mineral oil before heating. The obtained mixture (0.1 wt%) was added to the commercially available mayonnaise used for preparation of the above-mentioned negative control, non-heated mineral oil (0.1 wt%) was further added, and the obtained mayonnaise was used as evaluation sample 5-17.

2-Hexenal and β-caryophyllene (both manufactured by Sigma-Aldrich) were added to and dissolved in mineral oil (manufactured by KANEDA Co., Ltd.) at each concentration shown in the following Table 7 (2-hexenal: 100 ppm with respect to mineral oil, β-caryophyllene: 100 ppm with respect to mineral oil), the mineral oil was heated in a water bath (manufactured by TOKYO RIKAKIKAI CO, LTD) at 100°C for 30 min, and furfural (manufactured by Sigma-Aldrich) heated in a water bath (manufactured by TOKYO RIKAKIKAI CO, LTD) at 100°C for 30 min was added thereto and mixed. The amount of furfural before heating was 100 ppm with respect to mineral oil before heating. The obtained mixture (0.1 wt%) was added to the commercially available mayonnaise used for preparation of the above-mentioned negative control, non-heated mineral oil (0.1 wt%) was further added, and the obtained mayonnaise was used as evaluation sample 5-18.

β-caryophyllene and furfural (both manufactured by Sigma-Aldrich) were added to and dissolved in mineral oil (manufactured by KANEDA Co., Ltd.) at each concentration shown in the following Table 7 (β-caryophyllene: 100 ppm with respect to mineral oil, furfural: 100 ppm with respect to mineral oil), the mineral oil was heated in a water bath (manufactured by TOKYO RIKAKIKAI CO, LTD) at 100°C for 30 min, and 2-hexenal (manufactured by Sigma-Aldrich) heated in a water bath (manufactured by TOKYO RIKAKIKAI CO, LTD) at 100°C for 30 min was added thereto and mixed. The amount of 2-hexenal before heating was 100 ppm with respect to mineral oil before heating. The obtained mixture (0.1 wt%) was added to the commercially available mayonnaise used for preparation of the above-mentioned negative control, non-heated mineral oil (0.1 wt%) was further added, and the obtained mayonnaise was used as evaluation sample 5-19.

2-Hexenal and furfural (both manufactured by Sigma-Aldrich) were added to and dissolved in mineral oil (manufactured by KANEDA Co., Ltd.) at each concentration shown in the following Table 6 (2-hexenal: 100 ppm with respect to mineral oil, furfural: 100 ppm with respect to mineral oil), and the mineral oil was heated in a water bath (manufactured by TOKYO RIKAKIKAI CO, LTD) at 100°C for 30 min.

2-Hexenal and β-caryophyllene (both manufactured by Sigma-Aldrich) were added to and dissolved in mineral oil (manufactured by KANEDA Co., Ltd.) at each concentration shown in the following Table 6 (2-hexenal: 100 ppm with respect to mineral oil, β-caryophyllene: 100 ppm with respect to mineral oil), and the mineral oil was heated in a water bath (manufactured by TOKYO RIKAKIKAI CO, LTD) at 100°C for 30 min.

Each mineral oil after heating (0.1 wt%) was added to the commercially available mayonnaise used for preparation of the above-mentioned negative control (total 0.2 wt%), and the obtained mayonnaise was used as evaluation sample 5-20.

### <sensory evaluation>

The evaluation of a mouth-coating feel was performed in the same manner as in Experimental Example 1.

The results are shown in the following Tables 6, 7. In the Tables, the substances in parentheses mean that they were mixed before heating, as in Table 5.

**[Table 6]**

| sample No. | sample content | β-caryophyllene (ppm) | 2-hexenal (ppm) | furfural (ppm) | evaluation of mouth-coating feel |
|---|---|---|---|---|---|
| 5-9 | (2-hexenal+furfural+ β-caryophyllene) heated substance | 100 | 100 | 100 | 4.3 |
| 5-10 | (2-hexenal+furfural) heated substance | | 100 | 100 | 2.8 |
| 5-11 | (2-hexenal+β-caryophyllene) heated substance | 100 | 100 | | 2.3 |
| 5-12 | (furfural+β-caryophyllene) heated substance | 100 | | 100 | 2.3 |
| 5-13 | (2-hexenal) heated substance | | 100 | | 0.7 |
| 5-14 | (furfural) heated substance | | | 100 | 0.8 |
| 5-15 | (β-caryophyllene) heated substance | 100 | | | 1.0 |

**[Table 7]**

| sample No. | sample content | β-caryophyllene (ppm) | 2-hexenal (ppm) | furfural (ppm) | evaluation of mouth-coating feel |
|---|---|---|---|---|---|
| 5-16 | 2-hexenal heated substance+ furfural heated substance+β-caryophyllene heated substance | 100 | 100 | 100 | 2.8 |
| 5-17 | (2-hexenal+ furfural) heated substance+β-caryophyllene heated substance | 100 | 100 | 100 | 3.9 |
| '5-18 | (2-hexenal+β-caryophyllene) heated substance +furfural heated substance | 100 | 100 | 100 | 2.3 |
| 5-19 | (furfural+β-caryophyllene) heated substance +2-hexenal heated substance | 100 | 100 | 100 | 2.0 |
| 5-20 | (2-hexenal+ furfural) heated substance+ (2-hexenal+β-caryophyllene) heated substance | 100 | 100 | 100 | 4.2 |

As is clear from the results of Tables 6, 7, the mouth-coating feel of evaluation samples 5-9 to 5-12 and 5-15 to 5-20 was effectively enhanced by the component (A) heated substance and/or the component (B) heated substance (specifically, heated substance of β-caryophyllene, furfural and 2-hexenal, heated substance of furfural and 2-hexenal, heated substance of β-caryophyllene, etc.).

On the other hand, a mouth-coating feel was hardly enhanced in evaluation sample 5-13 in which only the component (A2) heated substance was added, and evaluation sample 5-14 in which only the component (A1) heated substance was added.

### (Experimental Example 6)

### <positive control and negative control>

As a positive control, general commercially available mayonnaise (manufactured by Ajinomoto Co., Inc., trade name "Pure Select (registered trade mark) mayonnaise", oil and fat content: 73%) added with non-heated mineral oil (manufactured by KANEDA Co., Ltd.) (1 wt%) was used.

As a negative control, commercially available mayonnaise (manufactured by Ajinomoto Co., Inc., trade name "Pure Select (registered trade mark) KOKUUMA (registered trade mark) 65% Calorie Cut", oil and fat content: 23%) with a smaller oil and fat content as compared with positive control mayonnaise and added with non-heated mineral oil (manufactured by KANEDA Co., Ltd.) (1 wt%) was used.

### <evaluation samples 6-1 - 6-41>

Each compound shown in the following Tables 8 - 10 (each manufactured by Sigma-Aldrich) was added to and dissolved in mineral oil (manufactured by KANEDA Co., Ltd.) at each concentration shown in the following Tables 8 - 10 (100 ppm with respect to mineral oil), the mineral oil was heated in a water bath (manufactured by TOKYO RIKAKIKAI CO, LTD) at 100°C for 30 min. Each mineral oil after heating (0.1 wt%) was added to the commercially available mayonnaise used for preparation of the above-mentioned negative control instead of non-heated mineral oil, and the obtained mayonnaise was used as evaluation samples 6-1 to 6-41.

### <sensory evaluation>

The evaluation of a mouth-coating feel was performed in the same manner as in Experimental Example 1.

The results are shown in the following Tables 8 - 10.

**[Table 8]**

| sample No. | 2-hexenal (ppm) | β-caryophyllene (ppm) | each compound (ppm) | | evaluation of mouth-coating feel |
|---|---|---|---|---|---|
| 6-1 | 100 | 100 | benzaldehyde | 100 | 1.1 |
| 6-2 | 100 | 100 | 5-methylfurfural | 100 | 2.9 |
| 6-3 | 100 | 100 | furfuryl alcohol | 100 | 3.7 |
| 6-4 | 100 | 100 | furfuryl mercaptan | 100 | 1.2 |
| 6-5 | 100 | 100 | 2-furylmethylketone | 100 | 3.2 |
| 6-6 | 100 | 100 | 2-methylfuran | 100 | 1.0 |
| 6-7 | 100 | 100 | 1-furfurylpyrrole | 100 | 2.1 |
| 6-8 | 100 | 100 | 2-ethylfuran | 100 | 1.2 |

**[Table 9]**

| sample No. | furfural (ppm) | β-caryophyllene (ppm) | each compound (ppm) | | evaluation of mouth-coating feel |
|---|---|---|---|---|---|
| 6-9 | 100 | 100 | hexanal | 100 | 4.1 |
| 6-10 | 100 | 100 | octanal | 100 | 4.1 |
| 6-11 | 100 | 100 | decanal | 100 | 3.8 |
| 6-12 | 100 | 100 | 2-hexenal | 100 | 4.0 |
| 6-13 | 100 | 100 | 2-octenal | 100 | 4.2 |
| 6-14 | 100 | 100 | 2-decenal | 100 | 4.1 |
| 6-15 | 100 | 100 | 2,4-decadienal | 100 | 3.9 |
| 6-16 | 100 | 100 | benzaldehyde | 100 | 2.4 |
| 6-17 | 100 | 100 | p-tolualdehyde | 100 | 2.1 |
| 6-18 | 100 | 100 | methional | 100 | 3.7 |
| 6-19 | 100 | 100 | stearic acid | 100 | 3.0 |
| 6-20 | 100 | 100 | oleic acid | 100 | 3.0 |
| 6-21 | 100 | 100 | linoleic acid | 100 | 3.6 |
| 6-22 | 100 | 100 | glycerol | 100 | 1.9 |
| 6-23 | 100 | 100 | hexanol | 100 | 1.9 |
| 6-24 | 100 | 100 | octanol | 100 | 1.9 |
| 6-25 | 100 | 100 | 3-octanone | 100 | 3.1 |

**[Table 10]**

| sample No. | 2-hexenal (ppm) | furfural (ppm) | each compound (ppm) | | evaluation of mouth-coating feel |
|---|---|---|---|---|---|
| 6-26 | 100 | 100 | limonene | 100 | 2.1 |
| 6-27 | 100 | 100 | 4-vinylphenol | 100 | 3.0 |
| 6-28 | 100 | 100 | linalool | 100 | 2.7 |
| 6-29 | 100 | 100 | linalool oxide | 100 | 3.1 |
| 6-30 | 100 | 100 | eugenol | 100 | 2.7 |
| 6-31 | 100 | 100 | β-pinene | 100 | 4.0 |
| 6-32 | 100 | 100 | sabinene | 100 | 3.8 |
| 6-33 | 100 | 100 | 4-allyl-2,6-dimethoxyphenol | 100 | 3.6 |
| 6-34 | 100 | 100 | p-cymene | 100 | 3.0 |
| 6-35 | 100 | 100 | farnesene | 100 | 3.1 |
| 6-36 | 100 | 100 | myrcene | 100 | 3.9 |
| 6-37 | 100 | 100 | ocimene | 100 | 2.9 |
| 6-38 | 100 | 100 | α-phellandrene | 100 | 3.5 |
| 6-39 | 100 | 100 | α-terpinene | 100 | 3.4 |
| 6-40 | 100 | 100 | γ-terpinene | 100 | 3.4 |
| 6-41 | 100 | 100 | terpinolene | 100 | 3.8 |

As is clear from the results of Tables 8 - 10, the mouth-coating feel of the evaluation samples was enhanced by the addition of the component (A) heated substance and/or the component (B) heated substance.

### (Experimental Example 7)

### <positive control and negative control>

As a positive control, general commercially available mayonnaise (manufactured by Ajinomoto Co., Inc., trade name "Pure Select (registered trade mark) mayonnaise", oil and fat content: 73%) added with non-heated rape seed oil (manufactured by Ajinomoto Co., Inc.) (1 wt%) was used.

As a negative control, commercially available mayonnaise (manufactured by Ajinomoto Co., Inc., trade name "Pure Select (registered trade mark) KOKUUMA (registered trade mark) 65% Calorie Cut", oil and fat content: 23%) with a smaller oil and fat content as compared with positive control mayonnaise and added with non-heated rape seed oil (manufactured by Ajinomoto Co., Inc.) (1 wt%) was used.

### <evaluation sample>

Given amounts of β-caryophyllene, furfuryl alcohol (both manufactured by Sigma-Aldrich) were dissolved in rape seed oil (manufactured by Ajinomoto Co., Inc.), and the rape seed oil was heated in a water bath (manufactured by TOKYO RIKAKIKAI CO, LTD) at 100°C for 30 min. Each rape seed oil after heating (0.1 wt%) was added to the commercially available mayonnaise used for preparation of the above-mentioned negative control instead of non-heated rape seed oil, and the obtained mayonnaise was used as evaluation samples. The amounts of β-caryophyllene and furfuryl alcohol dissolved in the rape seed oil was each adjusted to fall within the range of 0.001 - 10000 ppm with respect to the rape seed oil, as shown in the following Table 11.

### <sensory evaluation>

For the evaluation of a mouth-coating feel, a panel of 2 experts ate each mayonnaise of positive control, negative control and evaluation sample, and graded the evaluation samples in 0.1 point increments in the range of 0.0 - 5.0 points, with the positive control being 5.0 points and the negative control being 0.0 point.

The results are shown in the following Table 11.

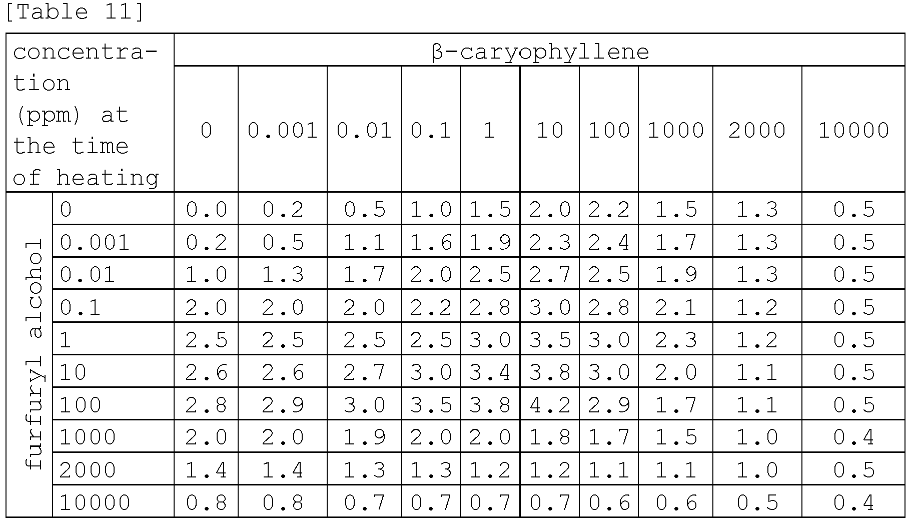

As is clear from the results of Table 11, the mouth-coating feel of each evaluation sample was enhanced by the component (A) heated substance and/or the component (B) heated substance (specifically, heated substance of β-caryophyllene, furfuryl alcohol and rape seed oil, etc.).

The scores of samples containing a high concentration of each heated substance (for example, evaluation sample in which β-caryophyllene and furfuryl alcohol contained in the rapeseed oil at the time of heating are 1000 - 10000 ppm with respect to the rape seed oil) tended to decrease slightly. This may be due to the occurrence of an off-flavor when the concentration is high, and it is assumed that such off-flavor makes it difficult to detect the mouth-coating feel.

### (Experimental Example 8)

### <positive control and negative control>

As the positive control and negative control, ones similar to those in Experimental Example 1 were used.

### <evaluation sample>

β-Caryophyllene and furfural (both manufactured by Sigma-Aldrich) were each dissolved in rape seed oil (manufactured by Ajinomoto Co., Inc.) at 100 ppm with respect to the rape seed oil, and the rape seed oil was heated in an oil bath (manufactured by Yamato Scientific Co., Ltd.) under the conditions (temperature, time) shown in the following Table 12. Each rape seed oil after heating (1 wt%) was added to the commercially available mayonnaise used for preparation of the negative control instead of non-heated rape seed oil, and the obtained mayonnaise was used as evaluation samples.

### <sensory evaluation>

The evaluation of a mouth-coating feel was performed in the same manner as in Experimental Example 7.

The results are shown in the following Table 12.

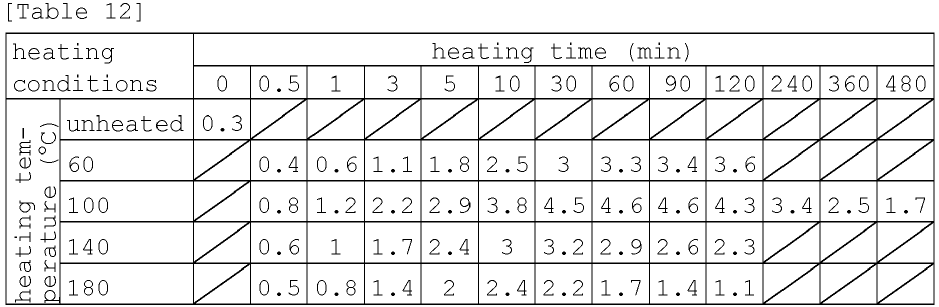

From the results of Table 12, it was suggested that the heating conditions (temperature, time) of component (A) and component (B) may influence the mouth-coating feel enhancing effect of the obtained component (A) heated substance and component (B) heated substance.

### (Experimental Example 9)

### <positive control and negative control>

As a positive control, model ramen soup ["Super Cup Soy Sauce" powder soup (manufactured by ACECOOK CO., LTD.) (2.17 g), chicken oil (manufactured by Maruzen Foods Corporation) (1.60 g), dark soy sauce (manufactured by Kikkoman Corporation) (1.00 g), KOUJI·Base (manufactured by Ajinomoto Co., Inc.) (0.40 g), marrow pork oil (manufactured by Maruzen Foods Corporation) (0.20 g) dissolved in hot water and prepared to a total amount of 100 g, oil and fat content: 1.8%] added with 0.1 wt% of non-heated safflower oil (manufactured by Ajinomoto Co., Inc.), and commercially available fat spread (Meiji Co., Ltd., trade name "Seven Premium KAROYAKA Soft", oil and fat content: 70%) added with 0.1 wt% of non-heated safflower oil (manufactured by Ajinomoto Co., Inc.) were used.

As a negative control, model ramen soup ["Super Cup soy sauce" powder soup (manufactured by ACECOOK CO., LTD.) (2.17 g), chicken oil (manufactured by Maruzen Foods Corporation) (0.80 g), dark soy sauce (manufactured by Kikkoman Corporation) (1.00 g), KOUJI·Base (manufactured by Ajinomoto Co., Inc.) (0.40 g), marrow pork oil (manufactured by Maruzen Foods Corporation) (0.20 g), dissolved total amount 100gpreparation. oil and fat content :1.0%] with a lower oil and fat content as compared with the positive control ramen soup, and added with 0.1 wt% of non-heated safflower oil (manufactured by Ajinomoto Co., Inc.), and commercially available fat spread (Meiji Co., Ltd., trade name "Meiji Corn Soft", oil and fat content: 64%) with a lower oil and fat content as compared with the positive control fat spread, and added with 0.1 wt% of non-heated safflower oil (manufactured by Ajinomoto Co., Inc.) were used.

As a positive control of mayonnaise, general commercially available mayonnaise (manufactured by Ajinomoto Co., Inc., trade name "Pure Select (registered trade mark) mayonnaise", oil and fat content: 73%) added with non-heated safflower oil (manufactured by Ajinomoto Co., Inc.) (1 wt%) was used.

As a negative control, commercially available mayonnaise (manufactured by Ajinomoto Co., Inc., trade name "Pure Select (registered trade mark) KOKUUMA (registered trade mark) 65% Calorie Cut", oil and fat content: 23%) with a smaller oil and fat content as compared with positive control mayonnaise and added with non-heated safflower oil (manufactured by Ajinomoto Co., Inc.) (1 wt%) was used.

### <evaluation sample group 9-1>

β-Caryophyllene and furfural (both manufactured by Sigma-Aldrich) were each dissolved in safflower oil (manufactured by Ajinomoto Co., Inc.) to 100 ppm with respect to safflower oil. To each food (commercially available mayonnaise, model ramen soup, commercially available fat spread) used for the preparation of the above-mentioned negative control was added 0.1 wt% of the above-mentioned safflower oil (unheated) in which β-caryophyllene and furfural were dissolved, instead of addition of non-heated safflower oil, and the obtained respective foods (mayonnaise, ramen soup and fat spread) were used as evaluation sample group 9-1.

### <evaluation sample group 9-2>

β-Caryophyllene and furfural (both manufactured by Sigma-Aldrich) were each dissolved in safflower oil (manufactured by Ajinomoto Co., Inc.) to 100 ppm with respect to the safflower oil, and the safflower oil was heated in a water bath (manufactured by TOKYO RIKAKIKAI CO, LTD) at 100°C for 30 min. The safflower oil after heating (0.1 wt%) was added to the foods (commercially available mayonnaise, model ramen soup, commercially available fat spread) used for the preparation of the above-mentioned negative control, instead of addition of non-heated safflower oil, and the obtained respective foods (mayonnaise, ramen soup and fat spread) were used as evaluation sample group 9-2.

### <sensory evaluation>

For the evaluation of a mouth-coating feel, a panel of 3 experts ate respective foods (mayonnaise, ramen soup and fat spread) of positive control, negative control and evaluation sample, and graded the evaluation samples in 0.1 point increments in the range of 0.0 - 5.0 points, with the positive control being 5.0 points and the negative control being 0.0 point.

The results are shown in the following Table 13.

**[Table 13]**

| | negative control | positive control | evaluation sample group 9-1 | evaluation sample group 9-2 |
|---|---|---|---|---|
| mayonnaise | 0.0 | 5.0 | 0.1 | 4.3 |
| fat spread | 0.0 | 5.0 | 0.1 | 4.0 |
| ramen soup | 0.0 | 5.0 | 0.1 | 3.7 |

As is clear from the results of Table 13, the mouth-coating feel was enhanced in any of mayonnaise, ramen soup and fat spread by the component (A) heated substance and/or the component (B) heated substance (specifically, heated substance of β-caryophyllene, furfural and safflower oil).

### (Experimental Example 10)

### <positive control and negative control>

As the positive control and the negative control, ones similar to those in Experimental Example 7 were used.

### <evaluation sample 10-1>

β-caryophyllene and furfural (both manufactured by Sigma-Aldrich) were each dissolved in rape seed oil (manufactured by Ajinomoto Co., Inc.) to 100 ppm with respect to rape seed oil. To commercially available mayonnaise used for the preparation of the above-mentioned negative control was added 0.1 wt% of the above-mentioned rape seed oil (unheated) in which β-caryophyllene and furfural were dissolved, instead of addition of non-heated rape seed oil, and the obtained mayonnaise was used as evaluation sample 10-1.

### <evaluation sample 10-2>

β-Caryophyllene and furfural (both manufactured by Sigma-Aldrich) were each dissolved in rape seed oil (manufactured by Ajinomoto Co., Inc.) to 100 ppm with respect to the rape seed oil, and the rape seed oil was heated in a water bath (manufactured by TOKYO RIKAKIKAI CO, LTD) at 100°C for 30 min. The rape seed oil after heating (0.1 wt%) was added to the commercially available mayonnaise used for preparation of the above-mentioned negative control, instead of addition of non-heated rape seed oil, and the obtained mayonnaise was used as evaluation sample 10-2.

### <sensory evaluation>

The evaluation of the mouth-coating feel was performed by repeating the two-point discrimination evaluation (Fig. 1) and the score evaluation (Fig. 2) under the blind condition three times (9 times in total) by a panel of 3 experts. The score evaluation was performed by eating each mayonnaise of positive control, negative control and evaluation samples 10-1 and 10-2, and grading the evaluation samples 10-1 and 10-2 in 0.1 point increments in the range of 0.0 - 5.0 points, with the positive control being 5.0 points and the negative control being 0.0 point.

The results are shown in Fig. 1 and Fig. 2.

As is clear from the results of Fig. 1 and Fig. 2, the mouth-coating feel of mayonnaise was enhanced by the component (A) heated substance and/or the component (B) heated substance (specifically, heated substance of β-caryophyllene, furfural and rape seed oil) in the sensory evaluation under blinded conditions.

### (Experimental Example 11)

### <positive control and negative control>

As the positive control and the negative control, ones similar to those in Experimental Example 7 were used.

### <evaluation samples 11-1 to 11-4>

(a) β-Caryophyllene (manufactured by Sigma-Aldrich) was dissolved in rape seed oil (manufactured by Ajinomoto Co., Inc.) at 10 ppm with respect to the rape seed oil, and the rape seed oil was heated in a water bath (manufactured by TOKYO RIKAKIKAI CO, LTD) at 100°C for 30 min.
(b) Furfuryl alcohol (manufactured by Sigma-Aldrich) was dissolved in rape seed oil at 100 ppm with respect to the rape seed oil, and the rape seed oil (manufactured by Ajinomoto Co., Inc.) was heated in a water bath (manufactured by TOKYO RIKAKIKAI CO, LTD) at 100°C for 30 min.
(c) β-Caryophyllene and furfuryl alcohol (both manufactured by Sigma-Aldrich) were respectively dissolved in rape seed oil (manufactured by Ajinomoto Co., Inc.) at 10 ppm and 100 ppm with respect to the rape seed oil, and the rape seed oil was heated in a water bath (manufactured by TOKYO RIKAKIKAI CO, LTD) at 100°C for 30 min.

To commercially available mayonnaise used for preparation of the negative control was added respective rape seed oils after heating and prepared in the above-mentioned (a) - (c), and a mixture of the rape seed oil after heating and prepared in the above-mentioned (a) and the rape seed oil after heating and prepared in the above-mentioned (b) were respectively added, instead of addition of non-heated rape seed oil, and the obtained respective mayonnaises were used as evaluation samples 11-1 to 11-4.

### <sensory evaluation>

The evaluation of a mouth-coating feel was performed in the same manner as in Experimental Example 7.

The results are shown in the following Table 14.

**[Table 14]**

| sample No. | sample content | caryophyllene (ppm) | furfuryl alcohol (ppm) | evaluation of mouth-coating feel |
|---|---|---|---|---|
| 11-1 | rape seed oil (a) with β-caryophyllene dissolved therein, followed by heating | 10 | | 1.0 |
| 11-2 | rape seed oil (b) with furfuryl alcohol dissolved therein, followed by heating | | 100 | 2.5 |
| 11-3 | rape seed oil (c) with β-caryophyllene and furfuryl alcohol dissolved therein, followed by heating | 10 | 100 | 4.2 |
| 11-4 | mixture of (a) and (b) | 10 | 100 | 4 |

As is clear from the results of Table 14, mouth-coating feel was enhanced in the evaluation sample prepared using component (A) heated substance and the evaluation sample prepared using component (B) heated substance.

The mouth-coating feel was enhanced in both the evaluation sample prepared using a heated substance obtained by heating component (A) and component (B) in combination, and the evaluation sample prepared using component (A) heated substance and component (B) heated substance obtained separately.

### (Experimental Example 12)

### <positive control and negative control>

As the positive control and the negative control, ones similar to those in Experimental Example 1 were used.

### <evaluation sample groups 12-1 and 12-2>

Rape seed oil (manufactured by Ajinomoto Co., Inc.), soybean oil (manufactured by Ajinomoto Co., Inc.), corn oil (manufactured by Ajinomoto Co., Inc.), olive oil (manufactured by Ajinomoto Co., Inc.), safflower oil (manufactured by Ajinomoto Co., Inc.), flaxseed oil (manufactured by ASAHI AND CO., LTD.), perilla oil (manufactured by ASAHI AND CO., LTD.), hydrogenated palm kernel oil (manufactured by J-OIL MILLS, Inc.) and medium chain fatty acid oil (manufactured by The Nisshin OilliO Group, Ltd.) were heated as they were in a water bath (manufactured by TOKYO RIKAKIKAI CO, LTD) at 100°C for 30 min. Each solvent (1 wt%) after heating was added to commercially available mayonnaise used for preparation of the negative control, instead of addition of non-heated rape seed oil, and the obtained mayonnaises were each used as an evaluation sample group 12-1.
(III) β-Caryophyllene and furfural (both manufactured by Sigma-Aldrich) were dissolved in rape seed oil (manufactured by Ajinomoto Co., Inc.), soybean oil (manufactured by Ajinomoto Co., Inc.), corn oil (manufactured by Ajinomoto Co., Inc.), olive oil (manufactured by Ajinomoto Co., Inc.), safflower oil (manufactured by Ajinomoto Co., Inc.), flaxseed oil (manufactured by ASAHI AND CO., LTD.), perilla oil (manufactured by ASAHI AND CO., LTD.), hydrogenated palm kernel oil (manufactured by J-OIL MILLS, Inc.) and medium chain fatty acid oil (manufactured by The Nisshin OilliO Group, Ltd.) at 100 ppm with respect to the solvent, and heated in a water bath (manufactured by TOKYO RIKAKIKAI CO, LTD) at 100°C for 30 min. Each solvent (1 wt%) after heating was added to commercially available mayonnaise used for preparation of the negative control, instead of addition of non-heated rape seed oil, and the obtained mayonnaises were each used as an evaluation sample group 12-2.

### <sensory evaluation>

The evaluation of a mouth-coating feel was performed in the same manner as in Experimental Example 7.

The results are shown in the following Table 15.

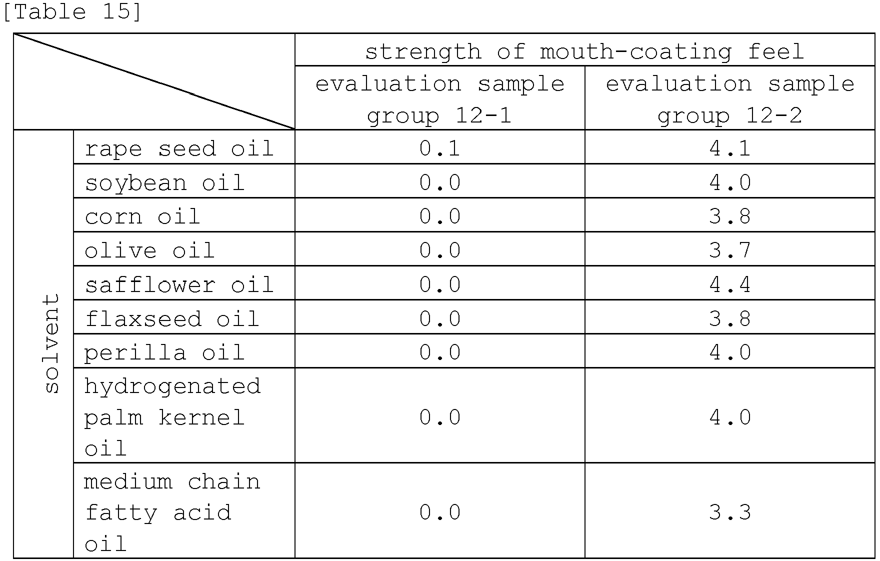

As is clear from the results of Table 15, the mouth-coating feel of the evaluation samples was enhanced by using any of rape seed oil, soybean oil, corn oil, olive oil, safflower oil, flaxseed oil, perilla oil, hydrogenated palm kernel oil and medium chain fatty acid oil as oil or fat.

### (Experimental Example 13)

### <positive control and negative control>

As a positive control, general commercially available mayonnaise (manufactured by Ajinomoto Co., Inc., trade name "Pure Select (registered trade mark) mayonnaise", oil and fat content: 73%) added with non-heated safflower oil (manufactured by Ajinomoto Co., Inc.) (1 wt%) was used.

As a negative control, commercially available mayonnaise (manufactured by Ajinomoto Co., Inc., trade name "Pure Select (registered trade mark) KOKUUMA (registered trade mark) 65% Calorie Cut", oil and fat content: 23%) with a smaller oil and fat content as compared with positive control mayonnaise and added with non-heated safflower oil (manufactured by Ajinomoto Co., Inc.) (1 wt%) was used.

### <evaluation sample>

Given amounts of β-caryophyllene and furfural (both manufactured by Sigma-Aldrich) were dissolved in safflower oil (manufactured by Ajinomoto Co., Inc.), and the safflower oil was heated in a water bath (manufactured by TOKYO RIKAKIKAI CO, LTD) at 100°C for 30 min. Each safflower oil after heating (0.1 wt%) was added to the commercially available mayonnaise used for preparation of the above-mentioned negative control instead of non-heated rape seed oil, and the obtained mayonnaise was used as evaluation samples. The amounts of β-caryophyllene and furfural dissolved in safflower oil were respectively adjusted to fall within the range of 0.001 - 300000 ppm with respect to the safflower oil, as shown in the following Tables 16 - 19.

### <sensory evaluation>

For the evaluation of the strength of the mouth-coating feel, a panel of 2 experts ate each mayonnaise of positive control, negative control and evaluation sample, and graded the evaluation samples in 0.1 point increments in the range of 0.0 - 5.0 points, with the positive control being 5.0 points and the negative control being 0.0 point.

The results are shown in the following Tables 16 - 19.

**[Table 16]**

| Furfural concentration (ppm) | β-caryophyllene concentration (ppm) | strength of mouth-coating feel |
|---|---|---|
| 0.001 | | 0.4 |
| 0.01 | | 0.8 |
| 0.1 | | 1.5 |
| 1 | | 1.9 |
| 10 | | 2.3 |
| 100 | | 2.9 |
| 1000 | | 2.8 |
| 10000 | | 2.5 |
| 100000 | | 2.3 |
| 300000 | | 1.9 |

**[Table 17]**

| Furfural concentration (ppm) | β-caryophyllene concentration (ppm) | | strength of mouth-coating feel |
|---|---|---|---|
| | | 0.001 | 0.5 |
| | | 0.01 | 0.9 |
| | | 0.1 | 1.3 |
| | | 1 | 1.6 |
| | | 10 | 1.8 |
| | | 100 | 2.0 |
| | | 1000 | 1.9 |
| | | 10000 | 1.8 |
| | | 100000 | 1.7 |
| | | 300000 | 1.5 |

**[Table 18]**

| Furfural concentration (ppm) | β-caryophyllene concentration (ppm) | strength of mouth-coating feel |
|---|---|---|
| | 100 | 2.0 |
| 0.001 | 100 | 2.3 |
| 0.01 | 100 | 2.5 |
| 0.1 | 100 | 3.7 |
| 1 | 100 | 3.1 |
| 10 | 100 | 3.3 |
| 100 | 100 | 4.3 |
| 1000 | 100 | 4.0 |
| 10000 | 100 | 4.0 |
| 100000 | 100 | 3.5 |
| 300000 | 100 | 3.0 |

**[Table 19]**

| Furfural concentration (ppm) | β-caryophyllene concentration (ppm) | | strength of mouth-coating feel |
|---|---|---|---|
| 100 | | | 2.9 |
| 100 | | 0.001 | 3.0 |
| 100 | | 0.01 | 3.3 |
| 100 | | 0.1 | 3.4 |
| 100 | | 1 | 3.8 |
| 100 | | 10 | 4.1 |
| 100 | | 100 | 4.3 |
| 100 | | 1000 | 4.2 |
| 100 | | 10000 | 4.0 |
| 100 | | 100000 | 3.8 |
| 100 | | 300000 | 3.8 |

As is clear from the results of Tables 16 - 19, the mouth-coating feel of each evaluation sample was enhanced by a component (A) heated substance and/or a component (B) heated substance (specifically, heated substance of β-caryophyllene and/or furfural, and safflower oil, etc.).

### (Experimental Example 14)

### <Synthesis Examples>

### (synthesis of clovanediol and clovanediol-3-monoacetate)

β-Caryophyllene oxide (11 mg) was dissolved in 80% acetic acid aqueous solution (1 mL), and left standing at room temperature for 11 days. Excessive solvent was evaporated under reduced pressure, and the residue was purified by reversed-phase high performance liquid chromatography (HPLC) (water-ethanol) to give the following compounds 1 (clovanediol) (1.2 mg), and compound 2 (clovanediol-3-monoacetate) (0.7 mg).

### compound 1 (clovanediol):

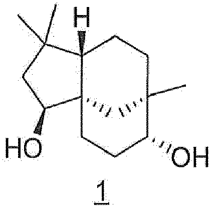

### compound 2 (clovanediol-3-monoacetate):

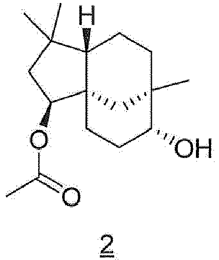

### (synthesis of clovanediol diacetate)

Clovanediol (5 mg) was dissolved in acetic acid (0.2 mL), and stirred at 80°C for 20 hr. The reaction mixture was concentrated to dryness under reduced pressure, and the obtained residue was purified by reversed-phase HPLC (water-ethanol) to give the following compound 3 (clovanediol diacetate) (1.2 mg).

### compound 3 (clovanediol diacetate):

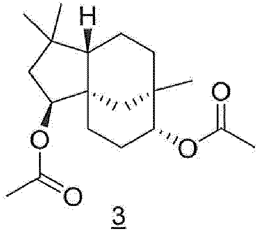

### (synthesis of clovanediol-3-monoisovalerate)

Clovanediol (5.7 mg) was dissolved in isovaleric acid (0.1 mL), and stirred at 80°C for 20 hr. To the reaction mixture was added saturated sodium bicarbonate aqueous solution, and the mixture was partitioned and extracted with ethyl acetate. The organic layer was dehydrated and dried over anhydrous sodium sulfate, and concentrated to dryness under reduced pressure. The obtained residue was purified by reversed-phase HPLC (water-ethanol) to give the following compound 4 (clovanediol-3-monoisovalerate) (2 mg).

### compound 4 (clovanediol-3-monoisovalerate):

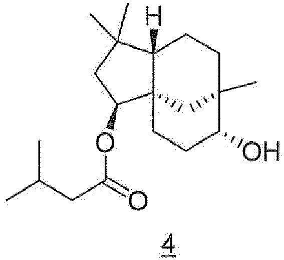

### (synthesis of 2-methoxyclovanol)

To a solution (2 mL) of β-caryophyllene oxide (227 mg) in methanol was added tetracyanoethylene (13 mg), and the mixture was stirred at room temperature for 20 hr. The reaction mixture was concentrated to dryness under reduced pressure and the obtained residue was purified by reversed-phase HPLC (water-acetonitrile) to give the following compound 5 (2-methoxyclovanol) (30 mg) .

### compound 5 (2-methoxyclovanol):

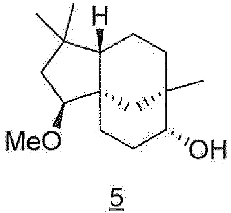

### synthesis of (1R,3Z,5R,9S)-4,11,11-trimethyl-8-methylenebicyclo[7.2.0]undec-3-en-5-ol and (1R,4R,5R,9S)-4,11,11-trimethyl-8-methylenebicyclo[7.2.0]undecane-4,5-diol)

β-Caryophyllene oxide (32 mg) was heated under reflux in acetic acid-sodium acetate buffer/acetonitrile (1:1) (1 mL, pH 4) for 3 hr. Water and n-hexane were added to the reaction mixture and the mixture was partitioned. The organic layer transfer fraction was purified by reversed-phase HPLC (water-acetonitrile) to give the following compound 6 (2.5 mg) and compound 7 (0.2 mg).

### compound 6 ((1R,3Z,5R,9S)-4,11,11-trimethyl-8-methylenebicyclo[7.2.0]undec-3-en-5-ol):

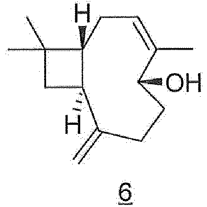

### compound 7 ((1R,4R,5R,9S)-4,11,11-trimethyl-8-methylenebicyclo[7.2.0]undecane-4,5-diol):

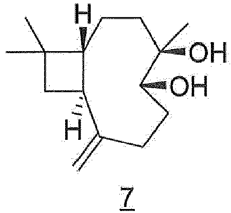

### (synthesis of caryophylladienol II)

To an acetone solution (2 mL) of β-caryophyllene oxide (235 mg) were added tetracyanoethylene (28 mg) and lithium bromide (465 mg), and the mixture was stirred at room temperature for 1 hr. To the reaction mixture was added 10% sodium thiosulfate aqueous solution, and the mixture was partitioned and extracted with hexane. The organic layer was dehydrated and dried over anhydrous sodium sulfate, and concentrated to dryness under reduced pressure. The residue was purified by reversed-phase HPLC (water-acetonitrile) to give the following compound 8 (caryophylladienol II) (105 mg).

### compound 8 (caryophylladienol II):

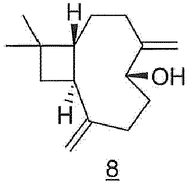

### (synthesis of (1S,5R,9R)-10,10-dimethyl-2,6-bis methylene-bicyclo[7.2.0]undecan-5-ol acetate and (1R,3EZ,5R,9S)-4,11,11-trimethyl-8-methylenebicyclo[7.2.0]undec-3-en-5-ol-5-acetate)

To a pyridine solution (0.1 mL) of caryophylladienol (12 mg) was added acetic anhydride (0.08 mL), and the mixture was left standing at room temperature for 20 hr. The mixture was concentrated to dryness under reduced pressure and the obtained residue was purified by reversed-phase HPLC (water-acetonitrile) to give the following compound 9 (2.1 mg), and compound 10 (0.7 mg).

### compound 9((1S,5R,9R)-10,10-dimethyl-2,6-bis methylene-bicyclo[7.2.0]undecan-5-ol acetate):

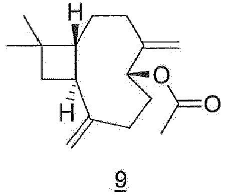

### compound 10 ((1R,3EZ,5R,9S)-4,11,11-trimethyl-8-methylenebicyclo[7.2.0]undec-3-en-5-ol-5-acetate):

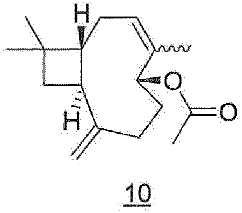

### <positive control and negative control>

As a positive control, general commercially available mayonnaise (manufactured by Ajinomoto Co., Inc., trade name "Pure Select (registered trade mark) mayonnaise", oil and fat content: 73%) added with ethanol (manufactured by Japan Alcohol Corporation) (0.001 wt%) was used.

As a negative control, commercially available mayonnaise (manufactured by Ajinomoto Co., Inc., trade name "Pure Select (registered trade mark) KOKUUMA (registered trade mark) 65% Calorie Cut", oil and fat content: 23%) with a smaller oil and fat content as compared with positive control mayonnaise and added with ethanol (manufactured by Japan Alcohol Corporation) (0.001 wt%) was used.

### <evaluation sample>

Given amounts of β-caryophyllene, β-caryophyllene oxide, clovanediol, (1R,3Z,5R,9S)-4,11,11-trimethyl-8-methylenebicyclo[7.2.0]undec-3-en-5-ol, (1R,4R,5R,9S)-4,11,11-trimethyl-8-methylenebicyclo[7.2.0]undecane-4,5-diol, clovanediol-3-monoacetate, clovanediol diacetate, clovanediol-3-monoisovalerate, α-pinene, α-pinene oxide, limonene, limonene oxide, α-terpineol (clovanediol, (1R,3Z,5R,9S)-4,11,11-trimethyl-8-methylenebicyclo[7.2.0]undec-3-en-5-ol, (1R,4R,5R,9S)-4,11,11-trimethyl-8-methylenebicyclo[7.2.0]undecane-4,5-diol, clovanediol-3-monoacetate, clovanediol diacetate and clovanediol-3-monoisovalerate used were those obtained in the above-mentioned Synthetic Examples and others used were manufactured by Sigma-Aldrich) were dissolved in ethanol (manufactured by Japan Alcohol Corporation), the ethanol (0.001 wt%) was added to the commercially available mayonnaise used for preparation of the above-mentioned negative control, and the obtained mayonnaise was used as an evaluation sample. The amounts of β-caryophyllene, β-caryophyllene oxide, clovanediol, (1R,3Z,5R,9S)-4,11,11-trimethyl-8-methylenebicyclo[7.2.0]undec-3-en-5-ol, (1R,4R,5R,9S)-4,11,11-trimethyl-8-methylenebicyclo[7.2.0]undecane-4,5-diol, clovanediol-3-monoacetate, clovanediol diacetate, clovanediol-3-monoisovalerate, α-pinene, α-pinene oxide, limonene, limonene oxide, α-terpineol dissolved in ethanol were each adjusted to fall within the range of 0.01 - 1 ppm with respect to mayonnaise, as shown in the following Table 20.

### <sensory evaluation>

For the evaluation of the strength of the mouth-coating feel, a panel of 3 experts ate each mayonnaise of positive control, negative control and evaluation sample, and graded the evaluation samples in 0.1 point increments in the range of 0.0 - 5.0 points, with the positive control being 5.0 points and the negative control being 0.0 point.

The results are shown in the following Table 20.

**[Table 20]**

| compound | concentration (ppm) | | strength of mouth-coating feel |
|---|---|---|---|
| β-caryophyllene | 0.01 | | 0.0 |
| β-caryophyllene | 0.1 | | 0.0 |
| β-caryophyllene | 1 | | 0.1 |
| β-caryophyllene oxide | 0.01 | | 1.5 |
| β-caryophyllene oxide | 0.1 | | 2.6 |
| β-caryophyllene oxide | 1 | | 3.6 |
| clovanediol | 1 | | 3.1 |
| (1R,3Z,5R,9S)-4,11,11-trimethyl-8-methylenebicyclo[7.2.0]undec-3-en-5-ol | 1 | | 3.0 |
| (1R,4R,5R,9S)-4,11,11-trimethyl-8-methylenebicyclo[7.2.0]undecane-4,5-diol | 1 | | 3.3 |
| clovanediol-3-monoacetate | 1 | | 3.0 |
| clovanediol diacetate | 1 | | 3.2 |
| clovanediol-3-monoisovalerate | 1 | | 3.2 |
| α-pinene | 1 | | 0.6 |
| α-pinene oxide | 1 | | 3.3 |
| limonene | 1 | | 0.0 |
| limonene oxide | 1 | | 2.8 |
| α-terpineol | 1 | | 2.0 |

As is clear from the results of Table 20, the mouth-coating feel of each evaluation sample was enhanced by the addition of β-caryophyllene oxide, clovanediol, (1R,3Z,5R,9S)-4,11,11-trimethyl-8-methylenebicyclo[7.2.0]undec-3-en-5-ol, (1R,4R,5R,9S)-4,11,11-trimethyl-8-methylenebicyclo[7.2.0]undecane-4,5-diol, clovanediol-3-monoacetate, clovanediol diacetate, clovanediol-3-monoisovalerate, α-pinene oxide, limonene oxide, α-terpineol.

### (Experimental Example 15)

### <production of control instant noodles>

Salt (1.6 parts by weight), potassium carbonate (food additive grade, 0.1 parts by weight) and sodium carbonate (food additive grade, 0.1 parts by weight) were dissolved in water (34 parts by weight), the obtained aqueous solution (kneading water, 35.8 parts by weight) was added to wheat flour (all purpose flour, 100 parts by weight), and the mixture was kneaded for 2 min. The obtained noodle dough was made into a sheet (thickness: 1.5±0.2 mm) using an electric pasta machine manufactured by MArcatoS.p.A., the both ends were cut off, and the sheet was cut into width 1 mm, length 30 cm. The obtained noodles were rubbed and then passed through a continuous steaming machine (manufactured by Fuji Manufacturing Co., Ltd.) and steamed with vapor at 100°C for 2 min. To 100 g of the steamed noodles was added 30 g of 5% salt solution heated to around 50°C to confer a taste to the noodles. The seasoned noodles were fried in oil (palm oil) at 145°C for 80 sec in a continuous fryer and cooled to room temperature to obtain instant noodles (the instant noodles are to be referred to as "control instant noodles" in the following). The instant noodles were stored in refrigerator at 5°C until use.

### <production of heated substance A>

β-Caryophyllene and furfural (both manufactured by Sigma-Aldrich) were each dissolved in medium chain fatty acid oil (manufactured by FUJI OIL CO., LTD.) each at 1000 ppm, and the medium chain fatty acid oil was heated in a mixer (T.K. COMBIMIX manufactured by PRIMIX Corporation) at 95°C for 30 min. (obtained heated substance is to be referred to as "heated substance A" in the following).

### <production of instant noodles of evaluation sample 15-1>

In the same manner as with the control except that 0.003 parts by weight of the heated substance A was further added and uniformly dispersed when preparing kneading water by dissolving salt, potassium carbonate and sodium carbonate in water, and the obtained dispersion (35.803 parts by weight) was added to wheat flour (100 parts by weight), instant noodles were produced (the instant noodles are to be referred to as "instant noodles of evaluation sample 15-1" in the following).

### <production of instant noodles of evaluation sample 15-2>

In the same manner as with the control except that 0.007 parts by weight of the heated substance A was further added and uniformly dispersed when preparing kneading water by dissolving salt, potassium carbonate and sodium carbonate in water, and the obtained dispersion (35.807 parts by weight) was added to wheat flour (100 parts by weight), instant noodles were produced (the instant noodles are to be referred to as "instant noodles of evaluation sample 15-2" in the following).

### <production of instant noodles of evaluation sample 15-3>

In the same manner as with the control except that 0.02 parts by weight of the heated substance A was further added and uniformly dispersed when preparing kneading water by dissolving salt, potassium carbonate and sodium carbonate in water, and the obtained dispersion (35.82 parts by weight) was added to wheat flour (100 parts by weight), instant noodles were produced (the instant noodles are to be referred to as "instant noodles of evaluation sample 15-3" in the following).

### <sensory evaluation>

100 g of the instant noodles of the evaluation samples 15-1 to 15-3 and control were each boiled in 300 g of hot water at 100°C for 3 min and sensory evaluation was performed. For sensory evaluation, a panel of three trained experts scored by consensus in 0.5 point increments based on the following criteria as regards "animal oil and fat-like richness" (thickness and sustained feeling expressed "from middle to later" (specifically, 3 seconds after the animal oil and fat is contained in the mouth) when the animal oil and fat is contained in the mouth), "animal oil and fat-like sweetness" expressed "from early to middle" (specifically, in 2 seconds after the animal oil and fat is contained in the mouth) when the animal oil and fat is contained in the mouth), and "mouth-coating feel" (sensation of oil clinging to the oral cavity when sipping noodles), of evaluation samples 15-1 to 15-3. Also, as a comprehensive evaluation, when the oil and fat sensation is greatly improved compared to the control instant noodles, it is judged as "⊙", and when the oil and fat sensation is imparted compared with the control instant noodles, it is judged as "**○**"**,** and when the oil and fat sensation is absent and equivalent to that of the control instant noodles, it is judged as "×".

### (evaluation criteria of animal oil and fat-like richness, animal oil and fat-like sweetness, and mouth-coating feel)

+2 points: strong compared with control
+1 point: slightly strong compared with control
0 point: equivalent to control
-1 point: slightly weak compared with control
-2 points: weak compared with control

The evaluation results are shown in the following Table 21.

**[Table 21]**

| | control | evaluation sample | | |
|---|---|---|---|---|
| | | 15-1 | 15-2 | 15-3 |
| animal oil and fat-like richness | 0 | 1.0 | 1.5 | 2.0 |
| animal oil and fat-like sweetness | 0 | 1.0 | 1.5 | 2.0 |
| mouth-coating feel | 0 | 1.0 | 1.5 | 2.0 |
| total evaluation | × | ○ | ○ | ⊙ |

As is clear from the results of Table 21, the mouth-coating feel of each evaluation sample was enhanced by the component (A) heated substance and/or the component (B) heated substance (specifically, heated substance of β-caryophyllene, furfural and medium chain fatty acid oil). In addition, the animal oil and fat-like richness and sweetness were also enhanced.

### (Experimental Example 16)

### <preparation method of creaming powder>

### (model creaming powder 1)

Model creaming powder 1 was prepared as follows. First, among the raw materials shown in Table 22 below, sodium hydroxide, acid casein, dipotassium hydrogen phosphate and corn syrup solids were mixed in hot water at 60°C at the ratio shown in Table 22. Then, the remaining raw materials (hydrogenated palm kernel oil, monoglyceride fatty acid ester and sorbitan fatty acid ester) were added to the obtained mixture at the ratios shown in Table 22 and mixed. The obtained mixture was stirred using a homomixer (product name: "LABOLUTION", manufactured by PRIMIX Corporation) at 8000 rpm for 15 min to allow for pre-emulsification. Then, the obtained emulsion was homogenized at 400 kg/cm² using a homogenizer (product name: "APV-2000", manufactured by APV). The homogenized emulsion was spray-dried using a spray dryer (product name: "Mini Spray Dryer B-290" manufactured by BUCHI) under the conditions of intake air temperature of 180°C, exhaust gas temperature of 90°C to obtain a creaming powder (model creaming powder 1).

**[Table 22]**

| raw materials | blending ratio (wt%) | |
|---|---|---|
| corn syrup solids | 25.77 | |
| acid casein | 1.75 | |
| sodium hydroxide | 0.08 | |
| hydrogenated palm kernel oil | 20 | |
| dipotassium hydrogen phosphate | 1.5 | |
| monoglyceride fatty acid ester | 0.6 | |
| sorbitan fatty acid ester | 0.3 | |
| water | 50 | |
| total | 100 | |

### (model creaming powder 2)

A creaming powder (model creaming powder 2) was obtained by the same procedure as for model creaming powder 1 except that the emulsion obtained after pre-emulsification was heated at 95°C for 30 min in a water bath (product name: "EC-Water Bath", manufactured by AS ONE CORPORATION) before homogenization.

### (model creaming powder 3)

A creaming powder (model creaming powder 3) was obtained by the same procedure as for model creaming powder 1 except that the raw materials shown in the following Table 23 were used instead of the raw materials shown in Table 22.

Specifically, first, among the raw materials shown in Table 23 below, sodium hydroxide, acid casein, dipotassium hydrogen phosphate and corn syrup solids were mixed in hot water at 60°C at the ratio shown in Table 23. Then, the remaining raw materials (hydrogenated palm kernel oil, monoglyceride fatty acid ester and sorbitan fatty acid ester, caryophyllene, furfural) were added to the obtained mixture at the ratios shown in Table 23 and mixed. The obtained mixture was stirred using a homomixer (product name: "LABOLUTION", manufactured by PRIMIX Corporation) at 8000 rpm for 15 min to allow for pre-emulsification. Then, the obtained emulsion was homogenized at 400 kg/cm² using a homogenizer (product name: "APV-2000", manufactured by APV). The homogenized emulsion was spray-dried using a spray dryer (product name: "Mini Spray Dryer B-290" manufactured by BUCHI) under the conditions of intake air temperature of 180°C, exhaust gas temperature of 90°C to obtain a creaming powder (model creaming powder 3).

**[Table 23]**

| raw materials | blending ratio (wt%) |
|---|---|
| corn syrup solids | 25.73 |
| acid casein | 1.75 |
| sodium hydroxide | 0.08 |
| hydrogenated palm kernel oil | 20 |
| dipotassium hydrogen phosphate | 1.5 |
| sorbitan fatty acid ester | 0.6 |
| monoglyceride fatty acid ester | 0.3 |
| β-caryophyllene | 0.02 |
| furfural | 0.02 |
| water | 50 |
| total | 100 |

### (model creaming powder 4)

A creaming powder (model creaming powder 4) was obtained by the same procedure as for model creaming powder 3 except that the emulsion obtained after pre-emulsification was heated at 95°C for 30 min in a water bath (product name: "EC-Water Bath", manufactured by AS ONE CORPORATION) before homogenization.

All the raw materials used for the preparation of model creaming powders 1 - 4 were commercially available products. The manufacturer of each raw material is shown in the following Table 24.

**[Table 24]**

| raw material name | manufacturer |
|---|---|
| corn syrup solids | Showa Sangyo Co., Ltd. |
| acid casein | Westland Milk products |
| hydrogenated palm kernel oil | J-OIL MILLS, Inc. |
| sorbitan fatty acid ester | Kao Corporation |
| monoglyceride fatty acid ester | RIKEN VITAMIN CO., LTD. |
| dipotassium hydrogen phosphate | TAIHEI CHEMICAL INDUSTRIAL CO., LTD. |

### <preparation of evaluation samples (cafe au lait of experimental plots 1 - 8)>

Boiling hot water (180 mL) was poured into a cup containing commercially available instant coffee powder (manufactured by Ajinomoto AGF, Inc.), any one of the model creaming powders 1 - 4, and granulated sugar (manufactured by Mitsui Sugar Co., Ltd.), in the amounts shown in the following Table 25, and stirred for several seconds until the powder was completely dissolved to respectively prepare cafe au lait of experimental plots 1 - 8.

**[Table 25]**

| | experimental plot 1 | experimental plot 2 | experimental plot 3 | experimental plot 4 | experimental plot 5 | experimental plot 6 | experimental plot 7 | experimental plot 8 |
|---|---|---|---|---|---|---|---|---|
| amount of instant coffee powder (g) | 1.5 | 1.5 | 1.5 | 1.5 | 1.5 | 1.5 | 1.65 | 1.95 |
| amount of model creaming powder (g) | 7 | 10.5 | 9.1 | 7 | 7 | 7 | 7 | 7 |
| number of model creaming powder used | 1 | 1 | 1 | 2 | 4 | 3 | 1 | 1 |
| presence or absence of heating during preparation of model creaming powder | absent | absent | absent | present | present | absent | absent | absent |
| amount of granulated sugar (g) | 6 | 6 | 6 | 6 | 6 | 6 | 6 | 6 |

### <sensory evaluation>

The strength of mouth-coating feel (oil and fat-like thickness that spreads throughout the oral cavity), milk sensation (milk-like aroma and sweetness), coffee roasting sensation (coffee-like fragrant aroma and bitter taste) of the cafe au lait of experimental plots 1 - 8 were evaluated by a panel of 6 experts based on scores in 1-point increments on a 5-point scale (1-5 points: 1 point is the weakest and 5 points is the strongest). Specifically, using experimental plot 1 as the standard, all of the mouth-coating feel, milk sensation and coffee roasting sensation thereof were defined as 1 point each. In addition, the mouth-coating feel and milk sensation when the amount of model creaming powder of experimental plot 1 was increased 1.5 times (experimental plot 2) were defined as 5 points each. Furthermore, the coffee roasting sensation when the amount of the instant coffee powder of experimental plot 1 was increased 1.1 times (experimental plot 7) was defined as 3 points. The scores given by each expert panel were averaged, and the average score obtained was used as the evaluation of each cafe au lait. The evaluation results are shown in the following Table 26.

**[Table 26]**

| | experimental plot 1 | experimental plot 2 | experimental plot 3 | experimental plot 4 | experimental plot 5 | experimental plot 6 | experimental plot 7 | experimental plot 8 |
|---|---|---|---|---|---|---|---|---|
| mouth-coating feel | 1 | 5 | 3.3 | 2.2 | 4.3 | 1.5 | 1 | 1 |
| milk sensation | 1 | 5 | 3.3 | 1.7 | 2.8 | 1.5 | 1 | 1 |
| coffee roasting sensation | 1 | 1 | 1 | 1.7 | 3.2 | 1.3 | 3 | 5 |

As is clear from the results of Table 26, the mouth-coating feel, milk sensation and coffee roasting sensation of experimental plot 5 using the component (A) heated substance and/or the component (B) heated substance (specifically, heated substance of β-caryophyllene, furfural and hydrogenated palm kernel oil, and the like) were enhanced.

### (Experimental Example 17)

### <preparation method of creaming powder>

### (model creaming powder 5)

Model creaming powder 5 was prepared as follows. First, among the raw materials shown in the above-mentioned Table 23, sodium hydroxide, acid casein, dipotassium hydrogen phosphate and corn syrup solids were mixed in hot water at 60°C at the ratio shown in Table 17. Then, the remaining raw materials (hydrogenated palm kernel oil, monoglyceride fatty acid ester and sorbitan fatty acid ester, caryophyllene, furfural) were added to the obtained mixture at the ratios shown in Table 23 and mixed. The obtained mixture was stirred using a homomixer (product name: "LABOLUTION", manufactured by PRIMIX Corporation) at 8000 rpm for 15 min to allow for pre-emulsification. Then, the obtained emulsion was sterilized by heating using Ultra High Temperature (UHT) sterilizer for laboratory (product name: "ECONOLAB-T MK-2", manufactured by Powerpoint International Ltd.) at 95°C for 15 sec, and then homogenized at 400 kg/cm² using a homogenizer (product name: "APV-2000", manufactured by APV). The homogenized emulsion was spray-dried using a spray dryer (product name: "Mini Spray Dryer B-290" manufactured by BUCHI) under the conditions of intake air temperature of 180°C, exhaust gas temperature of 90°C to obtain a creaming powder (model creaming powder 5).

The raw materials used for the preparation of model creaming powder 5 were the same as those used for the preparation of model creaming powders 1 - 4.

### <preparation of evaluation sample (cafe au lait of experimental plot 9)>

Boiling hot water (180 mL) was poured into a cup containing commercially available instant coffee powder (manufactured by Ajinomoto AGF, Inc.), model creaming powder 7, and granulated sugar (manufactured by Mitsui Sugar Co., Ltd.), in the amounts shown in the following Table 27, and stirred for several seconds until the powder was completely dissolved to prepare cafe au lait of experimental plot 9.

**[Table 27]**

| | experimental plot 9 |
|---|---|
| amount of instant coffee powder (g) | 1.5 |
| amount of model creaming powder (g) | 7 |
| number of model creaming powder used | 9 |
| amount of granulated sugar (g) | 6 |

### <sensory evaluation>

The strength of mouth-coating feel, milk sensation, and coffee roasting sensation of the cafe au lait of experimental plot 9 were evaluated by a method similar to that in Experimental Example 16. The results evaluation are shown in the following Table 28.

**[Table 28]**

| | experimental plot 9 |
|---|---|
| mouth-coating feel | 3.5 |
| milk sensation | 1.5 |
| coffee roasting sensation | 3 |

As is clear from the results of Table 28, the mouth-coating feel and coffee roasting sensation were sufficiently enhanced by the heated substance obtained by heating β-caryophyllene, furfural, hydrogenated palm kernel oil, and the like at 95°C for 15 sec.

### (Experimental Example 18)

### <preparation method of creaming powder>

### (model creaming powder 6)

Model creaming powder 6 was prepared as follows. First, among the raw materials shown in the above-mentioned Table 23, sodium hydroxide, acid casein, dipotassium hydrogen phosphate and corn syrup solids were mixed in hot water at 60°C at the ratio shown in Table 17. Then, the remaining raw materials (hydrogenated palm kernel oil, monoglyceride fatty acid ester and sorbitan fatty acid ester, caryophyllene, furfural) were added to the obtained mixture at the ratios shown in Table 23 and mixed. The obtained mixture was stirred using a homomixer (product name: "LABOLUTION", manufactured by PRIMIX Corporation) at 8000 rpm for 15 min to allow for pre-emulsification. Then, the obtained emulsion was heated in a water bath (product name: "EC-water bath", manufactured by AS ONE CORPORATION) at 95°C for 10 min, and then homogenized at 400 kg/cm² using a homogenizer (product name: "APV-2000", manufactured by APV). The homogenized emulsion was spray-dried using a spray dryer (product name: "Mini Spray Dryer B-290" manufactured by BUCHI) under the conditions of intake air temperature of 180°C, exhaust gas temperature of 90°C to obtain a creaming powder (model creaming powder 6).

### (model creaming powder 7)

A creaming powder (model creaming powder 7) was obtained by the same procedure as for model creaming powder 6 except that the emulsion obtained after pre-emulsification was heated at 95°C for 60 min in a water bath before homogenization.

### (model creaming powder 8)

A creaming powder (model creaming powder 8) was obtained by the same procedure as for model creaming powder 6 except that the emulsion obtained after pre-emulsification was heated at 80°C for 10 min in a water bath before homogenization.

### (model creaming powder 9)

A creaming powder (model creaming powder 9) was obtained by the same procedure as for model creaming powder 6 except that the emulsion obtained after pre-emulsification was heated at 80°C for 30 min in a water bath before homogenization.

### (model creaming powder 10)

A creaming powder (model creaming powder 10) was obtained by the same procedure as for model creaming powder 6 except that the emulsion obtained after pre-emulsification was heated at 80°C for 60 min in a water bath before homogenization.

### (model creaming powder 11)

A creaming powder (model creaming powder 11) was obtained by the same procedure as for model creaming powder 6 except that the emulsion obtained after pre-emulsification was heated at 70°C for 10 min in a water bath before homogenization.

### (model creaming powder 12)

A creaming powder (model creaming powder 12) was obtained by the same procedure as for model creaming powder 6 except that the emulsion obtained after pre-emulsification was heated at 70°C for 30 min in a water bath before homogenization.

### (model creaming powder 13)

A creaming powder (model creaming powder 13) was obtained by the same procedure as for model creaming powder 6 except that the emulsion obtained after pre-emulsification was heated at 70°C for 60 min in a water bath before homogenization.

The heating conditions (heating temperature, heating time) for the emulsions obtained after pre-emulsification in the preparation of model creaming powders 6 - 13 are shown in the following Table 29.

**[Table 29]**

| | | heating time (min) | | |
|---|---|---|---|---|
| | | 10 | 30 | 60 |
| heating temperature (°C) | 95 | model creaming powder 6 | model creaming powder 4 | model creaming powder 7 |
| | 80 | model creaming powder 8 | model creaming powder 9 | model creaming powder 10 |
| | 70 | model creaming powder 11 | model creaming powder 12 | model creaming powder 13 |

The raw materials used for the preparation of model creaming powders 6 - 13 were the same as those used for the preparation of model creaming powders 1 - 4.

### <preparation of evaluation samples (cafe au lait of experimental plots 10 - 17)>

Boiling hot water (180 mL) was poured into a cup containing commercially available instant coffee powder (manufactured by Ajinomoto AGF, Inc.), any one of the model creaming powders 6 - 13, and granulated sugar (manufactured by Mitsui Sugar Co., Ltd.), in the amounts shown in the following Table 30, and stirred for several seconds until the powder was completely dissolved to respectively prepare cafe au lait of experimental plots 10 - 17.

**[Table 30]**

| | experimental plot 10 | experimental plot 11 | experimental plot 12 | experimental plot 13 | experimental plot 14 | experimental plot 15 | experimental plot 16 | experimental plot 17 |
|---|---|---|---|---|---|---|---|---|
| amount of instant coffee powder (g) | 1.5 | 1.5 | 1.5 | 1.5 | 1.5 | 1.5 | 1.5 | 1.5 |
| amount of model creaming powder (g) | 7 | 7 | 7 | 7 | 7 | 7 | 7 | 7 |
| number of model creaming powder used | 6 | 7 | 8 | 9 | 10 | 11 | 12 | 13 |
| amount of granulated sugar (g) | 6 | 6 | 6 | 6 | 6 | 6 | 6 | 6 |

### <sensory evaluation>

The strength of mouth-coating feel, milk sensation, and coffee roasting sensation of the cafe au lait of experimental plots 10 - 17 were evaluated by a method similar to that in Experimental Example 16. The results evaluation are shown in the following Table 31.

**[Table 31]**

| | experimental plot 10 | experimental plot 11 | experimental plot 12 | experimental plot 13 | experimental plot 14 | experimental plot 15 | experimental plot 16 | experimental plot 17 |
|---|---|---|---|---|---|---|---|---|
| mouth-coating feel | 3.5 | 4.3 | 1.5 | 3.8 | 4 | 1.5 | 1.7 | 2 |
| milk sensation | 2 | 3 | 1.5 | 2.9 | 2.9 | 1.5 | 1.5 | 1.7 |
| coffee roasting sensation | 3 | 3 | 1.5 | 3.2 | 3.2 | 1.3 | 1.3 | 1.3 |

As is clear from the results of Table 31, the mouth-coating feel and milk sensation were sufficiently enhanced by the heated substance obtained by heating β-caryophyllene, furfural, hydrogenated palm kernel oil, and the like at 70°C or higher.

### (Experimental Example 19)

### <preparation method of creaming powder>

### (model creaming powders 14 - 17)

Model creaming powders 14 - 17 were prepared as follows. First, among the raw materials shown in the following Table 32, sodium hydroxide, acid casein, dipotassium hydrogen phosphate and corn syrup solids were mixed in hot water at 60°C at the ratio shown in Table 32. Then, the remaining raw materials (hydrogenated palm kernel oil, monoglyceride fatty acid ester and sorbitan fatty acid ester, caryophyllene, furfural) were added to the obtained mixture at the ratios shown in Table 32 and mixed. The obtained mixture was stirred using a homomixer (product name: "LABOLUTION", manufactured by PRIMIX Corporation) at 8000 rpm for 15 min to allow for pre-emulsification. Then, the obtained emulsion was heated in a water bath (product name: "EC-water bath", manufactured by AS ONE CORPORATION) at 95°C for 30 min, and then homogenized at 400 kg/cm² using a homogenizer (product name: "APV-2000", manufactured by APV). The homogenized emulsion was spray-dried using a spray dryer (product name: "Mini Spray Dryer B-290" manufactured by BUCHI) under the conditions of intake air temperature of 180°C, exhaust gas temperature of 90°C to respectively obtain creaming powders (model creaming powders 14 - 17).

**[Table 32]**

| blending of model creaming powders 14 - 17 (unit: wt%) | | | | |
|---|---|---|---|---|
| raw materials | model creaming powder | | | |
| | 14 | 15 | 16 | 17 |
| corn syrup solids | 25.73 | 25.73 | 25.73 | 25.73 |
| acid casein | 1.75 | 1.75 | 1.75 | 1.75 |
| sodium hydroxide | 0.08 | 0.08 | 0.08 | 0.08 |
| hydrogenated palm kernel oil | 20 | 20 | 20 | 20 |
| dipotassium hydrogen phosphate | 1.5 | 1.5 | 1.5 | 1.5 |
| sorbitan fatty acid ester | 0.6 | 0.6 | 0.6 | 0.6 |
| monoglyceride fatty acid ester | 0.3 | 0.3 | 0.3 | 0.3 |
| β-caryophyllene | 0.027 | 0.013 | 0.033 | 0.007 |
| furfural | 0.013 | 0.027 | 0.007 | 0.033 |
| water | 50 | 50 | 50 | 50 |
| total | 100 | 100 | 100 | 100 |

The raw materials used for the preparation of model creaming powders 14 - 17 were the same as those used for the preparation of model creaming powders 1 - 4.

### <preparation of evaluation samples (cafe au lait of experimental plots 18 - 21)>

Boiling hot water (180 mL) was poured into a cup containing commercially available instant coffee powder (manufactured by Ajinomoto AGF, Inc.), any one of the model creaming powders 16 - 19, and granulated sugar (manufactured by Mitsui Sugar Co., Ltd.), in the amounts shown in the following Table 33, and stirred for several seconds until the powder was completely dissolved to respectively prepare cafe au lait of experimental plots 18 - 21.

**[Table 33]**

| | experimental plot 18 | experimental plot 19 | experimental plot 20 | experimental plot 21 |
|---|---|---|---|---|
| amount of instant coffee powder (g) | 1.5 | 1.5 | 1.5 | 1.5 |
| amount of model creaming powder (g) number of model creaming powder used | 7 | 7 | 7 | 7 |
| | 14 | 15 | 16 | 17 |
| amount of granulated sugar (g) | 6 | 6 | 6 | 6 |

### <sensory evaluation>

The strength of mouth-coating feel, milk sensation, and coffee roasting sensation of the cafe au lait of experimental plots 18 - 21 were evaluated by a method similar to that in Experimental Example 16. The results evaluation are shown in the following Table 34.

**[Table 34]**

| | experimental plot 18 | experimental plot 19 | experimental plot 20 | experimental plot 21 |
|---|---|---|---|---|
| mouth-coating feel | 3 | 2 | 3 | 1.3 |
| milk sensation | 2.8 | 2 | 2.8 | 1.3 |
| coffee roasting sensation | 1 | 2.6 | 1 | 3.5 |

As shown in Table 34, the roasting sensation of coffee tended to be sufficiently enhanced when the proportion of furfural is higher than that of β-caryophyllene.

The sample of experimental plot 21 showed a strong coffee roasting sensation, and it is thus considered that the mouth-coating feel and milk sensation could not be evaluated sufficiently.

### [Industrial Applicability]

According to the present invention, a mouth-coating feel enhancer capable of enhancing a mouth-coating feel, and a production method thereof can be provided.

According to the present invention, moreover, a food with an enhanced mouth-coating feel, and a production method thereof can be provided.

According to the present invention, moreover, a method for enhancing a mouth-coating feel can be provided.

According to the present invention, moreover, a coffee-roasting sensation enhancer capable of enhancing a coffee-roasting sensation, and a production method thereof can be provided.

According to the present invention, moreover, a coffee drink with an enhanced coffee-roasting sensation, and a production method thereof can be provided.

According to the present invention, moreover, a method for enhancing a coffee-roasting sensation can be provided.

This application is based on a patent application No. 2019-046558 filed in Japan (filing date: March 13, 2019), the contents of which are incorporated in full herein.

## Claims

1. A mouth-coating feel enhancer comprising a heated substance of the following (A) and/or a heated substance of the following (B), or at least one compound selected from the following compound group (C):
(A) (A1) a compound represented by the formula (I): 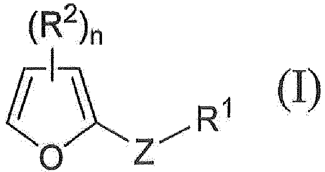 wherein
R¹ is an acyl group having 1 - 6 carbon atoms, a hydroxy group or a pyrrole group;
Z is a single bond or an alkylene group having 1 - 6 carbon atoms;
R² is a substituent; and
n is an integer of 0 - 3, and
(A2) at least one selected from the group consisting of an aliphatic aldehyde having 3 - 14 carbon atoms, an aromatic aldehyde having 7 - 12 carbon atoms, an aliphatic alcohol having 3 - 12 carbon atoms, and a substance that produces at least one of these compounds by heating
(B) at least one compound selected from the group consisting of β-caryophyllene and a β-caryophyllene analogous compound [compound group (C)]
β-caryophyllene oxide
α-pinene oxide
limonene oxide
α-terpineol
a compound represented by the formula (II): 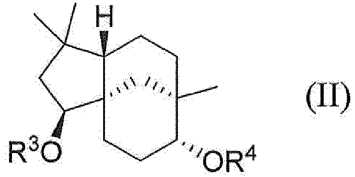
wherein R³ and R⁴ are each independently a hydrogen atom, an acyl group having 1 - 18 carbon atoms or an alkyl group having 1 - 6 carbon atoms
a compound represented by the formula (III): 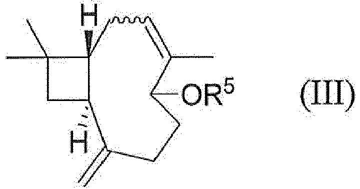
wherein R⁵ is a hydrogen atom, an acyl group having 1 - 6 carbon atoms or an alkyl group having 1 - 6 carbon atoms
a compound represented by the formula (IV): 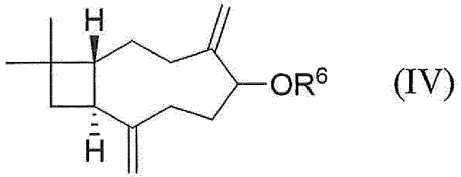
wherein R⁶ is a hydrogen atom, an acyl group having 1 - 6 carbon atoms, or an alkyl group having 1 - 6 carbon atoms
a compound represented by the formula (V): 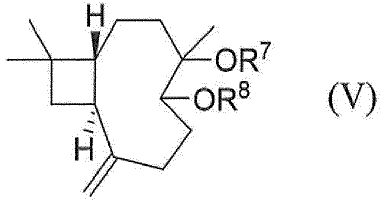
wherein R⁷ and R⁸ are each independently a hydrogen atom, an acyl group having 1 - 6 carbon atoms, or an alkyl group having 1 - 6 carbon atoms (1S,6S,9R)-6,10,10-trimethyl-2-methylenebicyclo[7.2.0]undecan-5-one (1S,6R,9R)-6,10,10-trimethyl-2-methylenebicyclo[7.2.0]undecan-5-one (1R,4R,8S)-4,10,10-trimethyl-7-methylenebicyclo[6.2.0]decane-4-carboxaldehyde (1R,4S,8S)-4,10,10-trimethyl-7-methylenebicyclo[6.2.0]decane-4-carboxaldehyde (1S,2S,5R,9S)-1,4,4,8-tetramethyl-12-oxatricyclo[7.2.1.0^{2,5}]dodec-7-ene (1R,2S,5R,8R,9R)-1,4,4,8-tetramethyl-12-oxatricyclo[6.3.1.0^{2,5}]dodecan-9-ol (1R,2S,5R,8R,9S)-1,4,4,8-tetramethyl-12-oxatricyclo[6.3.1.0^{2,5}]dodecan-9-ol [1R-(1α,2α,5β,8β,9α)]-4,4,8-trimethyl-tricyclo[6.3.1.0^{2,5}]dodecane-1,9-diol.

2. The mouth-coating feel enhancer according to claim 1, wherein, in the aforementioned formula (I), R¹ is a formyl group or an acetyl group, and Z is a single bond, or
in the aforementioned formula (I), R¹ is a hydroxy group or a pyrrole group, and Z is a methylene group.

3. The mouth-coating feel enhancer according to claim 1 or 2, wherein R² is an alkyl group having 1 - 6 carbon atoms.

4. The mouth-coating feel enhancer according to any one of claims 1 to 3, wherein n is 0 or 1.

5. The mouth-coating feel enhancer according to any one of claims 1 to 4, wherein the aforementioned compound represented by the formula (I) is at least one compound selected from the group consisting of furfural, 5-methylfurfural, 2-furylmethylketone, furfuryl alcohol, and 1-furfurylpyrrole.

6. The mouth-coating feel enhancer according to any one of claims 1 to 5, wherein the aforementioned (A2) is oil or fat.

7. The mouth-coating feel enhancer according to any one of claims 1 to 6, wherein the β-caryophyllene analogous compound is at least one compound selected from the group consisting of isocaryophyllene, β-pinene, sabinene, 4-allyl-2,6-dimethoxyphenol, eugenol, limonene, 4-vinylphenol, linalool, linalool oxide, p-cymene, farnesene, myrcene, ocimene, α-phellandrene, α-terpinene, γ-terpinene and terpinolene.

8. The mouth-coating feel enhancer according to claim 1, wherein the at least one compound selected from compound group (C) is at least one compound selected from the group consisting of β-caryophyllene oxide, (1R,3Z,5R,9S)-4,11,11-trimethyl-8-methylenebicyclo[7.2.0]undec-3-en-5-ol, (1R,4R,5R,9S)-4,11,11-trimethyl-8-methylenebicyclo[7.2.0]undecane-4,5-diol, α-pinene oxide, limonene oxide, α-terpineol, clovanediol, clovanediol-3-monoacetate, clovanediol diacetate and clovanediol-3-monoisovalerate.

9. The mouth-coating feel enhancer according to any one of claims 1 to 8, wherein the enhancer is for a food containing oil or fat.

10. A method for enhancing a mouth-coating feel, comprising adding a heated substance of the following (A) and/or a heated substance of the following (B), or at least one compound selected from the following compound group (C):
(A) (A1) a compound represented by the formula (I): 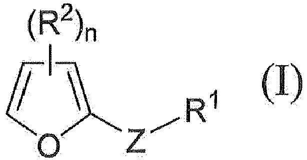 wherein
R¹ is an acyl group having 1 - 6 carbon atoms, a hydroxy group or a pyrrole group;
Z is a single bond or an alkylene group having 1 - 6 carbon atoms;
R² is a substituent; and
n is an integer of 0 - 3, and
(A2) at least one selected from the group consisting of an aliphatic aldehyde having 3 - 14 carbon atoms, an aromatic aldehyde having 7 - 12 carbon atoms, an aliphatic alcohol having 3 - 12 carbon atoms, and a substance that produces at least one of these compounds by heating
(B) at least one compound selected from the group consisting of β-caryophyllene and a β-caryophyllene analogous compound [compound group (C)]
β-caryophyllene oxide
α-pinene oxide
limonene oxide
α-terpineol
a compound represented by the formula (II): 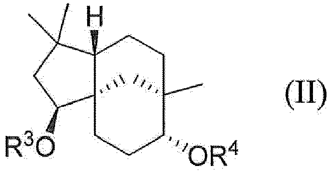
wherein R³ and R⁴ are each independently a hydrogen atom, an acyl group having 1 - 18 carbon atoms or an alkyl group having 1 - 6 carbon atoms
a compound represented by the formula (III): 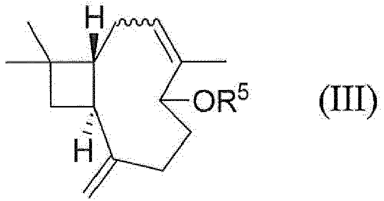
wherein R⁵ is a hydrogen atom, an acyl group having 1 - 6 carbon atoms or an alkyl group having 1 - 6 carbon atoms
a compound represented by the formula (IV): 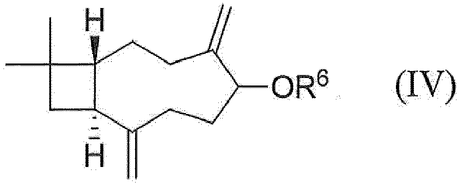
wherein R⁶ is a hydrogen atom, an acyl group having 1 - 6 carbon atoms, or an alkyl group having 1 - 6 carbon atoms
a compound represented by the formula (V): 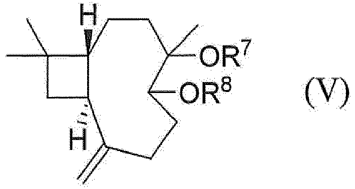
wherein R⁷ and R⁸ are each independently a hydrogen atom, an acyl group having 1 - 6 carbon atoms, or an alkyl group having 1 - 6 carbon atoms (1S,6S,9R)-6,10,10-trimethyl-2-methylenebicyclo[7.2.0]undecan-5-one (1S,6R,9R)-6,10,10-trimethyl-2-methylenebicyclo[7.2.0]undecan-5-one (1R,4R,8S)-4,10,10-trimethyl-7-methylenebicyclo[6.2.0]decane-4-carboxaldehyde (1R,4S,8S)-4,10,10-trimethyl-7-methylenebicyclo[6.2.0]decane-4-carboxaldehyde (1S,2S,5R,9S)-1,4,4,8-tetramethyl-12-oxatricyclo[7.2.1.0^{2,5}]dodec-7-ene (1R,2S,5R,8R,9R)-1,4,4,8-tetramethyl-12-oxatricyclo[6.3.1.0^{2,5}]dodecan-9-ol (1R,2S,5R,8R,9S)-1,4,4,8-tetramethyl-12-oxatricyclo[6.3.1.0^{2,5}]dodecan-9-ol [1R-(1α,2α,5β,8β,9α)]-4,4,8-trimethyl-tricyclo[6.3.1.0^{2,5}]dodecane-1,9-diol.

11. The method according to claim 10, wherein, in the aforementioned formula (I), R¹ is a formyl group or an acetyl group, and Z is a single bond, or
in the aforementioned formula (I), R¹ is a hydroxy group or a pyrrole group, and Z is a methylene group.

12. The method according to claim 10 or 11, wherein R² is an alkyl group having 1 - 6 carbon atoms.

13. The method according to any one of claims 10 to 12, wherein n is 0 or 1.

14. The method according to any one of claims 10 to 13, wherein the aforementioned compound represented by the formula (I) is at least one compound selected from the group consisting of furfural, 5-methylfurfural, 2-furylmethylketone, furfuryl alcohol, and 1-furfurylpyrrole.

15. The method according to any one of claims 10 to 14, wherein the aforementioned (A2) is oil or fat.

16. The method according to any one of claims 10 to 15, wherein the β-caryophyllene analogous compound is at least one compound selected from the group consisting of isocaryophyllene, β-pinene, sabinene, 4-allyl-2,6-dimethoxyphenol, eugenol, limonene, 4-vinylphenol, linalool, linalool oxide, p-cymene, farnesene, myrcene, ocimene, α-phellandrene, α-terpinene, γ-terpinene and terpinolene.

17. The method according to claim 10, wherein the at least one compound selected from compound group (C) is at least one compound selected from the group consisting of β-caryophyllene oxide, (1R,3Z,5R,9S)-4,11,11-trimethyl-8-methylenebicyclo[7.2.0]undec-3-en-5-ol, (1R,4R,5R,9S)-4,11,11-trimethyl-8-methylenebicyclo[7.2.0]undecane-4,5-diol, α-pinene oxide, limonene oxide, α-terpineol, clovanediol, clovanediol-3-monoacetate, clovanediol diacetate and clovanediol-3-monoisovalerate.

18. The method according to any one of claims 10 to 17, wherein the method is a method for enhancing a mouth-coating feel of a food containing oil or fat.

19. A method for producing a food, comprising heating the following (A) and/or (B), or adding at least one compound selected from the following compound group (C) :
(A) (A1) a compound represented by the formula (I): 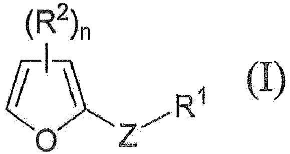 wherein
R¹ is an acyl group having 1 - 6 carbon atoms, a hydroxy group or a pyrrole group;
Z is a single bond or an alkylene group having 1 - 6 carbon atoms;
R² is a substituent; and
n is an integer of 0 - 3, and
(A2) at least one selected from the group consisting of an aliphatic aldehyde having 3 - 14 carbon atoms, an aromatic aldehyde having 7 - 12 carbon atoms, an aliphatic alcohol having 3 - 12 carbon atoms and a substance that produces at least one of these compounds by heating
(B) at least one compound selected from the group consisting of
β-caryophyllene and a β-caryophyllene analogous compound [compound group (C)]
β-caryophyllene oxide
α-pinene oxide
limonene oxide
α-terpineol
a compound represented by the formula (II): 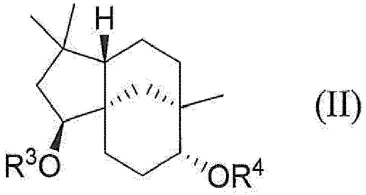
wherein R³ and R⁴ are each independently a hydrogen atom, an acyl group having 1 - 18 carbon atoms or an alkyl group having 1 - 6 carbon atoms
a compound represented by the formula (III): 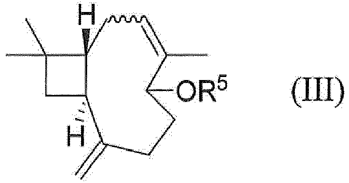
wherein R⁵ is a hydrogen atom, an acyl group having 1 - 6 carbon atoms or an alkyl group having 1 - 6 carbon atoms
a compound represented by the formula (IV): 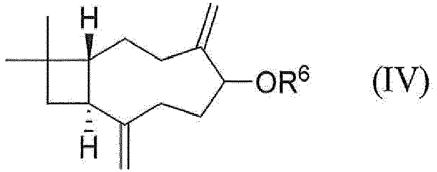
wherein R⁶ is a hydrogen atom, an acyl group having 1 - 6 carbon atoms, or an alkyl group having 1 - 6 carbon atoms
a compound represented by the formula (V): 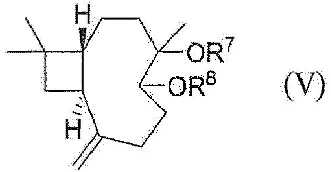
wherein R⁷ and R⁸ are each independently a hydrogen atom, an acyl group having 1 - 6 carbon atoms, or an alkyl group having 1 - 6 carbon atoms
(1S,6S,9R)-6,10,10-trimethyl-2-methylenebicyclo[7.2.0]undecan-5-one
(1S,6R,9R)-6,10,10-trimethyl-2-methylenebicyclo[7.2.0]undecan-5-one
(1R,4R,8S)-4,10,10-trimethyl-7-methylenebicyclo[6.2.0]decane-4-carboxaldehyde
(1R,4S,8S)-4,10,10-trimethyl-7-methylenebicyclo[6.2.0]decane-4-carboxaldehyde
(1S,2S,5R,9S)-1,4,4,8-tetramethyl-12-oxatricyclo[7.2.1.0^{2,5}]dodec-7-ene
(1R,2S,5R,8R,9R)-1,4,4,8-tetramethyl-12-oxatricyclo[6.3.1.0^{2,5}]dodecan-9-ol
(1R,2S,5R,8R,9S)-1,4,4,8-tetramethyl-12-oxatricyclo[6.3.1.0^{2,5}]dodecan-9-ol
[1R-(1α,2α,5β,8β,9α)]-4,4,8-trimethyl-tricyclo[6.3.1.0^{2,5}]dodecane-1,9-diol.

20. The method according to claim 19, wherein, in the aforementioned formula (I), R¹ is a formyl group or an acetyl group, and Z is a single bond, or
in the aforementioned formula (I), R¹ is a hydroxy group or a pyrrole group, and Z is a methylene group.

21. The method according to claim 19 or 20, wherein R² is an alkyl group having 1 - 6 carbon atoms.

22. The method according to any one of claims 19 to 21, wherein n is 0 or 1.

23. The method according to any one of claims 19 to 22, wherein the aforementioned compound represented by the formula (I) is at least one compound selected from the group consisting of furfural, 5-methylfurfural, 2-furylmethylketone, furfuryl alcohol, and 1-furfurylpyrrole.

24. The method according to any one of claims 19 to 23, wherein the aforementioned (A2) is oil or fat.

25. The method according to any one of claims 19 to 24, wherein the β-caryophyllene analogous compound is at least one compound selected from the group consisting of isocaryophyllene, β-pinene, sabinene, 4-allyl-2,6-dimethoxyphenol, eugenol, limonene, 4-vinylphenol, linalool, linalool oxide, p-cymene, farnesene, myrcene, ocimene, α-phellandrene, α-terpinene, γ-terpinene and terpinolene.

26. The method according to any one of claims 19 to 25, wherein a heating temperature of the aforementioned component (A) is 40 - 200°C, and a heating time thereof is 0.1 - 500 min, and
a heating temperature of the aforementioned component (B) is 40 - 200°C, and a heating time thereof is 0.1 - 500 min.

27. The method according to claim 19, wherein the at least one compound selected from compound group (C) is at least one compound selected from the group consisting of β-caryophyllene oxide, (1R,3Z,5R,9S)-4,11,11-trimethyl-8-methylenebicyclo[7.2.0]undec-3-en-5-ol, (1R,4R,5R,9S)-4,11,11-trimethyl-8-methylenebicyclo[7.2.0]undecane-4,5-diol, α-pinene oxide, limonene oxide, α-terpineol, clovanediol, clovanediol-3-monoacetate, clovanediol diacetate and clovanediol-3-monoisovalerate.

28. The method according to any one of claims 19 to 27, wherein the food is a food with an enhanced mouth-coating feel.

29. The method according to any one of claims 19 to 28, wherein the food is a food containing oil or fat.

30. A food comprising a heated substance of the following (A) and/or a heated substance of the following (B), or at least one compound selected from the following compound group (C):
(A) (A1) a compound represented by the formula (I): 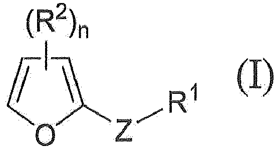 wherein
R¹ is an acyl group having 1 - 6 carbon atoms, a hydroxy group or a pyrrole group;
Z is a single bond or an alkylene group having 1 - 6 carbon atoms;
R² is a substituent; and
n is an integer of 0 - 3, and
(A2) at least one selected from the group consisting of an aliphatic aldehyde having 3 - 14 carbon atoms, an aromatic aldehyde having 7 - 12 carbon atoms, an aliphatic alcohol having 3 - 12 carbon atoms, and a substance that produces at least one of these compounds by heating
(B) at least one compound selected from the group consisting of
β-caryophyllene and a β-caryophyllene analogous compound [compound group (C)]
β-caryophyllene oxide
α-pinene oxide
limonene oxide
α-terpineol
a compound represented by the formula (II): 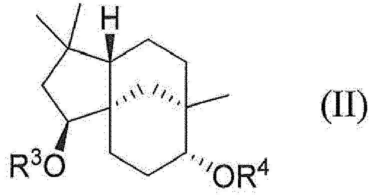
wherein R³ and R⁴ are each independently a hydrogen atom, an acyl group having 1 - 18 carbon atoms or an alkyl group having 1 - 6 carbon atoms
a compound represented by the formula (III): 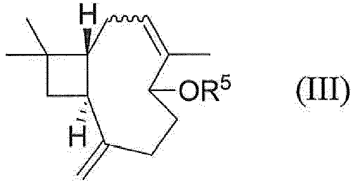
wherein R⁵ is a hydrogen atom, an acyl group having 1 - 6 carbon atoms or an alkyl group having 1 - 6 carbon atoms
a compound represented by the formula (IV): 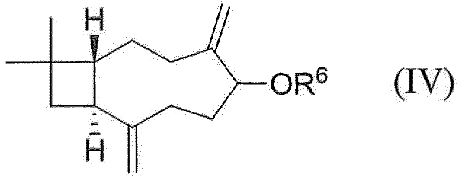
wherein R⁶ is a hydrogen atom, an acyl group having 1 - 6 carbon atoms, or an alkyl group having 1 - 6 carbon atoms
a compound represented by the formula (V): 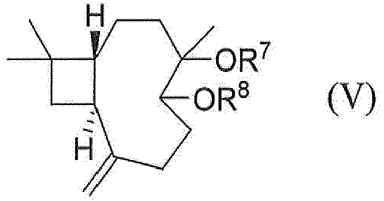
wherein R⁷ and R⁸ are each independently a hydrogen atom, an acyl group having 1 - 6 carbon atoms, or an alkyl group having 1 - 6 carbon atoms
(1S,6S,9R)-6,10,10-trimethyl-2-methylenebicyclo[7.2.0]undecan-5-one
(1S,6R,9R)-6,10,10-trimethyl-2-methylenebicyclo[7.2.0]undecan-5-one
(1R,4R,8S)-4,10,10-trimethyl-7-methylenebicyclo[6.2.0]decane-4-carboxaldehyde
(1R,4S,8S)-4,10,10-trimethyl-7-methylenebicyclo[6.2.0]decane-4-carboxaldehyde
(1S,2S,5R,9S)-1,4,4,8-tetramethyl-12-oxatricyclo[7.2.1.0^{2,5}]dodec-7-ene
(1R,2S,5R,8R,9R)-1,4,4,8-tetramethyl-12-oxatricyclo[6.3.1.0^{2,5}]dodecan-9-ol
(1R,2S,5R,8R,9S)-1,4,4,8-tetramethyl-12-oxatricyclo[6.3.1.0^{2,5}]dodecan-9-ol
[1R-(1α,2α,5β,8β,9α)]-4,4,8-trimethyl-tricyclo[6.3.1.0^{2,5}]dodecane-1,9-diol.

31. A method for producing a mouth-coating feel enhancer, comprising heating the following (A) and/or (B):
(A) (A1) a compound represented by the formula (I): 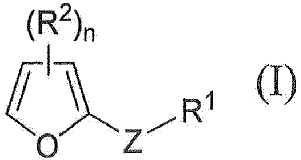 wherein
R¹ is an acyl group having 1 - 6 carbon atoms, a hydroxy group or a pyrrole group;
Z is a single bond or an alkylene group having 1 - 6 carbon atoms;
R² is a substituent; and
n is an integer of 0 - 3, and
(A2) at least one selected from the group consisting of an aliphatic aldehyde having 3 - 14 carbon atoms, an aromatic aldehyde having 7 - 12 carbon atoms, an aliphatic alcohol having 3 - 12 carbon atoms and a substance that produces at least one of these compounds by heating
(B) at least one compound selected from the group consisting of β-caryophyllene and a β-caryophyllene analogous compound.

32. The method according to claim 31, wherein, in the aforementioned formula (I), R¹ is a formyl group or an acetyl group, and Z is a single bond, or
in the aforementioned formula (I), R¹ is a hydroxy group or a pyrrole group, and Z is a methylene group.

33. The method according to claim 31 or 32, wherein R² is an alkyl group having 1 - 6 carbon atoms.

34. The method according to any one of claims 31 to 33, wherein n is 0 or 1.

35. The method according to any one of claims 31 to 34, wherein the aforementioned compound represented by the formula (I) is at least one compound selected from the group consisting of furfural, 5-methylfurfural, 2-furylmethylketone, furfuryl alcohol, and 1-furfurylpyrrole.

36. The method according to any one of claims 31 to 35, wherein the aforementioned (A2) is oil or fat.

37. The method according to any one of claims 31 to 36, wherein the β-caryophyllene analogous compound is at least one compound selected from the group consisting of isocaryophyllene, β-pinene, sabinene, 4-allyl-2,6-dimethoxyphenol, eugenol, limonene, 4-vinylphenol, linalool, linalool oxide, p-cymene, farnesene, myrcene, ocimene, α-phellandrene, α-terpinene, γ-terpinene and terpinolene.

38. The method according to any one of claims 31 to 37, wherein a heating temperature of the aforementioned component (A) is 40 - 200°C, and a heating time thereof is 0.1 - 500 min, and
a heating temperature of the aforementioned component (B) is 40 - 200°C, and a heating time thereof is 0.1 - 500 min.

39. The method according to claim 31, wherein the at least one compound selected from compound group (C) is at least one compound selected from the group consisting of β-caryophyllene oxide, (1R,3Z,5R,9S)-4,11,11-trimethyl-8-methylenebicyclo[7.2.0]undec-3-en-5-ol, (1R,4R,5R,9S)-4,11,11-trimethyl-8-methylenebicyclo[7.2.0]undecane-4,5-diol, α-pinene oxide, limonene oxide, α-terpineol, clovanediol, clovanediol-3-monoacetate, clovanediol diacetate and clovanediol-3-monoisovalerate.

40. The method according to any one of claims 31 to 39, wherein the mouth-coating feel enhancer is for a food containing oil or fat.

41. A coffee-roasting sensation enhancer comprising a heated substance of the following (A) and/or a heated substance of the following (B), or at least one compound selected from the following compound group (C):
(A) (A1) a compound represented by the formula (I): 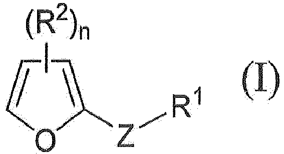 wherein
R¹ is an acyl group having 1 - 6 carbon atoms, a hydroxy group or a pyrrole group;
Z is a single bond or an alkylene group having 1 - 6 carbon atoms;
R² is a substituent; and
n is an integer of 0 - 3, and
(A2) at least one selected from the group consisting of an aliphatic aldehyde having 3 - 14 carbon atoms, an aromatic aldehyde having 7 - 12 carbon atoms, an aliphatic alcohol having 3 - 12 carbon atoms, and a substance that produces at least one of these compounds by heating
(B) at least one compound selected from the group consisting of
β-caryophyllene and a β-caryophyllene analogous compound [compound group (C)]
β-caryophyllene oxide
α-pinene oxide
limonene oxide
α-terpineol
a compound represented by the formula (II): 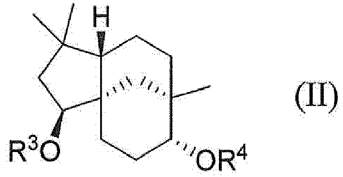
wherein R³ and R⁴ are each independently a hydrogen atom, an acyl group having 1 - 18 carbon atoms or an alkyl group having 1 - 6 carbon atoms
a compound represented by the formula (III): 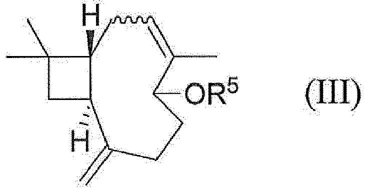
wherein R⁵ is a hydrogen atom, an acyl group having 1 - 6 carbon atoms or an alkyl group having 1 - 6 carbon atoms
a compound represented by the formula (IV): 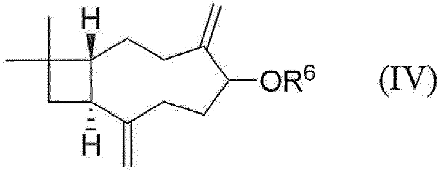
wherein R⁶ is a hydrogen atom, an acyl group having 1 - 6 carbon atoms, or an alkyl group having 1 - 6 carbon atoms
a compound represented by the formula (V): 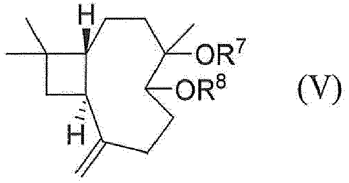
wherein R⁷ and R⁸ are each independently a hydrogen atom, an acyl group having 1 - 6 carbon atoms, or an alkyl group having 1 - 6 carbon atoms
(1S,6S,9R)-6,10,10-trimethyl-2-methylenebicyclo[7.2.0]undecan-5-one
(1S,6R,9R)-6,10,10-trimethyl-2-methylenebicyclo[7.2.0]undecan-5-one
(1R,4R,8S)-4,10,10-trimethyl-7-methylenebicyclo[6.2.0]decane-4-carboxaldehyde
(1R,4S,8S)-4,10,10-trimethyl-7-methylenebicyclo[6.2.0]decane-4-carboxaldehyde
(1S,2S,5R,9S)-1,4,4,8-tetramethyl-12-oxatricyclo[7.2.1.0^{2,5}]dodec-7-ene
(1R,2S,5R,8R,9R)-1,4,4,8-tetramethyl-12-oxatricyclo[6.3.1.0^{2,5}]dodecan-9-ol
(1R,2S,5R,8R,9S)-1,4,4,8-tetramethyl-12-oxatricyclo[6.3.1.0^{2,5}]dodecan-9-ol
[1R-(1α,2α,5β,8β,9α)]-4,4,8-trimethyl-tricyclo[6.3.1.0^{2,5}]dodecane-1,9-diol.

42. The coffee-roasting sensation enhancer according to claim 41, wherein, in the aforementioned formula (I), R¹ is a formyl group or an acetyl group, and Z is a single bond, or
in the aforementioned formula (I), R¹ is a hydroxy group or a pyrrole group, and Z is a methylene group.

43. The coffee-roasting sensation enhancer according to claim 41 or 42, wherein R² is an alkyl group having 1 - 6 carbon atoms.

44. The coffee-roasting sensation enhancer according to any one of claims 41 to 43, wherein n is 0 or 1.

45. The coffee-roasting sensation enhancer according to any one of claims 41 to 44, wherein the aforementioned compound represented by the formula (I) is at least one compound selected from the group consisting of furfural, 5-methylfurfural, 2-furylmethylketone, furfuryl alcohol, and 1-furfurylpyrrole.

46. The coffee-roasting sensation enhancer according to any one of claims 41 to 45, wherein the aforementioned (A2) is oil or fat.

47. The coffee-roasting sensation enhancer according to any one of claims 41 to 46, wherein the β-caryophyllene analogous compound is at least one compound selected from the group consisting of isocaryophyllene, β-pinene, sabinene, 4-allyl-2,6-dimethoxyphenol, eugenol, limonene, 4-vinylphenol, linalool, linalool oxide, p-cymene, farnesene, myrcene, ocimene, α-phellandrene, α-terpinene, γ-terpinene and terpinolene.

48. The coffee-roasting sensation enhancer according to claim 41, wherein the at least one compound selected from compound group (C) is at least one compound selected from the group consisting of β-caryophyllene oxide, (1R,3Z,5R,9S)-4,11,11-trimethyl-8-methylenebicyclo[7.2.0]undec-3-en-5-ol, (1R,4R,5R,9S)-4,11,11-trimethyl-8-methylenebicyclo[7.2.0]undecane-4,5-diol, α-pinene oxide, limonene oxide, α-terpineol, clovanediol, clovanediol-3-monoacetate, clovanediol diacetate and clovanediol-3-monoisovalerate.

49. A method for enhancing a coffee-roasting sensation, comprising adding a heated substance of the following (A) and/or a heated substance of the following (B), or at least one compound selected from the following compound group (C):
(A) (A1) a compound represented by the formula (I): 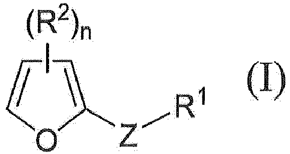 wherein
R¹ is an acyl group having 1 - 6 carbon atoms, a hydroxy group or a pyrrole group;
Z is a single bond or an alkylene group having 1 - 6 carbon atoms;
R² is a substituent; and
n is an integer of 0 - 3, and
(A2) at least one selected from the group consisting of an aliphatic aldehyde having 3 - 14 carbon atoms, an aromatic aldehyde having 7 - 12 carbon atoms, an aliphatic alcohol having 3 - 12 carbon atoms, and a substance that produces at least one of these compounds by heating
(B) at least one compound selected from the group consisting of
β-caryophyllene and a β-caryophyllene analogous compound [compound group (C)]
β-caryophyllene oxide
α-pinene oxide
limonene oxide
α-terpineol
a compound represented by the formula (II): 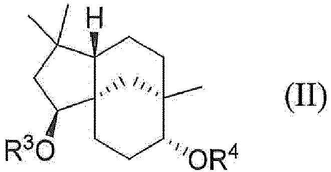
wherein R³ and R⁴ are each independently a hydrogen atom, an acyl group having 1 - 18 carbon atoms or an alkyl group having 1 - 6 carbon atoms
a compound represented by the formula (III): 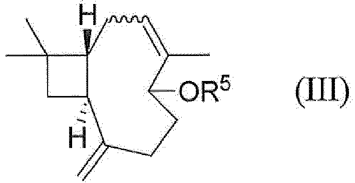
wherein R⁵ is a hydrogen atom, an acyl group having 1 - 6 carbon atoms or an alkyl group having 1 - 6 carbon atoms
a compound represented by the formula (IV): 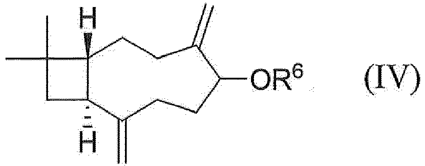
wherein R⁶ is a hydrogen atom, an acyl group having 1 - 6 carbon atoms, or an alkyl group having 1 - 6 carbon atoms
a compound represented by the formula (V): 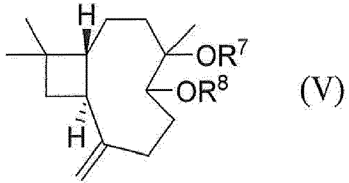
wherein R⁷ and R⁸ are each independently a hydrogen atom, an acyl group having 1 - 6 carbon atoms, or an alkyl group having 1 - 6 carbon atoms
(1S,6S,9R)-6,10,10-trimethyl-2-methylenebicyclo[7.2.0]undecan-5-one
(1S,6R,9R)-6,10,10-trimethyl-2-methylenebicyclo[7.2.0]undecan-5-one
(1R,4R,8S)-4,10,10-trimethyl-7-methylenebicyclo[6.2.0]decane-4-carboxaldehyde
(1R,4S,8S)-4,10,10-trimethyl-7-methylenebicyclo[6.2.0]decane-4-carboxaldehyde
(1S,2S,5R,9S)-1,4,4,8-tetramethyl-12-oxatricyclo[7.2.1.0^{2,5}]dodec-7-ene
(1R,2S,5R,8R,9R)-1,4,4,8-tetramethyl-12-oxatricyclo[6.3.1.0^{2,5}]dodecan-9-ol
(1R,2S,5R,8R,9S)-1,4,4,8-tetramethyl-12-oxatricyclo[6.3.1.0^{2,5}]dodecan-9-ol
[1R-(1α,2α,5β,8β,9α)]-4,4,8-trimethyl-tricyclo[6.3.1.0^{2,5}]dodecane-1,9-diol.

50. The method according to claim 49, wherein, in the aforementioned formula (I), R¹ is a formyl group or an acetyl group, and Z is a single bond, or
in the aforementioned formula (I), R¹ is a hydroxy group or a pyrrole group, and Z is a methylene group.

51. The method according to claim 49 or 50, wherein R² is an alkyl group having 1 - 6 carbon atoms.

52. The method according to any one of claims 49 to 51, wherein n is 0 or 1.

53. The method according to any one of claims 49 to 52, wherein the aforementioned compound represented by the formula (I) is at least one compound selected from the group consisting of furfural, 5-methylfurfural, 2-furylmethylketone, furfuryl alcohol, and 1-furfurylpyrrole.

54. The method according to any one of claims 49 to 53, wherein the aforementioned (A2) is oil or fat.

55. The method according to any one of claims 49 to 54, wherein the β-caryophyllene analogous compound is at least one compound selected from the group consisting of isocaryophyllene, β-pinene, sabinene, 4-allyl-2,6-dimethoxyphenol, eugenol, limonene, 4-vinylphenol, linalool, linalool oxide, p-cymene, farnesene, myrcene, ocimene, α-phellandrene, α-terpinene, γ-terpinene and terpinolene.

56. The method according to claim 49, wherein the at least one compound selected from compound group (C) is at least one compound selected from the group consisting of β-caryophyllene oxide, (1R,3Z,5R,9S)-4,11,11-trimethyl-8-methylenebicyclo[7.2.0]undec-3-en-5-ol, (1R,4R,5R,9S)-4,11,11-trimethyl-8-methylenebicyclo[7.2.0]undecane-4,5-diol, α-pinene oxide, limonene oxide, α-terpineol, clovanediol, clovanediol-3-monoacetate, clovanediol diacetate and clovanediol-3-monoisovalerate.
